(19) Europäisches Patentamt
European Patent Office
Office européen des brevets

(11) EP 4 322 416 A1

(12) EUROPEAN PATENT APPLICATION

(43) Date of publication:
14.02.2024 Bulletin 2024/07

(21) Application number: 23190939.1

(22) Date of filing: 10.08.2023

(51) International Patent Classification (IPC):
H04B 7/0408 (2017.01)   H04B 7/06 (2006.01)
H04B 7/08 (2006.01)

(52) Cooperative Patent Classification (CPC):
H04B 7/06968; H04B 7/0639; H04B 7/0665

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 10.08.2022 US 202263396692 P

(71) Applicant: Comcast Cable Communications LLC
Philadelphia, Pennsylvania 19103 (US)

(72) Inventors:
• CIRIK, Ali Cagatay
  Philadelphia, 19103 (US)
• ZHOU, Hua
  Philadelphia, 19103 (US)
• DINAN, Esmael Hejazi
  Philadelphia, 19103 (US)

(74) Representative: V.O.
P.O. Box 87930
2508 DH Den Haag (NL)

(54) **DEFAULT UNIFIED BEAM SELECTION**

(57) Downlink control information (DCI) may be used to schedule a downlink signal for a wireless device that may have a plurality of transmission configuration indicator (TCI) states activated. Each of the TCI states may be associated with a physical cell identifier (PCI) of a cell or a PCI different from the PCI of the cell. The downlink signal may be received using a TCI state determined from the plurality of activated TCI states, based on the quantity of TCI states associated with the PCI of the cell.

FIG. 21

**Description**

CROSS-REFERENCE TO RELATED APPLICATIONS

This application claims the benefit of U.S. Provisional Application No. 63/396,692 filed on August 10, 2022. The above-referenced application is hereby incorporated by reference in its entirety.

BACKGROUND

Multiple transmission configuration indicator (TCI) states are used with multiple transmission and reception points (TRPs). A wireless device receives, for a cell, a scheduled downlink signal based on a TCI of the multiple TCI states.

SUMMARY

The following summary presents a simplified summary of certain features. The summary is not an extensive overview and is not intended to identify key or critical elements.

A plurality of transmission configuration indicator (TCI) states may be activated for reception of a downlink signal (e.g., PDSCH transmission, aperiodic CSI-RS, etc.) by a wireless device. A TCI state may indicate beams and/or spatial relation parameters for uplink transmissions, and each TCI state may be associated with a physical cell identifier (PCI) of a cell or a PCI different from the PCI of the cell. Downlink control information (DCI) may be used to schedule reception of the downlink signal by the wireless device. The downlink signal may be received based on a determined TCI state of the plurality of TCI states. The TCI state may be determined from among the plurality of activated TCI states based on the number of activated TCI states that may be associated with the cell. The wireless device may receive the download signal based on a TCI state selected from the two TCI states, for example, if the number of TCI states associated with a PCI of the cell is two. The wireless device may receive the download signal based on the TCI state associated with the PCI of the cell, for example, if the number of TCI states associated with the PCI of the cell is one. The wireless device may receive the download signal based on a TCI state of a control resource set (coreset), for example, if the number of TCI states associated with the PCI of the cell is zero. Determining the TCI state to use for receiving the scheduled downlink signal before the downlink signal is sent may reduce latency.

These and other features and advantages are described in greater detail below.

BRIEF DESCRIPTION OF THE DRAWINGS

Examples of several of the various embodiments of the present disclosure are described herein with reference to the drawings.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein

FIG. 16A, FIG. 16B, FIG. 16C, and FIG. 16D show examples of uplink and downlink signal transmission.

FIG. 17 shows an example of MIMO configuration.

FIG. 18 and FIG. 19 show examples of transmission configuration indication (TCI) state activation.

FIG. 20 and FIG. 21 show examples of default beam selection.

FIG. 22 and FIG. 23 show example flow charts of default beam selection.

FIG. 24 shows an example of TCI state activation for coresets.

FIG. 25 shows an example of TCI state application to multiple cells.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems.

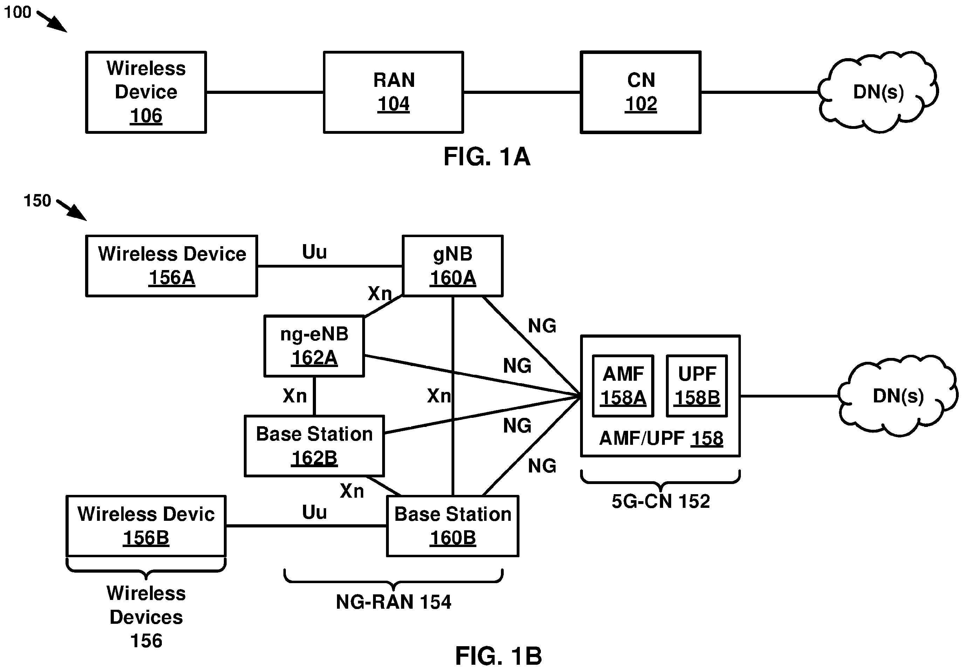

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/LTPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., LTE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

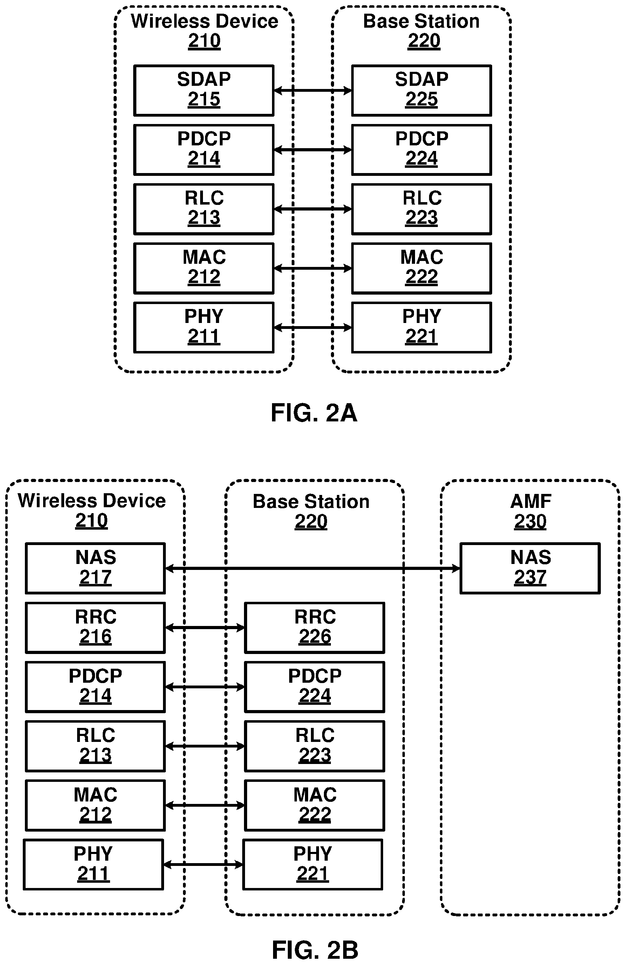

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

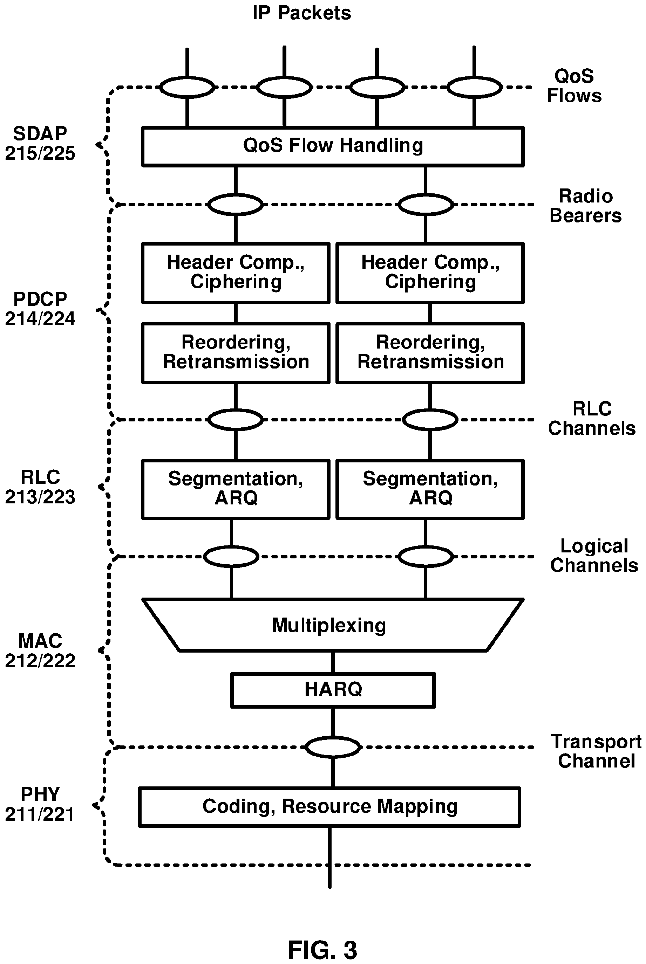

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/demapping between the one or more QoS flows 310 and one or more radio bearers 320 (e.g., data radio bearers). The mapping/de-mapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)).The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

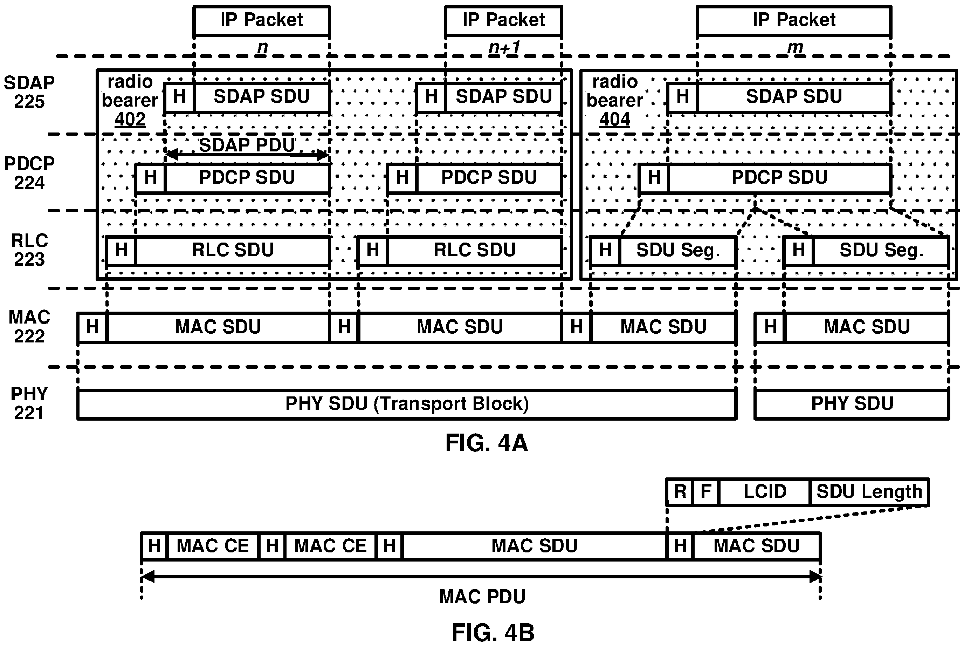

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

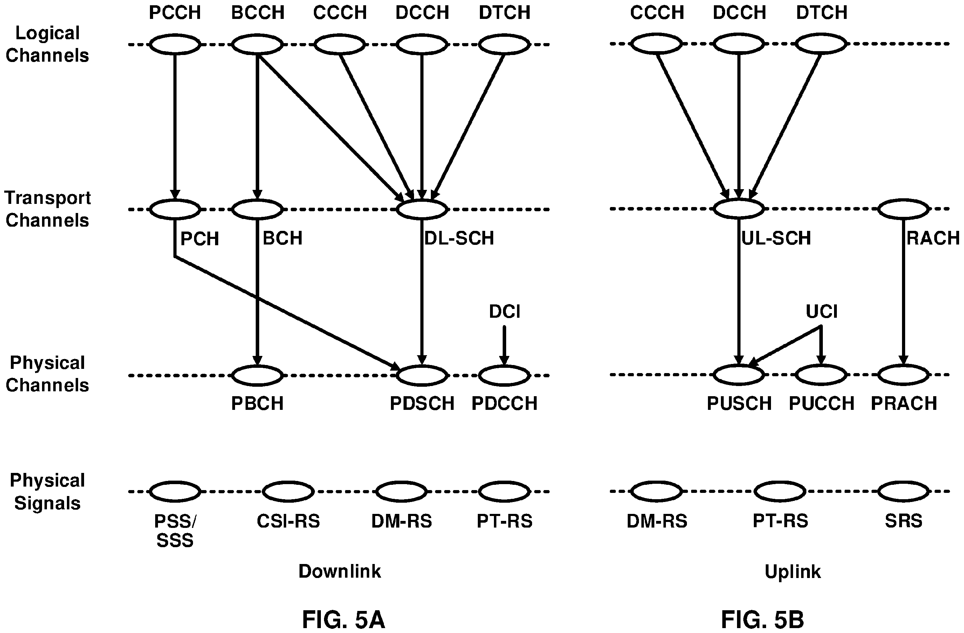

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless device).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

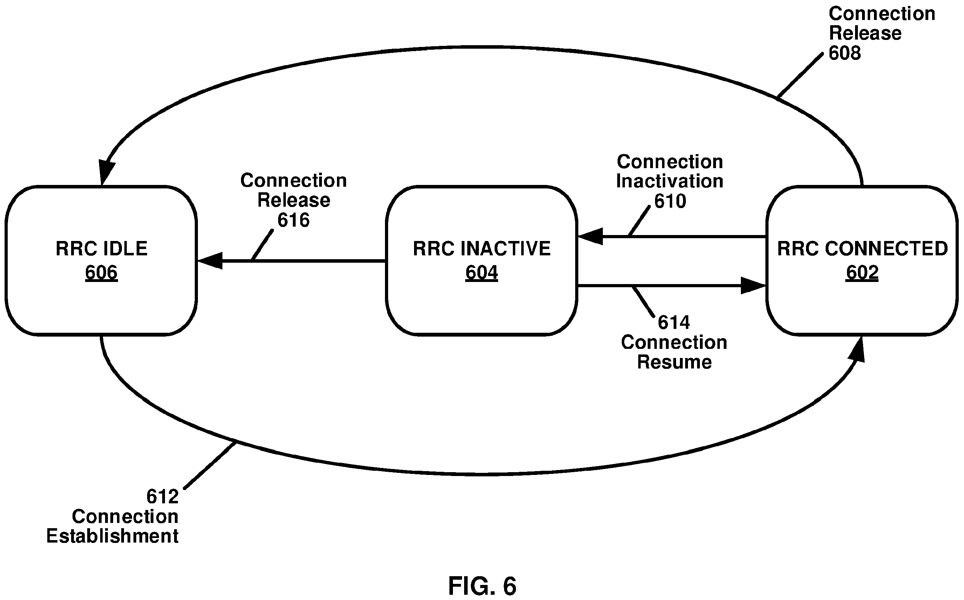

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

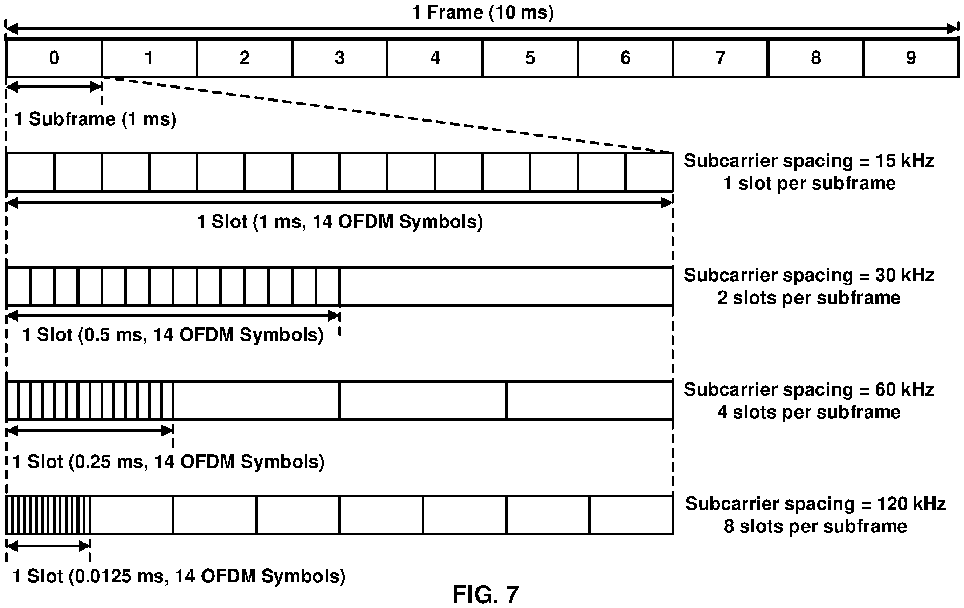

FIG. 7 shows an example configuration of a frame. The frame may comprise, for example, an NR radio frame into which OFDM symbols may be grouped. A frame (e.g., an NR radio frame) may be identified/indicated by a system frame number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed number/quantity of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

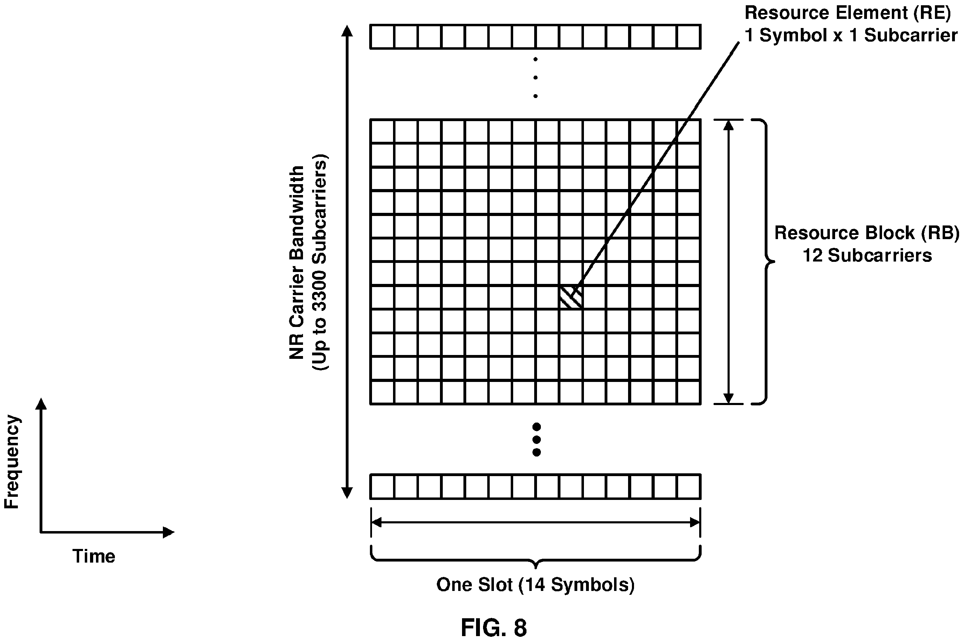

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or $275 \times 12 = 3300$ subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

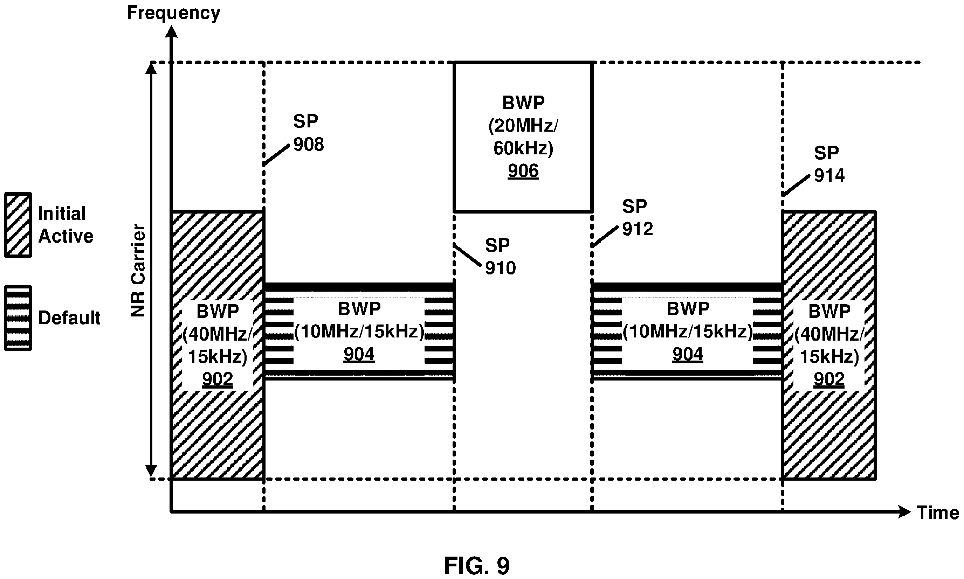

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response receiving DCI indicating BWP 904 as a new active BWP. The wireless device may switch at a switching point 914 from an active BWP 904 to the BWP 902, for example, after or in response receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a number/quantity of serving cells for the wireless device (e.g., one serving cell for a CC), for example, if CA is configured/used. The CCs may have multiple configurations in the frequency domain.

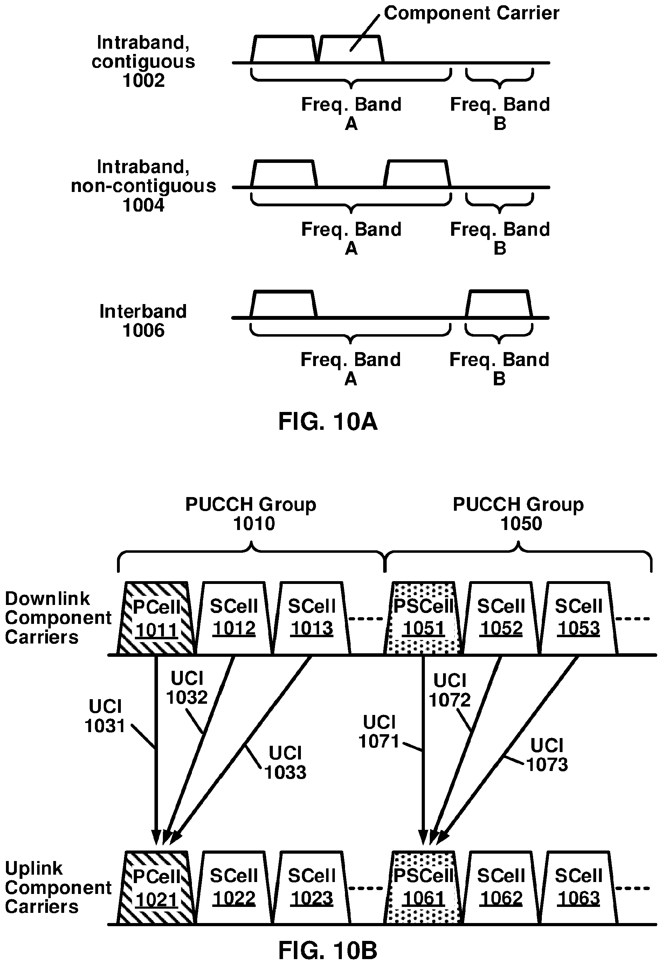

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

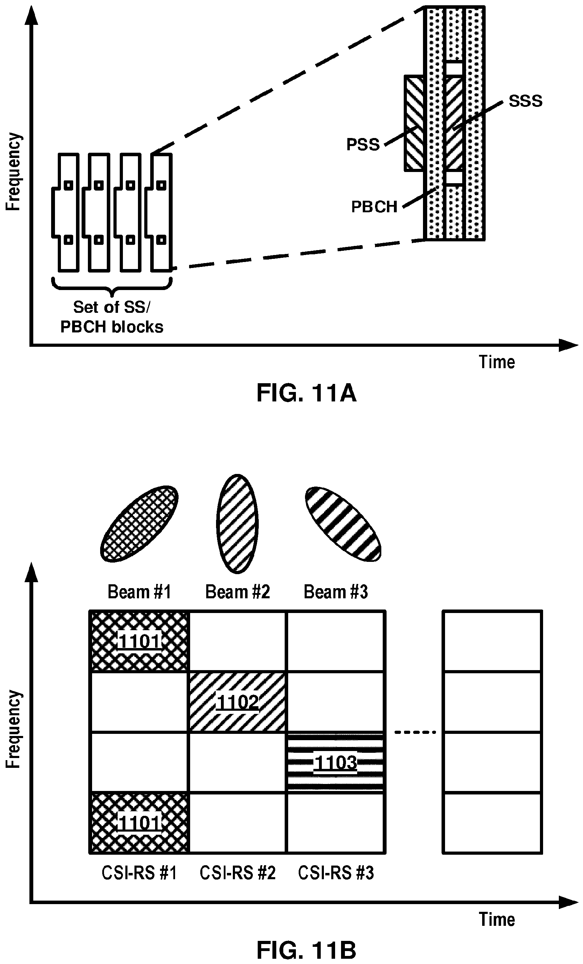

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB1. The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a number/quantity (e.g. a maximum number/quantity) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO). A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DMRSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a number/quantity (e.g., the maximum number/quantity) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DMRSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in a SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of: a CSI-RS resource configuration identity, a number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication (TCI) states comprising a number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

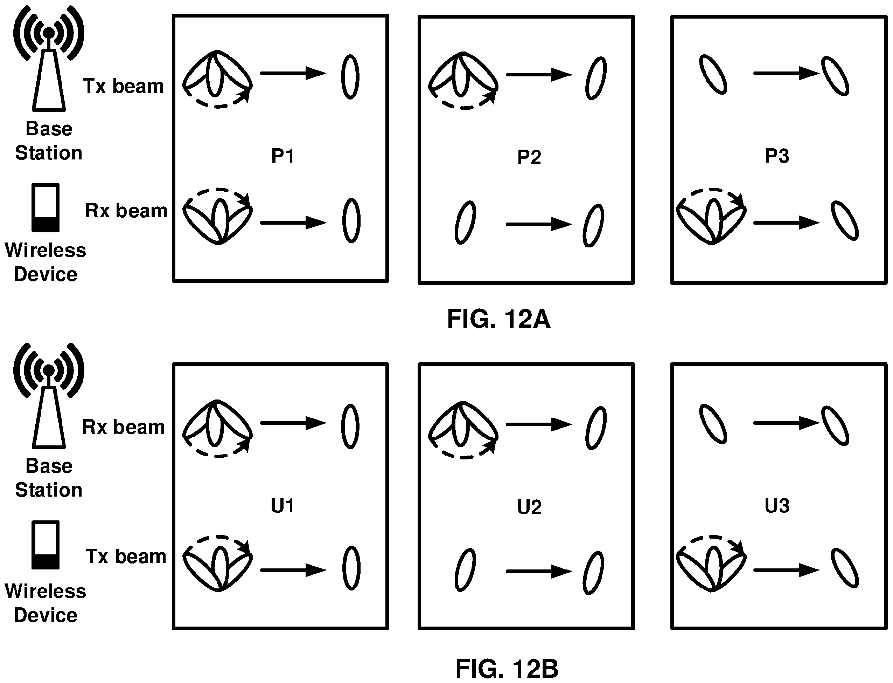

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

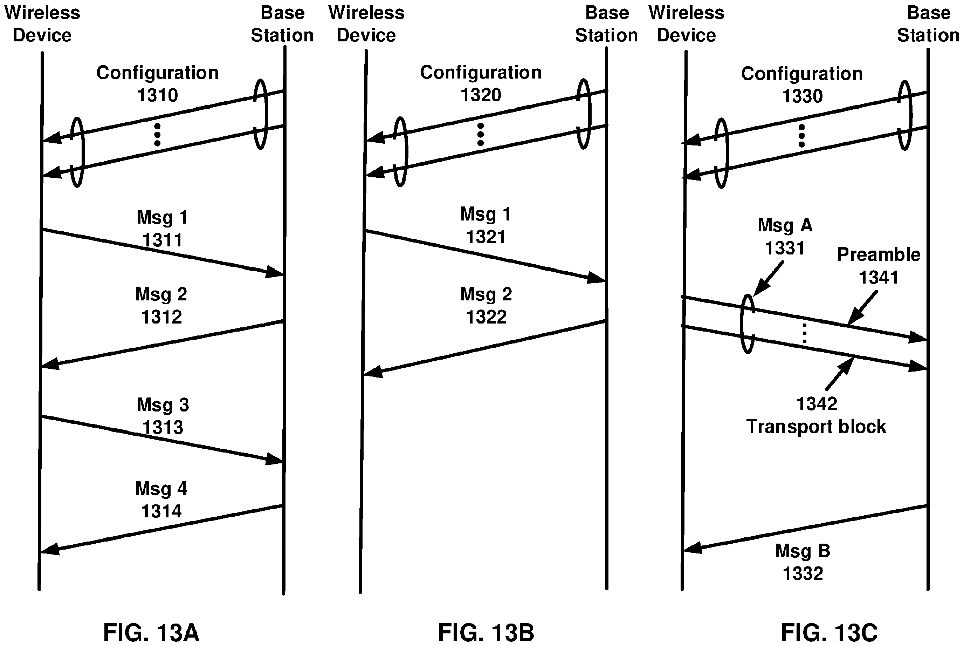

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION_COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$\text{RA-RNTI} = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \le s\_id < 14$), t_id may be an index of a first slot of the PRACH occasion in a system frame (e.g., $0 \le t\_id < 80$), f_id may be an index of the PRACH occasion in the frequency domain (e.g., $0 \le f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device.

The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a number of contiguous control channel elements (CCEs), for example, based on a payload size of the DCI and/or a coverage of the base station. The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

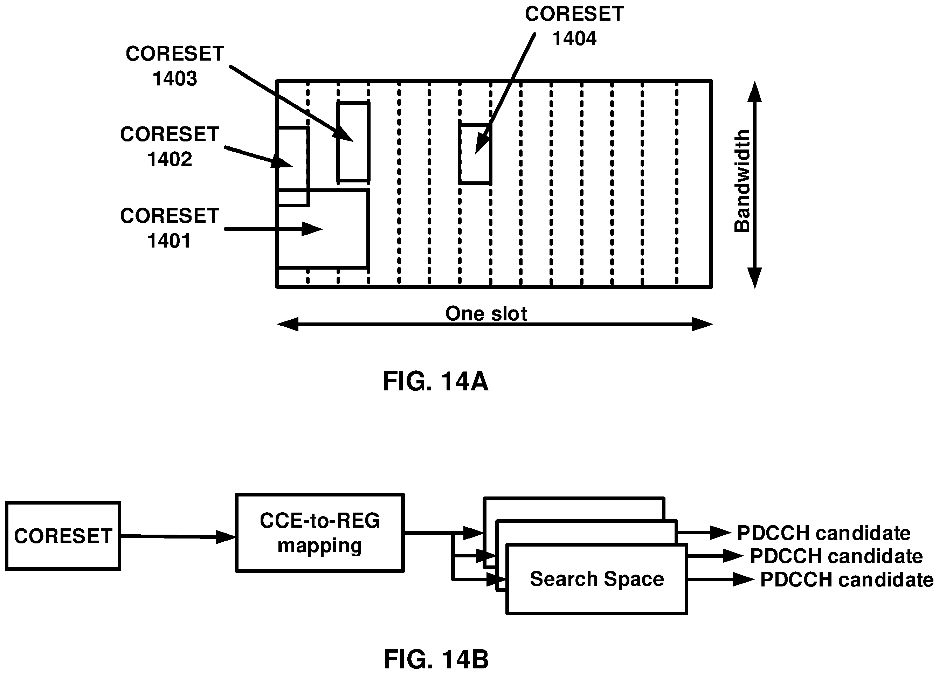

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the number of CCEs, the number of PDCCH candidates in common search spaces, and/or the number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a number of OFDM symbols (e.g., between four and fourteen OFDM symbols) and may comprise two or fewer bits. The wireless device may use PUCCH format 1, for example, if the transmission is over/via four or more symbols and the number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a number (e.g. a maximum number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

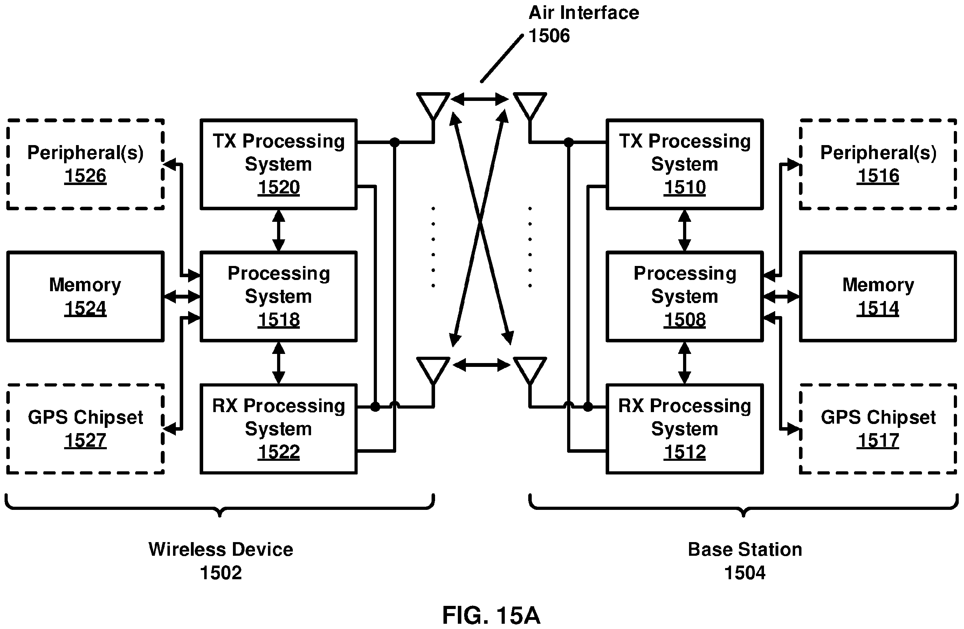

FIG. 15A shows an example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

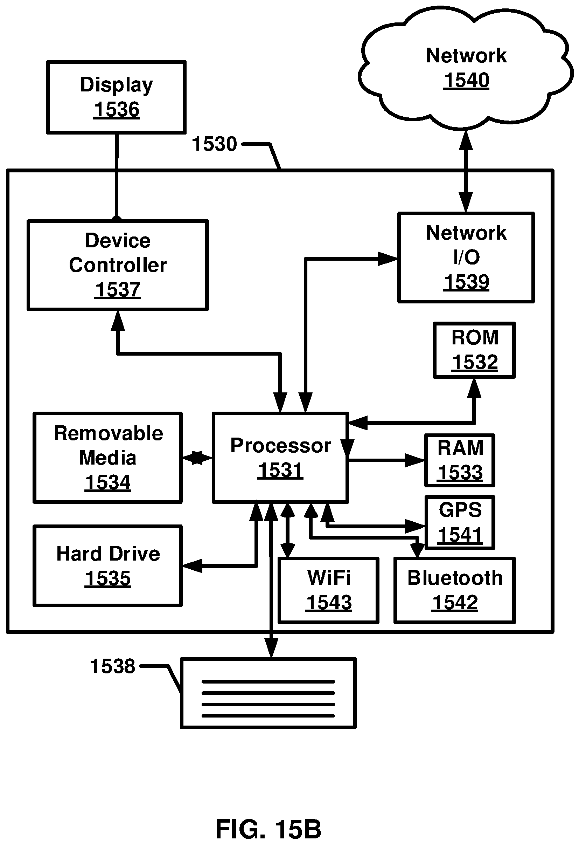

FIG. 15B shows example elements of a computing device that may be used to implement any of the various devices described herein, including, for example, the base station 160A, 160B, 162A, 162B, 220, and/or 1504, the wireless device 106, 156A, 156B, 210, and/or 1502, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

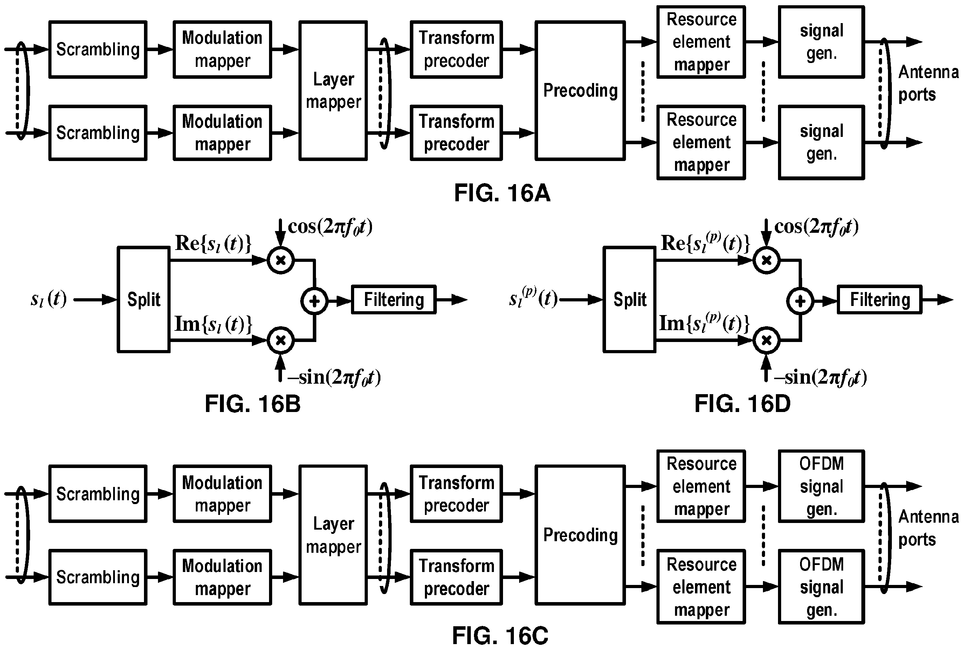

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, once it is started and continue running until it is stopped or until it expires. A timer may be started, for example, if it is not running or restarted if it is running. A timer may be associated with a value (e.g., the timer may be started or restarted from a value or may be started from zero and expire once it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

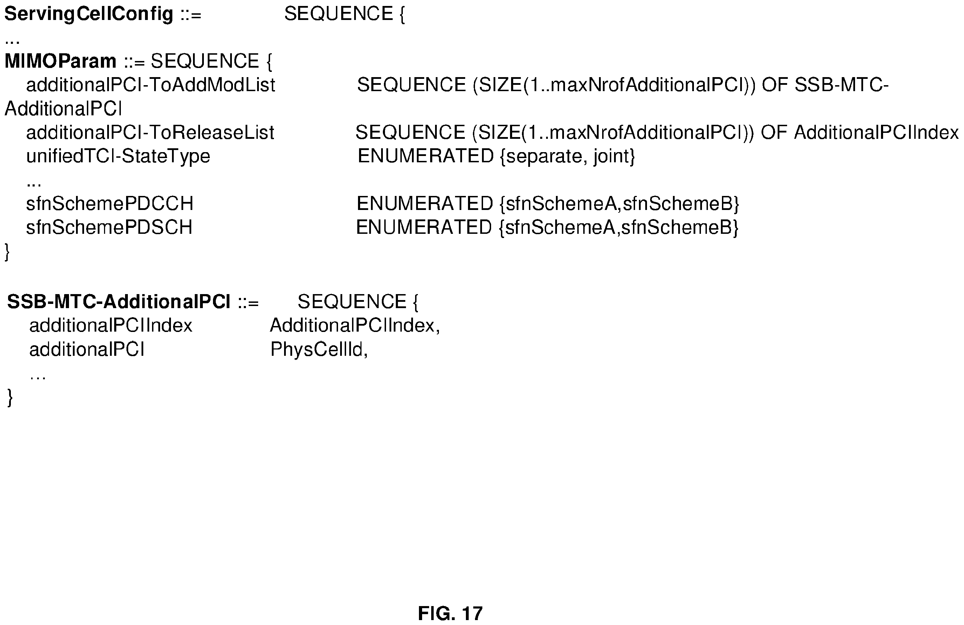

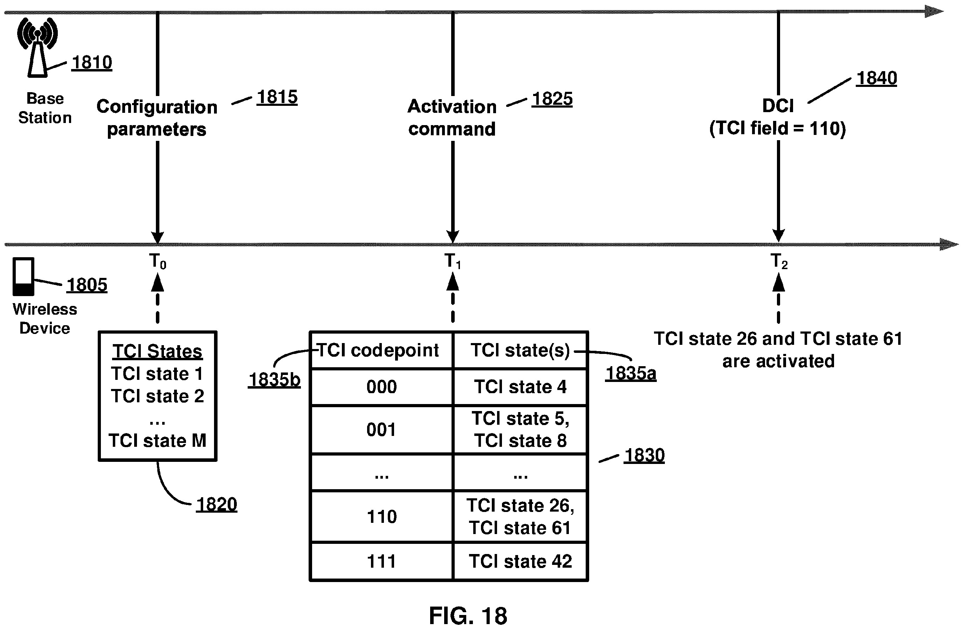

FIG. 17 shows an example of MIMO configuration parameters. The MIMO configuration parameters may be indicated (e.g., to a wireless device) via an RRC message. Additional details regarding the MIMO configuration parameters are further described herein at least with reference to FIGS. 18-20 and 21A-21D.

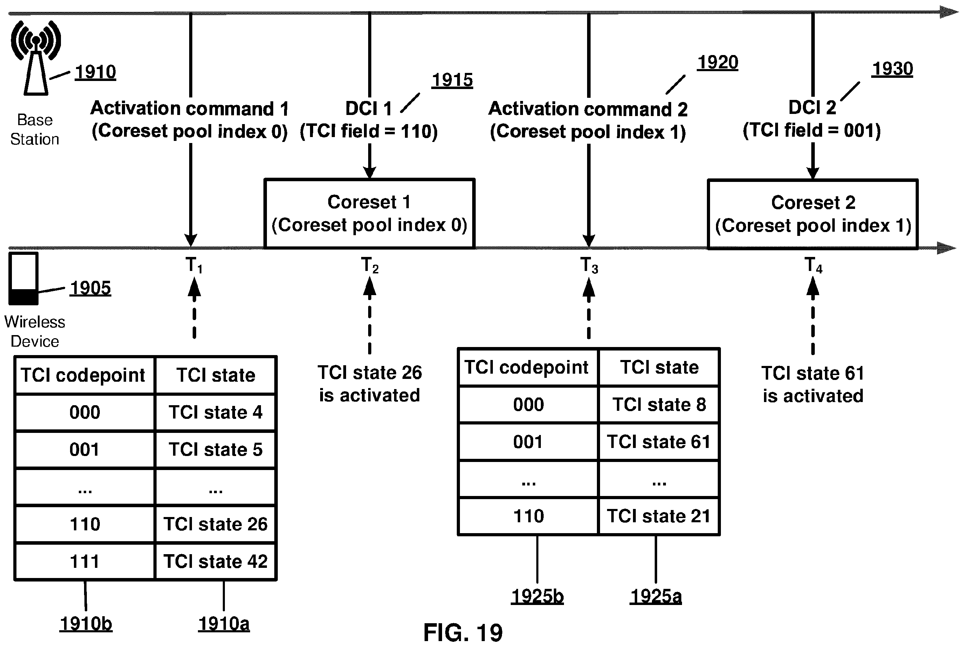

FIG. 18 and FIG. 19 show examples of TCI state activation. A wireless device (e.g., a wireless device 1801) may receive one or more messages (e.g., at time T0). The wireless device may receive the one or more messages from a computing device (e.g., a computing device 1802), which may comprise any computing device described herein (e.g., base station, relay node, wireless device, etc.). For example, the wireless device may receive the one or more messages from a base station. The wireless device may receive the one or more messages from a relay node. The wireless device may receive the one or more messages from another wireless device (e.g., TRP, vehicle, remote radio head, and the like). The one or more messages may comprise one or more configuration parameters (e.g., configuration parameters 1804 at time T0 as shown in FIG. 18). The one or more configuration parameters may comprise RRC configuration parameter(s). The one or more configuration parameters may comprise RRC reconfiguration parameter(s). The one or more configuration parameters may comprise the MIMO configuration parameter(s) as shown in FIG. 17.

One or more configuration parameters may be for one or more cells. The one or more cells may comprise a cell. The cell may be, for example, a serving cell. At least one configuration parameter of the one or more configuration parameters may be for the cell. The cell may be a primary cell (PCell). The cell may be a primary secondary cell (PSCell). The cell may be a secondary cell (SCell). The cell may be a secondary cell configured for/with a PUCCH (e.g., PUCCH SCell). The cell may be an unlicensed cell, for example, operating in an unlicensed band. The cell may be a licensed cell, for example, operating in a licensed band. The cell may operate in a first frequency range (FR1). The FR1 may comprise, for example, frequency bands below 6 GHz (or any other frequency or range of frequencies). The cell may operate in a second frequency range (FR2). The FR2 may comprise, for example, frequency bands from 24 GHz to 52.6 GHz (or any other frequency or range of frequencies). The cell may operate in a third frequency range (FR3). The FR3 may comprise, for example, frequency bands from 52.6 GHz to 71 GHz (or any other frequency or range of frequencies). The FR3 may comprise, for example, frequency bands starting from (or above) 52.6 GHz (or any other frequency).

A wireless device may perform uplink transmissions (e.g., PUSCH, PUCCH, SRS) via/of the cell in a first time and in a first frequency. The wireless device may perform downlink receptions (e.g., PDCCH, PDSCH) via/of the cell in a second time and in a second frequency. The cell may operate in a time-division duplex (TDD) mode. The first frequency and the second frequency may be the same, for example, in the TDD mode. The first time and the second time may be different, for example, in the TDD mode. The cell may operate in a frequency-division duplex (FDD) mode. The first frequency and the second frequency may be different, for example, in the FDD mode. The first time and the second time may be the same, for example, in the FDD mode. The cell may operate in a code-division multiplex (CDM) mode, for example, in which the first frequency and the second frequency may be the same or different, and or in which the first time and the second time may be the same or different. The cell may operate in a spatial-domain multiplex (SDM) mode, for example, in which the first frequency and the second frequency may be the same or different, and or in which the first time and the second time may be the same or different. The cell may operation in one or more of a TDD mode, an FDD mode, a CDM mode, and/or an SDM mode.

A wireless device may be an RRC mode of a plurality of RRC modes. For example, the wireless device may be in an RRC connected mode. The wireless device may be in an RRC idle mode. The wireless device may be in an RRC inactive mode.

A cell may comprise a plurality of BWPs. The plurality of BWPs may comprise one or more uplink BWPs comprising an uplink BWP (LTL BWP) of the cell. The plurality of BWPs may comprise one or more downlink BWPs comprising a downlink BWP of the cell.

A BWP of the plurality of BWPs may be in one of an active state and an inactive state. In the active state of a downlink BWP of the one or more downlink BWPs, the wireless device may monitor a downlink channel/signal (e.g., PDCCH, DCI, CSI-RS, PDSCH) on/for/via the downlink BWP. In the active state of a downlink BWP of the one or more downlink BWPs, the wireless device may receive a PDSCH on/via/for the downlink BWP. In the inactive state of a downlink BWP of the one or more downlink BWPs, the wireless device may not monitor a downlink channel/signal (e.g., PDCCH, DCI, CSI-RS, PDSCH) on/via/for the downlink BWP. In the inactive state of a downlink BWP of the one or more downlink BWPs, the wireless device may stop monitoring (or receiving) a downlink channel/signal (e.g., PDCCH, DCI, CSI-RS, PDSCH) on/via/for the downlink BWP. In the inactive state of a downlink BWP of the one or more downlink BWPs, the wireless device may not receive a PDSCH on/via/for the downlink BWP. In the inactive state of a downlink BWP of the one or more downlink BWPs, the wireless device may stop receiving a PDSCH on/via/for the downlink BWP.

In the active state of an uplink BWP of the one or more uplink BWPs, the wireless device may send (e.g., transmit) an uplink signal/channel (e.g., PUCCH, preamble, PUSCH, PRACH, SRS, etc.) on/via the uplink BWP. In the inactive state of an uplink BWP of the one or more uplink BWPs, the wireless device may not send (e.g., transmit) an uplink signal/channel (e.g., PUCCH, preamble, PUSCH, PRACH, SRS, etc.) on/via the uplink BWP.

A wireless device may activate the downlink BWP of the one or more downlink BWPs of the cell. Activating the downlink BWP may comprise setting (or switching to) the downlink BWP as an active downlink BWP of the cell. Activating the downlink BWP may comprise setting the downlink BWP in the active state. Activating the downlink BWP may comprise switching the downlink BWP from the inactive state to the active state.

A wireless device may activate the uplink BWP of the one or more uplink BWPs of the cell. Activating the uplink BWP may comprise that the wireless device sets (or switches to) the uplink BWP as an active uplink BWP of the cell. Activating the uplink BWP may comprise setting the uplink BWP in the active state. Activating the uplink BWP may comprise switching the uplink BWP from the inactive state to the active state.

One or more configuration parameters may be for the (active) downlink BWP of the cell. At least one configuration parameter of the one or more configuration parameters may be for the downlink BWP of the cell.

One or more configuration parameters may be for the (active) uplink BWP of the cell. At least one configuration parameter of the one or more configuration parameters may be for the uplink BWP of the cell. The one or more configuration parameters may indicate a subcarrier spacing (or a numerology) for the downlink BWP. The one or more configuration parameters may indicate a subcarrier spacing (or a numerology) for the uplink BWP.

A value of the subcarrier spacing (of the downlink BWP and/or the uplink BWP) may be/indicate, for example,

15 kHz ($\mu$ = 0), or any other frequency or range of frequencies. A value of the subcarrier spacing may be/indicate, for example, 30 kHz ($\mu$ = 1). A value of the subcarrier spacing may be/indicate, for example, 60 kHz ($\mu$ = 2). A value of the subcarrier spacing may be/indicate, for example, 120 kHz ($\mu$ = 3). A value of the subcarrier spacing may be/indicate, for example, 240 kHz ($\mu$ = 4). A value of the subcarrier spacing may be/indicate, for example, 480 kHz ($\mu$ = 5). A value of the subcarrier spacing may be/indicate, for example, 960 kHz ($\mu$ = 6). For example, 480 kHz may be valid/applicable in FR3. For example, 960 kHz may be valid/applicable in FR3. For example, 240 kHz may be valid/applicable in FR3. For example, 120 kHz may be valid/applicable in FR3. Any frequency or range of frequencies may be valid/applicable to any FR(n) (e.g., $\mu$ may be equal to any value).

One or more configuration parameters may indicate a plurality of control resource sets (CORESETS). The one or more configuration parameters may indicate the plurality of CORESETS for the (active) downlink BWP of the cell. The (active) downlink BWP may comprise the plurality of CORESETS.

One or more configuration parameters may indicate a plurality of CORESET indexes/identifiers/indicators (e.g., provided by a higher layer parameter ControlResourceSetId) for the plurality of CORESETS. Each CORESET of the plurality of CORESETS may be identified/indicated by a respective CORESET index of the plurality of CORESET indexes. A first CORESET of the plurality of CORESETS may be identified by a first CORESET index of the plurality of CORESET indexes. A second CORESET of the plurality of CORESETS may be identified by a second CORESET index of the plurality of CORESET indexes.

The one or more configuration parameters may indicate one or more CORESET pool indicators/indexes (e.g., provided by a higher layer parameter CoresetPoolIndex) for the plurality of CORESETs. Each CORESET of the plurality of CORESETs may comprise (or be configured/indicated by the one or more configuration parameters) by a respective CORESET pool index of the one or more CORESET pool indexes (e.g., 0, 1). The one or more configuration parameters may indicate, for each CORESET of the plurality of CORESETs, a respective CORESET pool index of the one or more CORESET pool indexes. The one or more configuration parameters may indicate, for a first CORESET of the plurality of CORESETs, a first CORESET pool index (e.g., CoresetPoolIndex = 0). The one or more configuration parameters may indicate, for a second CORESET of the plurality of CORESETs, a second CORESET pool index (e.g., Coreset-PoolIndex = 1). The one or more CORESET pool indexes may comprise the first CORESET pool index and the second CORESET pool index.

The one or more configuration parameters may not indicate, for a CORESET of the plurality of CORESETs, a CORESET pool index. For example, the higher layer parameter CoresetPoolIndex may be absent in configuration parameter(s) of the CORESET. The wireless device may determine a value (or a default value) of/for a CORESET pool index of the CORESET as the first CORESET pool index (e.g., CoresetPoolIndex = 0). The wireless device may determine the value (or the default value) of/for the CORESET pool index of the CORESET as the first CORESET pool index, for example, based on the one or more configuration parameters not indicating, for the CORESET, a CORESET pool index. The first CORESET pool index (CoresetPoolIndex = 0) may be the CORESET pool index of the CORESET, for example, based on the one or more configuration parameters not indicating, for the CORESET, a CORESET pool index.

A first CORESET pool (e.g., e.g., CORESET pool 0) may comprise one or more first CORESETs with a CORESET pool index that is equal to a first CORESET pool index (e.g., CoresetPoolIndex = 0). The one or more configuration parameters may indicate the first CORESET pool index for each CORESET of the one or more first CORESETs in the first CORESET pool. The plurality of CORESETs may comprise the one or more first CORESETs.

A second CORESET pool (e.g., CORESET pool 1) may comprise one or more second CORESETs with a CORESET pool index that is equal to a second CORESET pool index (e.g., CoresetPoolIndex = 1). The one or more configuration parameters may indicate the second CORESET pool index for each CORESET of the one or more second CORESETs in the second CORESET pool. The plurality of CORESETs may comprise the one or more second CORESETs.

The one or more configuration parameters may not indicate a CORESET pool index for a CORESET of the plurality of CORESETs. The wireless device may determine a default value for the CORESET pool index of the CORESET, for example, based on the one or more configuration parameters not indicating the CORESET pool index for the CORESET. The default value may be equal to zero (CoresetPoolIndex = 0). The default value may be equal to the first CORESET pool index (e.g., zero). The default value may be equal to any other value. The first CORESET pool may comprise the CORESET based on the one or more configuration parameters not indicating, for the CORESET, the CORESET pool index. The first CORESET pool may comprise the CORESET based on the default value of/for the CORESET pool index of the CORESET being equal to the first CORESET pool index.

A first CORESET pool index of a first CORESET and a second CORESET pool index of a second CORESET may be the same. For example, the one or more configuration parameters may indicate the same CORESET pool index for the first CORESET and the second CORESET. The plurality of CORESETs may comprise the first CORESET and the second CORESET. The one or more CORESET pool indexes may comprise the first CORESET pool index and the second CORESET pool index. The wireless device may group the first CORESET and the second CORESET in a same CORESET pool (e.g., CoresetPoolIndex = 0 or CoresetPoolIndex = 1), for example, based on the first CORESET pool index of the first CORESET and the second CORESET pool index of the second CORESET being the same. A first CORESET pool comprising the first CORESET and a second CORESET pool comprising the second CORESET may be the same, for example, based on the first CORESET pool index of the first CORESET and the second CORESET pool index of the second CORESET being the same.

A first CORESET pool index of a first CORESET and a second CORESET pool index of a second CORESET may be different. The plurality of CORESETs may comprise the first CORESET and the second CORESET. The one or more CORESET pool indexes may comprise the first CORESET pool index and the second CORESET pool index. The wireless device may group the first CORESET and the second CORESET in different CORESET pools, for example, based on the first CORESET pool index of the first CORESET and the second CORESET pool index of the second CORESET being different. The wireless device may group the first CORESET in a first CORESET pool (e.g., Coreset-PoolIndex = 0). The wireless device may group the second CORESET in a second CORESET pool (e.g., CoresetPoolIndex = 1) that is different from the first CORESET pool, for example, based on the first CORESET pool index and the second CORESET pool index being different. The first CORESET pool and the second CORESET pool may be different, for example, based on the first CORESET pool index of the first CORESET and the second CORESET pool index of the second CORESET being different.

The one or more configuration parameters may indicate at least two CORESET pool indexes (e.g., 0, 1, and/or any other value(s)) for a higher layer parameter CORESETPoolIndex. The one or more configuration parameters may comprise the higher layer parameter CORESETPoolIndex with (or set to) the at least two CORESET pool indexes. The at least two CORESET pool indexes may comprise a first CORESET pool index (e.g., 0) for/of one or more first CORESETs of the plurality of CORESETs. The at least two CORESET pool indexes may comprise a second CORESET pool index (e.g., 1), different from the first CORESET pool index, for/of one or more second CORESETs of the plurality of CORESETs. The one or more first CORESETs may comprise one or more third CORESETs, of the plurality of CORESETs, without a value for a higher layer parameter CORESETPoolIndex. The one or more configuration parameters may not comprise the higher layer parameter CORESETPoolIndex for the one or more third CORESETs.

The cell may comprise a plurality of TRPs. The plurality of TRPs may serve the cell (and/or may serve the wireless device in/via/of the cell). At least one TRP of the plurality of TRPs may serve the cell (and/or may serve the wireless device in/via/of the cell). The plurality of TRPs may comprise a first TRP and a second TRP.

The first TRP may send a downlink signal/transmission (e.g., PDSCH transmission, PDCCH transmission, DCI, etc.) via the first CORESET pool. Sending the downlink signal/transmission via the first CORESET pool may comprise that the first TRP transmits the downlink signal/transmission via a first CORESET with (e.g., configured with or associated with) the first CORESET pool index. The first TRP may not send a downlink signal/transmission (e.g., PDSCH transmission, PDCCH transmission, DCI transmission, etc.) via the second CORESET pool. Not sending the downlink signal/transmission via the second CORESET pool may comprise that the first TRP does not send the downlink signal/transmission via a second CORESET with (e.g., configured with or associated with) the second CORESET pool index.

The second TRP may send a downlink signal/transmission (e.g., PDSCH transmission, PDCCH transmission, DCI) via the second CORESET pool. Sending the downlink signal/transmission via the second CORESET pool may comprise that the second TRP sends the downlink signal/transmission via a second CORESET with (e.g., configured with or associated with) the second CORESET pool index. The second TRP may not send a downlink signal/transmission via the first CORESET pool. Not sending the downlink signal/transmission via the first CORESET pool may comprise that the second TRP does not send the downlink signal/transmission via a first CORESET with (e.g., configured with or associated with) the first CORESET pool index.

The one or more configuration parameters may indicate a plurality of uplink resources (e.g., PUCCH resources, SRS resources, and/or the like). The one or more configuration parameters may indicate the plurality of uplink resources for the (active) uplink BWP of the cell. The (active) uplink BWP may comprise the plurality of uplink resources. The (active) uplink BWP of an uplink carrier (e.g., NUL carrier, SUL carrier) of the cell may comprise the plurality of uplink resources.

The plurality of uplink resources may comprise/be, for example, a plurality of PUCCH resources. The plurality of uplink resources may comprise/be, for example, a plurality of SRS resources. The plurality of uplink resources may comprise/be, for example, a plurality of PUSCH resources.

The one or more configuration parameters may indicate one or more uplink resource groups/sets (e.g., PUCCH resource group(s), SRS resource set(s)). The one or more uplink resource groups/sets may comprise the plurality of uplink resources. Each uplink resource group/set of the one or more uplink resource groups/sets may comprise respective uplink resource(s) of the plurality of uplink resources. For example, a first uplink resource group/set of the one or more uplink resource groups/sets may comprise one or more first uplink resources of the plurality of uplink resources. A second uplink resource group/set of the one or more uplink resource groups/sets may comprise one or more second uplink resources of the plurality of uplink resources. The first uplink resource group/set and the second uplink resource group/set may or may not share/comprise a common/shared/same uplink resource of the plurality of uplink resources. A first uplink resource in (or belonging to) the first uplink resource group/set may or may not be in (or belong to) the second uplink resource group/set.

The one or more configuration parameters may indicate a plurality of uplink resource indexes/identifiers/indicators (e.g., provided by a higher layer parameter PUCCH-ResourceId, SRS-ResourceId) for the plurality of uplink resources. Each uplink resource of the plurality of uplink resources may be identified/indicated by a respective uplink resource index of the plurality of uplink resource indexes. A first uplink resource of the plurality of uplink resources may be identified by a first uplink resource index of the plurality of uplink resource indexes. A second uplink resource of the plurality of uplink resources may be identified by a second uplink resource index of the plurality of uplink resource indexes.

The one or more configuration parameters may indicate one or more uplink resource group/set indexes/identifiers/indicators (e.g., provided by a higher layer parameter PUCCH-ResourceGroupId, SRS-ResourceSetId) for the one or more uplink resource groups/sets. Each uplink resource group/set of the one or more uplink resource groups/sets may be identified/indicated by a respective uplink resource group/set index of the one or more uplink resource group/set indexes. A first uplink resource group/set of the one or more uplink resource groups/sets may be identified by a first uplink resource group/set index of the one or more uplink resource group/set indexes. A second uplink resource group/set of the one or more uplink resource groups/sets may be identified by a second uplink resource group/set index of the one or more uplink resource group/set indexes.

The one or more configuration parameters may indicate one or more CORESET pool indexes (e.g., provided by a higher layer parameter CoresetPoolIndex) for the plurality of uplink resources. Each uplink resource of the plurality of uplink resources may comprise (or be configured/indicated by the one or more configuration parameters) by a respective CORESET pool index of the one or more CORESET pool indexes (e.g., 0, 1, or any other value). The one or more configuration parameters may indicate, for each uplink resource of the plurality of uplink resources, a respective CORESET pool index of the one or more CORESET pool indexes. For example, the one or more configuration parameters may indicate, for a first uplink resource of the plurality of uplink resources, a first CORESET pool index (CoresetPoolIndex = 0). The one or more configuration parameters may indicate, for a second uplink resource of the plurality of uplink resources, a second CORESET pool index (CoresetPoolIndex = 1). The one or more CORESET pool indexes may comprise the first CORESET pool index and the second CORESET pool index.

The one or more configuration parameters may not indicate, for an uplink resource of the plurality of uplink resources, a CORESET pool index. For example, the higher layer parameter CoresetPoolIndex may be absent in configuration parameter(s) of the uplink resource. The wireless device may determine a value (or a default value) of/for a CORESET pool index of the uplink resource as the first CORESET pool index (CoresetPoolIndex = 0). The wireless device may determine the value (or the default value) of/for the CORESET pool index of the uplink resource as the first CORESET pool index, for example, based on the one or more configuration parameters not indicating, for the uplink resource, a CORESET pool index. The first CORESET pool index (CoresetPoolIndex = 0) may be the CORESET pool index of the uplink resource, for example, based on the one or more configuration parameters not indicating, for the uplink resource, a CORESET pool index.

The one or more configuration parameters may indicate at least two CORESET pool indexes (e.g., 0, 1, and/or the like) for a higher layer parameter CORESETPoolIndex. The one or more configuration parameters may comprise the higher layer parameter CORESETPoolIndex with (or set to) the at least two CORESET pool indexes. The at least two CORESET pool indexes may comprise a first CORESET pool index (e.g., 0) for/of one or more first uplink resources of the plurality of uplink resources. The at least two CORESET pool indexes may comprise a second CORESET pool index (e.g., 1), different from the first CORESET pool index, for/of one or more second uplink resources of the plurality of uplink resources. The one or more first uplink resources may comprise one or more third uplink resources, of the plurality of uplink resources, without a value for a higher layer parameter CORESETPoolIndex. The one or more configuration parameters may not comprise the higher layer parameter CORESETPoolIndex for the one or more third uplink resources.

The cell may comprise a plurality of TRPs. The plurality of TRPs may serve the cell (and/or may serve the wireless device in/via/of the cell). At least one TRP of the plurality of TRPs may serve the cell (and/or may serve the wireless device in/via/of the cell). The plurality of TRPs may comprise a first TRP and a second TRP.

The first TRP may receive an uplink signal/transmission (e.g., PUSCH transmission, PUCCH transmission, SRS, UCI, PRACH transmission) via a first uplink resource, of the plurality of uplink resources, with (e.g., configured with or associated with) the first CORESET pool index. The first TRP may or may not receive an uplink signal/transmission (e.g., PUSCH transmission, PUCCH transmission, SRS, UCI, PRACH transmission) via a second uplink resource, of the plurality of uplink resources, with (e.g., configured with or associated with) the second CORESET pool index.

The second TRP may receive an uplink signal/transmission (e.g., PUSCH transmission, PUCCH transmission, SRS, UCI, PRACH transmission) via a second uplink resource, of the plurality of uplink resources, with (e.g., configured with or associated with) the second CORESET pool index. The second TRP may or may not receive an uplink signal/transmission (e.g., PUSCH transmission, PUCCH transmission, SRS, UCI, PRACH transmission) via a first uplink resource, of the plurality of uplink resources, with (e.g., configured with or associated with) the first CORESET pool index.

The one or more configuration parameters may indicate one or more CORESET pool indexes (e.g., provided by a higher layer parameter CoresetPoolIndex) for the one or more uplink resource groups/sets. Each uplink resource group/set of one or more uplink resource groups/sets may comprise (or be configured/indicated by the one or more configuration parameters) by a respective CORESET pool index of the one or more CORESET pool indexes (e.g., 0, 1, and/or the like). The one or more configuration parameters may indicate, for each uplink resource group/set of the one or more uplink resource groups/sets, a respective CORESET pool index of the one or more CORESET pool indexes. For example, the one or more configuration parameters may indicate, for a first uplink resource group/set of the one or more uplink resource groups/sets, a first CORESET pool index (e.g., CoresetPoolIndex = 0). The one or more configuration parameters may indicate, for a second uplink resource group/set of the one or more uplink resource groups/sets, a second CORESET pool index (e.g., CoresetPoolIndex = 1). The one or more CORESET pool indexes may comprise the first CORESET pool index and the second CORESET pool index.

The one or more configuration parameters may not indicate, for an uplink resource group/set of the one or more uplink resource groups/sets, a CORESET pool index. The higher layer parameter CoresetPoolIndex may be absent in configuration parameter(s) of the uplink resource group/set. The wireless device may determine a value (or a default value) of/for a CORESET pool index of the uplink resource group/set as the first CORESET pool index (e.g., CoresetPoolIndex = 0). The wireless device may determine the value (or the default value) of/for the CORESET pool index of the uplink resource group/set as the first CORESET pool index, for example, based on the one or more configuration parameters not indicating, for the uplink resource group/set, a CORESET pool index. The first CORESET pool index (e.g., CoresetPoolIndex = 0) may be the CORESET pool index of the uplink resource group/set, for example, based on the one or more configuration parameters not indicating, for the uplink resource group/set, a CORESET pool index.

The one or more configuration parameters may indicate at least two CORESET pool indexes (e.g., 0, 1, and/or the like) for a higher layer parameter CORESETPoolIndex. The one or more configuration parameters may comprise the higher layer parameter CORESETPoolIndex with (or set to) the at least two CORESET pool indexes. The at least two CORESET pool indexes may comprise a first CORESET pool index (e.g., 0) for/of one or more first uplink resource groups/sets of the one or more uplink resource groups/sets. The at least two CORESET pool indexes may comprise a second CORESET pool index (e.g., 1), different from the first CORESET pool index, for/of one or more second uplink resource groups/sets of the one or more uplink resource groups/sets. The one or more first uplink resource groups/sets may comprise one or more third uplink resource groups/sets, of the one or more uplink resource groups/sets, without a value for a higher layer parameter CORESETPoolIndex. The one or more configuration parameters may not comprise the higher layer parameter CORESETPoolIndex for the one or more third uplink resource groups/sets.

The cell may comprise a plurality of TRPs. The plurality of TRPs may serve the cell (and/or may serve the wireless device in/via/of the cell). At least one TRP of the plurality of TRPs may serve the cell (and/or may serve the wireless device in/via/of the cell). The plurality of TRPs may comprise a first TRP and a second TRP.

The first TRP may receive an uplink signal/transmission (e.g., PUSCH transmission, PUCCH transmission, SRS, UCI, PRACH transmission) via an uplink resource of/in a first uplink resource group/set, of the one or more uplink resource groups/sets, with (e.g., configured with or associated with) the first CORESET pool index. The first TRP may or may not receive an uplink signal/transmission (e.g., PUSCH transmission, PUCCH transmission, SRS, UCI, PRACH transmission) via an uplink resource in/of a second uplink resource group/set, of the one or more uplink resource groups/sets, with (e.g., configured with or associated with) the second CORESET pool index.

The second TRP may receive an uplink signal/transmission (e.g., PUSCH transmission, PUCCH transmission, SRS, UCI, PRACH transmission) via an uplink resource in/of a second uplink resource group/set, of the one or more uplink resource groups/sets, with (e.g., configured with or associated with) the second CORESET pool index. The second TRP may or may not receive an uplink signal/transmission (e.g., PUSCH transmission, PUCCH transmission, SRS, UCI, PRACH transmission) via an uplink resource in/of a first uplink resource group/set, of the one or more uplink resource groups/sets, with (e.g., configured with or associated with) the first CORESET pool index.

The wireless device may send/transmit, via an uplink resource, an uplink signal/transmission (e.g., PUSCH/PUCCH/SRS transmission). The plurality of uplink resources may comprise the uplink resource. An uplink resource group/set of the one or more uplink resource groups/sets may comprise the uplink resource.

The wireless device may receive, via a CORESET of the plurality of CORESETs, DCI. The DCI may schedule/trigger/indicate transmission of the uplink signal/transmission. The DCI may schedule/trigger/indicate transmission of the uplink signal/transmission via the uplink resource. The DCI may indicate the uplink resource. The DCI may comprise a field indicating the uplink resource.

The uplink signal/transmission may be a PUSCH transmission (e.g., transport block). The uplink resource may be a PUSCH resource. The DCI may schedule transmission of the PUSCH transmission.

The uplink signal/transmission may be a PUCCH transmission (e.g., HARQ-ACK information feedback). The uplink resource may be a PUCCH resource. The DCI may schedule reception of a transport block (or a PDSCH reception). The uplink signal/transmission may be a HARQ-ACK information feedback of the transport block.

The uplink signal/transmission may be an SRS. The uplink resource may be an SRS resource. The DCI may schedule transmission of the SRS. The SRS may be, for example, an aperiodic SRS.

The CORESET that the wireless device receives the DCI may be associated with a CORESET pool index. The one or more CORESET pool indexes may comprise the CORESET pool index. The one or more configuration parameters may indicate, for the CORESET, the CORESET pool index. The one or more configuration parameters may not indicate, for the CORESET, the CORESET pool index (e.g., CoresetPoolIndex = 0 or CoresetPoolIndex = 1). A value (or a default value) of the CORESET pool index of the CORESET may be equal to the first CORESET pool index (e.g., Coreset-PoolIndex = 0), for example, based on the one or more configuration parameters not indicating, for the CORESET, a CORESET pool index.

The uplink resource may be associated with the CORESET pool index. The uplink resource may be associated with the CORESET pool index, for example, based on receiving, via the CORESET associated with the CORESET pool index, the DCI scheduling/triggering/indicating transmission of the uplink signal/transmission via the uplink resource.

The uplink resource group/set comprising the uplink resource may be associated with the CORESET pool index. The uplink resource group/set may be associated with the CORESET pool index, for example, based on receiving, via the CORESET associated with the CORESET pool index, the DCI scheduling/triggering/indicating transmission of the uplink signal/transmission via the uplink resource in (that belongs to) the uplink resource group/set. The uplink resource group/set may comprise one or more uplink resources that comprise the uplink resource. The one or more uplink resources may be associated with the CORESET pool index, for example, based on the uplink resource group/set, comprising the one or more uplink resources, being associated with the CORESET pool index. Each uplink resource of the one or more uplink resources may be associated with the CORESET pool index, for example, based on the uplink resource group/set being associated with the CORESET pool index.

The uplink signal/transmission may be associated with the CORESET pool index. The uplink signal/transmission may be associated with the CORESET pool index, for example, based on receiving, via the CORESET associated with the CORESET pool index, the DCI scheduling/triggering/indicating transmission of the uplink signal/transmission.

The one or more configuration parameters may indicate a plurality of TCI states (e.g., indicated by higher layer parameter DL-orJoint-TCIState). The one or more configuration parameters may comprise one or more PDSCH configuration parameters, for example, indicating the plurality of TCI states. For example, in FIG. 18, the plurality of TCI states may comprise TCI state 1, TCI state 2, ..., and TCI state M. The one or more configuration parameters may indicate the plurality of TCI states that indicate a unified TCI state for the cell.

The one or more configuration parameters may comprise the one or more PDSCH configuration parameters, for example, for the downlink BWP of the cell. The one or more configuration parameters indicate the plurality of TCI states for the downlink BWP of the cell.

The one or more configuration parameters may comprise the one or more PDSCH configuration parameters, for example, for a second downlink BWP of a second cell. The one or more configuration parameters may indicate the plurality of TCI states for the second downlink BWP of the second cell. The one or more cells may comprise the second cell. The one or more configuration parameters may comprise, for the downlink BWP of the cell, a reference unified TCI state list parameter (e.g., higher layer parameter unifiedTCI-StateRef) indicating the second downlink BWP of the second cell. The reference unified TCI state list parameter may comprise a BWP indicator/index (e.g., higher layer parameter BWP-Id) identifying/indicating the second downlink BWP. The reference unified TCI state list parameter may comprise a cell index (e.g., higher layer parameter ServCellIndex) identifying/indicating the second cell.

The one or more configuration parameters may comprise a unified TCI state type parameter (e.g., higher layer parameter unifiedtci-StateType as shown in FIG. 17). The one or more configuration parameters may comprise one or more serving cell parameters (e.g., higher layer parameter ServingCellConfig) comprising the unified TCI state type parameter. The unified TCI state type parameter may indicate the unified TCI state type of the cell.

For example, the unified TCI state type parameter may be set to a first value/configuration (e.g., indicating "joint"). The wireless device may use/apply the plurality of TCI states (e.g., provided/indicated by parameter dl-orJoint-TCI-ToAddModList) for both uplink transmissions (e.g., PUSCH/PUCCH/SRS transmissions) of the cell and downlink receptions (e.g., PDCCH/PDSCH/CSI-RS receptions) of the cell, for example, based on the one or more configuration parameters comprising the unified TCI state type parameter being set to the first value/configuration (e.g., "joint").

For example, unified TCI state type parameter may be set to a second value/configuration (e.g., indicating "separate"). The wireless device may use/apply the plurality of TCI states (e.g., provided/indicated by a higher layer parameter dl-orJoint-TCI-ToAddModList) for downlink receptions (e.g., PDCCH/PDSCH/CSI-RS receptions) of the cell, for example, based on the one or more configuration parameters comprising the unified TCI state type parameter being set to the second value/configuration (e.g., "separate"). The wireless device may not use/apply the plurality of TCI states for uplink transmissions (e.g., PUSCH/PUCCH/SRS transmissions) of the cell, for example, based on the one or more configuration parameters comprising the unified TCI state type parameter being set to the second value/configuration (e.g., "separate").

The one or more configuration parameters may indicate a second plurality of TCI states (e.g., UL-TCIState, provided/indicated by a higher layer parameter ul-TCI-ToAddModList). The one or more configuration parameters may comprise one or more uplink BWP configuration parameters, for example, indicating the second plurality of TCI states.

For example, with reference to FIG. 18, the second plurality of TCI states may be TCI state 1, TCI state 2,..., and TCI state M.

The one or more configuration parameters may comprise the one or more uplink BWP configuration parameters, for example, for the uplink BWP of the cell. The one or more configuration parameters may indicate the second plurality of TCI states for the uplink BWP of the cell.

The one or more configuration parameters may comprise the one or more uplink BWP configuration parameters, for example, for a second uplink BWP of a second cell. The one or more configuration parameters may indicate the second plurality of TCI states for the second uplink BWP of the second cell. The one or more cells may comprise the second cell. The one or more configuration parameters may comprise, for the uplink BWP of the cell, a reference unified TCI state list parameter (e.g., higher layer parameter unifiedtci-StateType) indicating the second uplink BWP of the second cell. The reference unified TCI state list parameter may comprise a BWP index (e.g., higher layer parameter BWP-Id) identifying/indicating the second uplink BWP. The reference unified TCI state list parameter may comprise a cell index (e.g., higher layer parameter ServCellIndex) identifying/indicating the second cell.

The wireless device may use/apply the second plurality of TCI states for uplink transmissions (e.g., PUSCH/PUCCH/SRS transmissions) of the cell, for example, based on the one or more configuration parameters comprising the unified TCI state type parameter set to the second value/configuration (e.g., "separate"). The wireless device may not use/apply the second plurality of TCI states for downlink receptions (e.g., PDCCH/PDSCH/CSI-RS receptions) of the cell, for example, based on the one or more configuration parameters comprising the unified TCI state type parameter being set to the second value/configuration (e.g., "separate").

The wireless device may use, for downlink receptions via the downlink BWP of the cell, the plurality of TCI states, for example based on the one or more configuration parameters indicating the plurality of TCI states for the downlink BWP of the cell. The wireless device may use, for uplink transmissions via the uplink BWP of the cell, the plurality of TCI states, for example based on the one or more configuration parameters indicating the plurality of TCI states for the downlink BWP of the cell.

The wireless device may use, for downlink receptions via the downlink BWP of the cell, the plurality of TCI states of the second downlink BWP of the second cell, for example, based on the reference unified TCI state list parameter indicating, for the downlink BWP of the cell, the second downlink BWP of the second cell. The wireless device may use, for uplink transmissions via the uplink BWP of the cell, the plurality of TCI states of the second downlink BWP of the second cell, for example, based on the reference unified TCI state list parameter indicating, for the downlink BWP of the cell, the second downlink BWP of the second cell.

The wireless device may use, for uplink transmissions via the uplink BWP of the cell, the second plurality of TCI states, for example, based on the one or more configuration parameters indicating the second plurality of TCI states for the uplink BWP of the cell. The wireless device may use, for uplink transmissions via the uplink BWP of the cell, the second plurality of TCI states of the second uplink BWP of the second cell, for example, based on the reference unified TCI state list parameter indicating, for the uplink BWP of the cell, the second uplink BWP of the second cell.

The one or more configuration parameters may indicate, for the cell, a PCI. The one or more configuration parameters may indicate, for the one or more cells, one or more PCIs. The one or more PCIs may comprise the PCI of the cell. The one or more configuration parameters may comprise a higher layer (or RRC) parameter physCellId indicating the one or more PCIs for the one or more cells. The one or more configuration parameters may indicate, for each cell of the one or more cells, a respective PCI of the one or more PCIs. The one or more configuration parameters may comprise the higher layer (or RRC) parameter physCellId indicating a respective PCI of the one or more PCIs for each cell of the one or more cells. For example, the one or more configuration parameters may indicate, for a first cell of the one or more cells, a first PCI of the one or more PCIs. The first PCI may indicate/identify a physical cell identity of the first cell. The one or more configuration parameters may indicate, for a second cell of the one or more cells, a second PCI of the one or more PCIs. The second PCI may indicate/identify a physical cell identity of the second cell.

The one or more configuration parameters may indicate a list of PCI sets (e.g., indicated by an RRC parameter additionalPCI-ToAddModList as shown in FIG. 17). The one or more configuration parameters may comprise one or more serving cell parameters (e.g., higher layer parameter ServingCellConfig as shown in FIG. 17) indicating the list of PCI sets. The one or more serving cell parameters may comprise MIMO parameters (e.g., higher layer parameter MIMOParam as shown in FIG. 17) comprising/indicating the list of PCI sets. The list of PCI sets may comprise at least one PCI set (e.g., provided/indicated by a higher layer parameter SSB-MTC-AdditionalPCI as shown in FIG. 17).

The list of PCI sets (or the at least one PCI set) may comprise/indicate at least one PCI (e.g., higher layer parameters additionalPCI and/or PhysCellId as shown in FIG. 17) of the one or more PCIs. Each PCI set (e.g., indicated by higher layer parameter SSB-MTC-AdditionalPCI) of the list of PCI sets may comprise/indicate a respective PCI of the at least one PCI. The one or more configuration parameters may indicate, for each PCI set of the list of PCI sets, a respective PCI of the at least one PCI. The at least one PCI may not comprise the PCI of the cell. Each PCI of the at least one PCI may be different from the PCI of the cell. The one or more PCIs may comprise the at least one PCI and the PCI of the cell. The at least one PCI may indicate/identify at least one cell of the one or more cells. Each PCI of the at least one PCI may indicate/identify a respective cell of the at least one cell. For example, a first PCI set of the list of PCI sets may comprise a first PCI of the at least one PCI. The first PCI may indicate/identify a first cell of the at least one cell. A second PCI set of the list of PCI sets may comprise a second PCI of the at least one PCI. The second PCI may indicate/identify a second cell of the at least one cell. The at least one cell may not comprise the cell. Each cell of the at least one cell may be different from the cell. The one or more cells may comprise the at least one cell and the cell.

The at least one cell may be/comprise at least one non-serving cell. The at least one cell may be/comprise at least one neighboring cell. The at least one cell may be/comprise at least one candidate/assisting cell.

A maximum size/length (e.g., indicated by higher layer parameter maxNrofAdditionalPCI) of the list of PCI sets may be equal to a value (e.g., 7, or any other value). A maximum quantity of PCI sets in the list of PCI sets may be equal to a value (e.g., 7, or any other value).

The list of PCI sets (or the at least one PCI set) may comprise/indicate at least one additional PCI index (e.g., indicated by higher layer parameter additionalPCIIndex as shown in FIG. 17). Each PCI set (e.g., indicated by higher layer parameter SSB-MTC-AdditionalPCI) of the list of PCI sets may comprise/indicate a respective additional PCI index of the at least one additional PCI index. The one or more configuration parameters may indicate the at least one additional PCI index for the list of PCI sets. The one or more configuration parameters may indicate, for each PCI set of the list of PCI sets, a respective additional PCI index of the at least one additional PCI index. Each PCI set of the list of PCI sets may be identified/indicated by a respective additional PCI index of the at least one additional PCI index. For example, a first PCI set of the list of PCI sets may be identified/indicated by a first additional PCI index of the at least one additional PCI index. A second PCI set of the list of PCI sets may be identified/indicated by a second additional PCI index of the at least one additional PCI index.

The one or more configuration parameters may indicate the list of PCI sets, for example, for inter-cell beam management. The one or more configuration parameters may indicate the list of PCI sets, for example, for inter-cell multi-TRP operation/mode.

For example, the list of PCI sets (e.g., as indicated by the higher layer parameter SSB-MTC-AdditionalPCI) may comprise [{1, PCI 5}, {2, PCI 2}, {3, PCI 4}, {4, PCI 10}, {5, PCI 21}]. The PCI of the cell may be different from PCI 5, PCI 2, PCI 4, PCI 10, and PCI 21. {1, PCI 5) may be a first PCI set of the list of PCI sets. 1 may be a first additional PCI index of the first PCI set. PCI 5 may be a first PCI indicating/identifying/of a first cell. {2, PCI 2) may be a second PCI set of the list of PCI sets. 2 may be a second additional PCI index of the second PCI set. PCI 2 may be a second PCI indicating/identifying/of a second cell. {3, PCI 4) may be a third PCI set of the list of PCI sets. 3 may be a third additional PCI index of the third PCI set. PCI 4 may be a third PCI indicating/identifying/of a third cell. {4, PCI 10) may be a fourth PCI set of the list of PCI sets. 4 may be a fourth additional PCI index of the fourth PCI set. PCI 10 may be a fourth PCI indicating/identifying/of a fourth cell. {5, PCI 21) may be a fifth PCI set of the list of PCI sets. 5 may be a fifth additional PCI index of the fifth PCI set. PCI 21 may be a fifth PCI indicating/identifying/of a fifth cell.

The at least one additional PCI index may comprise the first additional PCI index (e.g., 1), the second additional PCI index (e.g., 2), the third additional PCI index (e.g., 3), the fourth additional PCI index (e.g., 4), and the fifth additional PCI index (e.g., 5). The at least one PCI may comprise PCI 5, PCI 2, PCI 4, PCI 10, and PCI 21. The at least one cell may comprise the first cell, the second cell, the third cell, the fourth cell and the fifth cell. The one or more cells may comprise the at least one cell and the cell.

The one or more configuration parameters may indicate, for one or more TCI states of the plurality of TCI states (or, of the second plurality of TCI states), the at least one additional PCI index. The one or more configuration parameters may indicate, for each TCI state of the one or more TCI states, a respective additional PCI index (e.g., additionalPCI, AdditionalPCIIndex) of the at least one additional PCI index. For example, the one or more configuration parameters may indicate, for a first TCI state of the one or more TCI states, a first additional PCI index (e.g., 1) of the at least one additional PCI index. The first additional PCI index may indicate/identify a first PCI set of the list of PCI sets. The one or more configuration parameters may indicate, for a second TCI state of the one or more TCI states, a second additional PCI index (e.g., 2) of the at least one additional PCI index. The second additional PCI index may indicate/identify a second PCI set of the list of PCI sets. The one or more configuration parameters may indicate, for a third TCI state of the one or more TCI states, a third additional PCI index (e.g., 3) of the at least one additional PCI index. The third additional PCI index may indicate/identify a third PCI set of the list of PCI sets. Similarly, the one or more configuration parameters may indicate, for other TCI states of the one or more TCI states, additional PCI indexes of the at least one additional PCI index.

A TCI state of the one or more TCI states may be associated with an additional PCI index of the at least one additional PCI index, for example, based on the one or more configuration parameters indicating, for the TCI state, the additional PCI index. The TCI state may comprise/have the additional PCI index. The additional PCI index may indicate/identify a PCI set of the list of PCI sets (or the at least one PCI set). The PCI set may comprise/indicate/have a second PCI of the at least one PCI. The second PCI may indicate/identify a second cell of the at least one cell. The TCI state may be associated with the second PCI (or the second cell), for example, based on the one or more configuration parameters indicating, for the TCI state, the additional PCI index indicating the second PCI (or the second cell). The second PCI of the second cell may be, for example, different from the PCI of the cell.

The one or more configuration parameters may not indicate, for one or more TCI states of the plurality of TCI states, an additional PCI index of the at least one additional PCI index. An additional PCI index may be absent (or may not be present) in configuration parameter(s) of the one or more TCI states. The one or more configuration parameters may comprise the configuration parameter(s) of the one or more TCI states. The one or more TCI states of the plurality of TCI states may not be associated with an additional PCI index. The one or more TCI states may not comprise/have an additional PCI index. Each TCI state of the one or more TCI states may not comprise/have an additional PCI index. The one or more TCI states may be associated with the cell (or the PCI of the cell), for example, based on the one or more configuration parameters not indicating, for the one or more TCI states of the plurality of TCI states, an additional PCI index. The one or more TCI states may be associated with the cell (or the PCI of the cell), for example, based on the one or more configuration parameters not indicating, for each TCI state of the one or more TCI states, an additional PCI index. The one or more TCI states may be associated with the cell (or the PCI of the cell), for example, based on the one or more configuration parameters not indicating, for each TCI state of the one or more TCI states, an additional PCI index of the at least one additional PCI index.

The wireless device may receive a control command (e.g., MAC CE, DCI, downlink control command/message, unified TCI states activation/deactivation MAC CE, activation command, and/or the like). For example, the wireless device may receive an activation command 1808 at time T1 as shown in FIG. 18.

The control command may indicate activation of a subset of TCI states of the plurality of TCI states (e.g., indicated by higher layer parameter DLorJoint-TCIState). For example, the control command may indicate activation of a subset of TCI states of the second plurality of TCI states (e.g., UL-TCIState).

The wireless device may map the subset of TCI states to one or more TCI codepoints. The wireless device may map respective TCI state(s) of the subset of TCI states to a respective TCI codepoint of the one or more TCI codepoints. The one or more TCI codepoints may indicate/comprise the subset of TCI states. Each TCI codepoint of the one or more TCI codepoints may indicate (or may be mapped to) respective TCI state(s) of the subset of TCI states. Each TCI codepoint of the one or more TCI codepoints may indicate/comprise (or be mapped to) one or more TCI states.

For example, as shown in FIG. 18, the subset of TCI states may comprise at least TCI state 4, TCI state 5, TCI state 8, TCI state 26, TCI state 61, and TCI state 42. The one or more TCI codepoints may/be comprise a first TCI codepoint (e.g., TCI codepoint 000), a second TCI codepoint (e.g., TCI codepoint 001), a third TCI codepoint (e.g., TCI codepoint 110), and a fourth TCI codepoint (e.g., TCI codepoint 111). The first TCI codepoint (e.g., TCI codepoint 000) may comprise/indicate the TCI state 4. The second TCI codepoint (e.g., TCI codepoint 001) may comprise/indicate the TCI state 5 and the TCI state 8. The third TCI codepoint (e.g., TCI codepoint 110) may comprise/indicate the TCI state 26 and TCI state 61. The fourth TCI codepoint (e.g., TCI codepoint 111) may comprise/indicate the TCI state 42. For example, the first TCI codepoint (e.g., TCI codepoint 000) and the fourth TCI codepoint (e.g., TCI codepoint 111) may each indicate a single TCI state. The second TCI codepoint (e.g., TCI codepoint 001) and the third TCI codepoint (e.g., TCI codepoint 110) may indicate two TCI states (e.g., two joint TCI states, two uplink TCI states, two downlink TCI states, and/or the like).

A quantity of the one or more TCI codepoints may be equal to one. The one or more TCI codepoints may be a (single) TCI codepoint. The (single) TCI codepoint may indicate/comprise (or may be mapped to) at least two TCI states of the plurality of TCI states. The subset of TCI states may be/comprise the at least two TCI states. The wireless device may not receive DCI indicating activation of one or more TCI states among the subset of TCI states, for example, based on the quantity of the one or more TCI codepoints being equal to one. The wireless device may not receive DCI indicating activation of one or more TCI states among the subset of TCI states, for example, based on the control command indicating activation of the at least two TCI states. The at least two TCI states may comprise a first TCI state (e.g., TCI state 26 as shown in FIG. 18) and a second TCI state (e.g., TCI state 61 as shown in FIG. 18).

A quantity of the one or more TCI codepoints may be greater than one. The wireless device may receive DCI (e.g., DCI 1812 at time T2 as shown in FIG. 18). The DCI may comprise a TCI field. The TCI field may indicate a TCI codepoint of the one or more TCI codepoints. A value of the TCI field (e.g., TCI field = 110 as shown in FIG. 18) may indicate (or be equal to) the TCI codepoint.

The TCI codepoint may comprise/indicate (or may be mapped to) at least two TCI states (e.g., TCI state 26 and TCI state 61 in FIG. 18). The subset of TCI states may comprise the at least two TCI states of/in the TCI codepoint. The DCI may indicate activation of the at least two TCI states. The at least two TCI states may comprise a first TCI state (e.g., TCI state 26) and a second TCI state (e.g., TCI state 61).

The wireless device may receive a first control command (e.g., MAC CE, DCI, downlink control command/message, unified TCI states activation/deactivation MAC CE, activation command and/or the like). For example, the wireless device may receive an activation command 1904 at time T1 as shown in FIG. 19.

The first control command may activate/select/indicate/update (or indicate activation of) a first subset of TCI states of the plurality of TCI states (e.g., indicated by the higher layer parameter DLorJoint-TCIState). The first control command may activate/select/indicate/update (or indicate activation of) a first subset of TCI states of the second plurality of TCI states (e.g., indicated by the higher layer parameter UL-TCIState).

The first control command may comprise a field (e.g., CoresetPoolID) comprising a first CORESET pool index/indicator/identifier (e.g., CORESET pool index 0 as shown in FIG. 19). A value in/of the field may be equal to the first CORESET pool index. The first CORESET pool index may be equal to zero (or any other value). The first subset of TCI states may be associated with the first CORESET pool index. The first subset of TCI states may be associated with the first CORESET pool index, for example, based on the first control command, indicating activation of the first subset of TCI states, comprising the field with the first CORESET pool index. The wireless device may activate the first subset of TCI states for the first CORESET pool index.

The wireless device may map the first subset of TCI states to one or more first TCI codepoints. The wireless device may map respective TCI state(s) of the first subset of TCI states to a respective TCI codepoint of the one or more first TCI codepoints. The one or more first TCI codepoints may indicate/comprise the first subset of TCI states. Each TCI codepoint of the one or more first TCI codepoints may indicate (or may be mapped to) respective TCI state(s) of the first subset of TCI states. Each TCI codepoint of the one or more first TCI codepoints may indicate/comprise (or be mapped to) one or more TCI states. The one or more first TCI codepoints may be associated with the first CORESET pool index.

For example, as shown in FIG. 19, the first subset of TCI states may comprise TCI state 4, TCI state 5, TCI state 26, and TCI state 42. The one or more first TCI codepoints may/be comprise a first TCI codepoint (e.g., TCI codepoint 000), a second TCI codepoint (e.g., TCI codepoint 001), a third TCI codepoint (e.g., TCI codepoint 110), and a fourth TCI codepoint (e.g., TCI codepoint 111). The first TCI codepoint (e.g., TCI codepoint 000) may comprise/indicate the TCI state 4. The second TCI codepoint (e.g., TCI codepoint 001) may comprise/indicate the TCI state 5. The third TCI codepoint (e.g., TCI codepoint 110) may comprise/indicate the TCI state 26. The fourth TCI codepoint (e.g., TCI codepoint 111) may comprise/indicate the TCI state 42. For example, the first TCI codepoint (e.g., TCI codepoint 000), the second TCI codepoint (e.g., TCI codepoint 001), the third TCI codepoint (e.g., TCI codepoint 110), and the fourth TCI codepoint (e.g., TCI codepoint 111) may each indicate a respective single TCI state (e.g., a single joint TCI state, a single uplink TCI state, a single downlink TCI state, and/or the like).

A quantity of the one or more first TCI codepoints may be equal to one. The one or more first TCI codepoints may be a (single) TCI codepoint. The (single) TCI codepoint may indicate a first TCI state of the plurality of TCI states. The first subset of TCI states may comprise/be the first TCI state. The wireless device may not receive DCI indicating activation of one or more TCI states among the first subset of TCI states, for example, based on the quantity of the one or more first TCI codepoints being equal to one. The wireless device may not receive DCI indicating activation of one or more TCI states among the first subset of TCI states, for example, based on the first control command indicating activation of the first TCI state.

A quantity of the one or more first TCI codepoints may be greater than one. The wireless device may receive, via a first CORESET (e.g., CORESET 1 in FIG. 19) with the first CORESET pool index (e.g., CORESET pool index 0), first DCI (e.g., DCI 1908 at time T2 in FIG. 19). The plurality of CORESETs may comprise the first CORESET. The one or more configuration parameters may indicate, for the first CORESET, the first CORESET pool index. The one or more configuration parameters may not indicate, for the first CORESET, a CORESET pool index. The first CORESET may be associated with the first CORESET pool index (e.g., CORESET pool index 0), for example, based on the one or more configuration parameters not indicating, for the first CORESET, a CORESET pool index. A default value for CORESET pool index of the first CORESET may be equal to the first CORESET pool index (e.g., CORESET pool index 0), for example, based on the one or more configuration parameters not indicating, for the first CORESET, a CORESET pool index.

The first DCI may correspond to DCI format 1_1. The first DCI may correspond to DCI format 1_2. The first DCI may correspond to DCI format 1_x, where x = 0, 1, 2 ... The first DCI may correspond to DCI format 0_x, where x = 0, 1, 2 ....

The first DCI may comprise a first TCI field. The first TCI field may indicate a first TCI codepoint in/of the one or more first TCI codepoints. The first TCI field may indicate the first TCI codepoint of the one or more first TCI codepoints associated with the first CORESET pool index, for example, based on the receiving the first DCI via the first CORESET with the first CORESET pool index. A value of the first TCI field (e.g., 110 as shown in FIG. 19) may be equal to the first TCI codepoint. The value of the first TCI field may indicate the first TCI codepoint. The first TCI codepoint (e.g., 110) may indicate/comprise (or may be mapped to) a first TCI state (e.g., TCI state 26 as shown in FIG. 19). The first subset of TCI states may comprise the first TCI state. The first DCI may indicate activation of (or may activate) the first TCI state. The first DCI may indicate activation of the first TCI state. The first TCI field in/of the first DCI may indicate the first TCI state in the first subset of TCI states, for example, based on the receiving the first DCI via the first CORESET with the first CORESET pool index. The first TCI field in/of the first DCI may indicate the first TCI state in the first subset of TCI states, for example, based on the first control command, that indicates activation of the first subset of TCI states, comprising the field indicating/comprising the first CORESET pool index (that is the same as that of the first CORESET).

The first TCI state may be associated with (or may be activated for) the first CORESET pool index. The first TCI state may be associated with downlink/uplink receptions/transmissions associated with the first CORESET pool index. The first TCI state may be associated with the downlink/uplink receptions/transmissions associated with the first CORESET pool index, for example, based on the receiving, via the first CORESET with the first CORESET pool index, the first DCI indicating activation of the first TCI state.

The wireless device may apply the first TCI state to downlink receptions (e.g., PDSCH receptions, transport block, PDCCH receptions, CSI-RS, DM-RS, and/or the like) associated with the first CORESET pool index. For example, the one or more configuration parameters may indicate, for a CORESET of the plurality of CORESETs, the first CORESET pool index. The wireless device may monitor downlink control channels in the CORESET based on the first TCI state, for example, based on/in response to the one or more configuration parameters indicating, for the CORESET, the first CORESET pool index. For example, the wireless device may receive, via a CORESET with the first CORESET pool index, DCI scheduling a downlink signal (e.g., PDSCH transmission, transport block, DM-RS, CSI-RS, aperiodic CSI-RS). The plurality of CORESETs may comprise the CORESET. The downlink signal may be associated with the first CORESET pool index, for example, based on the receiving the DCI via the CORESET with the first CORESET pool index. The wireless device may receive the downlink signal based on the first TCI state, for example, based on/in response to the downlink signal being associated with the first CORESET pool index. For example, the wireless device may receive a downlink signal (e.g., PDSCH transmission, transport block, DM-RS, CSI-RS, aperiodic CSI-RS) based on the first TCI state, for example, based on/in response to the one or more configuration parameters indicating, for the downlink signal (or a resource set comprising the downlink signal), the first CORESET pool index.

The wireless device may apply the first TCI state to uplink transmissions (e.g., PUSCH transmissions, transport block, PUCCH transmissions, SRS, and/or the like) associated with the first CORESET pool index. For example, the one or more configuration parameters may indicate, for an uplink resource (or an uplink resource group/set comprising an uplink resource, the first CORESET pool index. The wireless device may send/transmit, via the uplink resource, an uplink signal (e.g., UCI, HARQ-ACK, SR, CSI report, SRS) based on the first TCI state, for example, based on/in response to the one or more configuration parameters indicating, for the uplink resource (or the uplink resource group/set comprising the uplink resource), the first CORESET pool index. The (active) uplink BWP of the cell may comprise the uplink resource. The uplink resource may be a PUCCH resource. The uplink signal may be UCI (e.g., UCI, HARQ-ACK, SR, CSI report, and/or the like). The uplink resource may be an SRS resource. The uplink signal may be an SRS. The uplink resource may be a PUSCH resource. The uplink signal may be a PUSCH transmission (e.g., a transport block) of a configured uplink grant (e.g., type 1 configured uplink grant).Transmission of the uplink signal via the uplink resource may be associated with the first CORESET pool index, for example, based on the one or more configuration parameters indicating, for the uplink resource (or the uplink resource group/set comprising the uplink resource), the first CORESET pool index.

The wireless device may receive, via a CORESET with the first CORESET pool index, DCI triggering/scheduling transmission of an uplink signal (e.g., PUSCH transmission, transport block, SRS, HARQ-ACK). The plurality of CORESETs may comprise the CORESET. The uplink signal may be associated with the first CORESET pool index, for example, based on the receiving the DCI via the CORESET with the first CORESET pool index. The wireless device may send/transmit the uplink signal based on the first TCI state, for example, based on/in response to the uplink signal being associated with the first CORESET pool index.

The wireless device may receive a second control command (e.g., MAC CE, DCI, downlink control command/message, unified TCI states activation/deactivation MAC CE, activation command, and/or the like). For example, the wireless device may receive an activation command 1912 at time T3 in FIG. 19.

The second control command may activate/select/indicate/update (or indicate activation of) a second subset of TCI states of the plurality of TCI states (e.g., indicated by the higher layer parameter DLorJoint-TCIState). The second control command may activate/select/indicate/update (or indicate activation of) a second subset of TCI states of the second plurality of TCI states (e.g., indicated by the higher layer parameter UL-TCIState).

The second control command may comprise a field (e.g., CoresetPoolID) with/indicating a second CORESET pool index/indicator/identifier (e.g., Coreset pool index 1 in FIG. 19). A value in/of the field may be equal to the second CORESET pool index. The second CORESET pool index may be equal to one (or any other second value). The second subset of TCI states may be associated with the second CORESET pool index. The second subset of TCI states may be associated with the second CORESET pool index, for example, based on the second control command, indicating activation of the second subset of TCI states, comprising the field with/indicating the second CORESET pool index. The wireless device may activate the second subset of TCI states for the second CORESET pool index.

The wireless device may map the second subset of TCI states to one or more second TCI codepoints. The wireless device may map respective TCI state(s) of the second subset of TCI states to a respective TCI codepoint of the one or more second TCI codepoints. The one or more second TCI codepoints may indicate/comprise (or may be mapped to) the second subset of TCI states. Each TCI codepoint of the one or more second TCI codepoints may indicate (or may be mapped to) respective TCI state(s) of the second subset of TCI states. Each TCI codepoint of the one or more second TCI codepoints may indicate/comprise (or be mapped to) one or more TCI states. The one or more second TCI codepoints may be associated with the second CORESET pool index.

For example, as shown in FIG. 19, the second subset of TCI states may comprise TCI state 8, TCI state 61, and TCI state 21. The one or more second TCI codepoints may/be comprise a first TCI codepoint (e.g., TCI codepoint 000), a second TCI codepoint (e.g., TCI codepoint 001), and/or a third TCI codepoint (e.g., TCI codepoint 110). The first TCI codepoint (e.g., TCI codepoint 000) may comprise/indicate the TCI state 8. The second TCI codepoint (e.g., TCI codepoint 001) may comprise/indicate the TCI state 61. The third TCI codepoint (e.g., TCI codepoint 110) may comprise/indicate the TCI state 21. For example, the first TCI codepoint (e.g., TCI codepoint 000), the second TCI codepoint (e.g., TCI codepoint 001), and/or the third TCI codepoint (e.g., TCI codepoint 110) may each indicate a respective single TCI state (e.g., a single joint TCI state, a single uplink TCI state, a single downlink TCI state, and/or the like).

A quantity of the one or more second TCI codepoints may be equal to one. The one or more second TCI codepoints may be/comprise a (single) TCI codepoint. The (single) TCI codepoint may indicate a second TCI state of the plurality of TCI states. The second subset of TCI states may be/comprise the second TCI state. The wireless device may not receive DCI indicating activation of one or more TCI states among the second subset of TCI states, for example, based on the quantity of the one or more second TCI codepoints being equal to one. The wireless device may not receive DCI indicating activation of one or more TCI states among the second subset of TCI states, for example, based on the second control command indicating activation of the second TCI state.

A quantity of the one or more second TCI codepoints may be greater than one. The wireless device may receive, via a second CORESET (e.g., CORESET 2 as shown in FIG. 19) with the second CORESET pool index (e.g., CORESET pool index 1), second DCI (e.g., DCI 1916 at time T4 in FIG. 19). The one or more configuration parameters may indicate, for the second CORESET, the second CORESET pool index. The plurality of CORESETs may comprise the second CORESET.

The second DCI may correspond to a DCI format 1_1. The second DCI may correspond to a DCI format 1_2. The second DCI may correspond to a DCI format 1_x, where x = 0, 1, 2 ... The second DCI may correspond to a DCI format 0_x, where x = 0, 1, 2 ....

The second DCI may comprise a second TCI field. The second TCI field may indicate a second TCI codepoint in/of the one or more second TCI codepoints. The second TCI field may indicate the second TCI codepoint of the one or more second TCI codepoints associated with the second CORESET pool index, for example, based on the receiving the second DCI via the second CORESET with the second CORESET pool index. A value of the second TCI field (e.g., 001 as shown in FIG. 19) may be equal to the second TCI codepoint. The value of the second TCI field may indicate the second TCI codepoint. The second TCI codepoint (e.g., 001) may indicate/comprise (or may be mapped to) a second TCI state (e.g., TCI state 61 as shown in FIG. 19). The second subset of TCI states may comprise the second TCI state. The second DCI may indicate activation of (or may activate) the second TCI state. The second TCI field in/of the second DCI may indicate the second TCI state in the second subset of TCI states, for example, based on the receiving the second DCI via the second CORESET with the second CORESET pool index. The second TCI field in/of the second DCI may indicate the second TCI state in the second subset of TCI states, for example, based on the second control command, that indicates activation of the second subset of TCI states, comprising the field with the second CORESET pool index (that is the same as that of the second CORESET). The second TCI state may be associated with (or may be activated for) the second CORESET pool index.

The second TCI state may be associated with downlink receptions and/or uplink transmissions associated with the second CORESET pool index. The second TCI state may be associated with the downlink receptions and/or uplink transmissions associated with the second CORESET pool index, for example, based on the receiving, via the second CORESET with the second CORESET pool index, the second DCI indicating activation of the second TCI state.

The wireless device may apply the second TCI state to downlink receptions (e.g., PDSCH receptions, transport block, PDCCH receptions, CSI-RS, DM-RS, and/or the like) associated with the second CORESET pool index. For example, the one or more configuration parameters may indicate, for a CORESET of the plurality of CORESETs, the second CORESET pool index. The wireless device may monitor downlink control channels in the CORESET based on the second TCI state, for example, based on/in response to the one or more configuration parameters indicating, for the CORESET, the second CORESET pool index. For example, the wireless device may receive, via a CORESET with the second CORESET pool index, DCI scheduling a downlink signal (e.g., PDSCH transmission, transport block, DM-RS, CSI-RS, aperiodic CSI-RS). The plurality of CORESETs may comprise the CORESET. The downlink signal may be associated with the second CORESET pool index, for example, based on the receiving the DCI via the CORESET with the second CORESET pool index. The wireless device may receive the downlink signal based on the second TCI state, for example, based on/in response to the downlink signal being associated with the second CORESET pool index. For example, the wireless device may receive a downlink signal (e.g., PDSCH transmission, transport block, DM-RS, CSI-RS, aperiodic CSI-RS) based on the second TCI state, for example, based on/in response to the one or more configuration parameters indicating, for the downlink signal (or a resource set comprising the downlink signal), the second CORESET pool index.

The wireless device may apply the second TCI state to uplink transmissions (e.g., PUSCH transmissions, transport block, PUCCH transmissions, SRS, and/or the like) associated with the second CORESET pool index. For example, the one or more configuration parameters may indicate, for an uplink resource (or an uplink resource group/set comprising an uplink resource), the second CORESET pool index. The wireless device may send/transmit, via the uplink resource, an uplink signal (e.g., UCI, HARQ-ACK, SR, CSI report, SRS, and/or the like) based on the second TCI state, for example, based on/in response to the one or more configuration parameters indicating, for the uplink resource (or the uplink resource group/set comprising the uplink resource), the second CORESET pool index. The (active) uplink BWP of the cell may comprise the uplink resource. The uplink resource may be a PUCCH resource. The uplink signal may comprise UCI (e.g., UCI, HARQ-ACK, SR, CSI report). The uplink resource may be an SRS resource. The uplink signal may be an SRS. The uplink resource may be a PUSCH resource. The uplink signal may be a PUSCH transmission (e.g., transport block) of a configured uplink grant (e.g., type 1 configured uplink grant). Transmission of the uplink signal via the uplink resource may be associated with the second CORESET pool index, for example, based on the one or more configuration parameters indicating, for the uplink resource (or the uplink resource group/set comprising the uplink resource), the second CORESET pool index.

The wireless device may receive, via a CORESET with the second CORESET pool index, DCI triggering/scheduling transmission of an uplink signal (e.g., PUSCH transmission, transport block, SRS, HARQ-ACK, and/or the like). The plurality of CORESETs may comprise the CORESET. The uplink signal may be associated with the second CORESET pool index, for example, based on the receiving DCI via the CORESET with the second CORESET pool index. The wireless device may send/transmit the uplink signal based on the second TCI state, for example, based on/in response to the uplink signal being associated with the second CORESET pool index.

The first TCI state may comprise/indicate a first reference signal (e.g., CSI-RS, SSB/PBCH block, DM-RS, SRS, and/or the like). The first TCI state may comprise/indicate a first quasi co-location type (e.g., QCL TypeA, QCL TypeB, QCL TypeC, QCL TypeD).

The first TCI state may be associated with the PCI of the cell. The first TCI state may or may not comprise/have/be associated with an additional PCI index of the at least one additional PCI index. An additional PCI index may be absent in configuration parameter(s) of the first TCI state. The one or more configuration parameters may comprise the configuration parameter(s) of the first TCI state. The first TCI state may be associated with the PCI of the cell, for example, based on the first TCI state not comprising/having an additional PCI index of the at least one additional PCI index. The first reference signal may be quasi co-located with a first SS/PBCH block. The first reference signal may be a first SS/PBCH block. The first reference signal may be quasi co-located with a first CSI-RS that is quasi co-located with a first SS/PBCH block. The first SS/PBCH block may be associated with the cell. The first SS/PBCH block may be associated with the PCI of the cell. The one or more configuration parameters may indicate, for the cell, the first SS/PBCH block.

The first TCI state may be associated with a second PCI of a second cell. The at least one cell of the one or more cells may comprise the second cell. The at least one PCI in (or indicated by) the list of PCI sets may comprise the second PCI. The second PCI may indicate/identify the second cell. The first TCI state may comprise/have/be associated with an additional PCI index of the at least one additional PCI index. The one or more configuration parameters may indicate, for the first TCI state, the additional PCI index. The additional PCI index may indicate a PCI set of the list of PCI sets. The PCI set may comprise/indicate the second PCI of the second cell. The first TCI state may be associated with the second PCI of the second cell, for example, based on the first TCI state comprising/having/being associated with the additional PCI index indicating the second PCI of the second cell. The first TCI state may be associated with the second PCI of the second cell, for example, based on the one or more configuration parameters indicating, for the first TCI state, the additional PCI index that indicates the second PCI of the second cell. The first reference signal may be quasi co-located with a first SS/PBCH block. The first reference signal may be a first SS/PBCH block. The first reference signal may be quasi co-located with a first CSI-RS that is quasi co-located with a first SS/PBCH block. The first SS/PBCH block may be associated with the second cell. The first SS/PBCH block may be associated with the second PCI of the second cell. The one or more configuration parameters may indicate, for the second cell, the first SS/PBCH block.

The second TCI state may comprise/indicate a second reference signal (e.g., CSI-RS, SSB/PBCH block, DM-RS, SRS, and/or the like). The second TCI state may comprise/indicate a second quasi co-location type (e.g., QCL TypeA, QCL TypeB, QCL TypeC, QCL TypeD).

The second TCI state may be associated with the PCI of the cell. The second TCI state may or may not comprise/have an additional PCI index of the at least one additional PCI index. An additional PCI index may be absent in configuration parameter(s) of the second TCI state. The one or more configuration parameters may comprise the configuration parameter(s) of the second TCI state. The second TCI state may be associated with the PCI of the cell, for example, based on the second TCI state not comprising/having/indicating an additional PCI index of the at least one additional PCI index. The second reference signal may be quasi co-located with a second SS/PBCH block. The second reference signal may be a second SS/PBCH block. The second reference signal may be quasi co-located with a second CSI-RS that is quasi co-located with a second SS/PBCH block. The second SS/PBCH block may be associated with the cell. The second SS/PBCH block may be associated with the PCI of the cell. The one or more configuration parameters may indicate, for the cell, the second SS/PBCH block.

The second TCI state may be associated with a second PCI of a second cell. The at least one cell of the one or more cells may comprise the second cell. The at least one PCI in (or indicated by) the list of PCI sets may comprise the second PCI. The second PCI may indicate/identify the second cell. The second TCI state may comprise/have/indicate an additional PCI index of the at least one additional PCI index. The one or more configuration parameters may indicate, for the second TCI state, the additional PCI index. The additional PCI index may indicate a PCI set of the list of PCI sets. The PCI set may comprise/indicate the second PCI of the second cell. The second TCI state may be associated with the second PCI of the second cell, for example, based on the second TCI state comprising/having/indicating the additional PCI index indicating the second PCI of the second cell. The second TCI state may be associated with the second PCI of the second cell, for example, based on the one or more configuration parameters indicating, for the second TCI state, the additional PCI index that indicates the second PCI of the second cell. The second reference signal may be quasi co-located with a second SS/PBCH block. The second reference signal may be a second SS/PBCH block. The second reference signal may be quasi co-located with a second CSI-RS that is quasi co-located with a second SS/PBCH block. The second SS/PBCH block may be associated with the second cell. The second SS/PBCH block may be associated with the second PCI of the second cell. The one or more configuration parameters may indicate, for the second cell, the second SS/PBCH block.

The second cell with (or identified/indicated by) the second PCI may be a non-serving cell. The second cell with (or identified/indicated by) the second PCI may be a neighboring cell. The second cell with (or identified/indicated by) the second PCI may be a candidate/assisting cell.

The one or more configuration parameters may indicate, for the first TCI state, a first TCI state index (e.g., indicated by a higher layer parameter tci-StateId). The one or more configuration parameters may indicate, for the second TCI state, a second TCI state index. The first TCI state index may be lower/less than the second TCI state index.

The control command (e.g., the activation command 1808) indicating activation of the subset of TCI states may comprise a plurality of fields. A first field of the plurality of fields may indicate the first TCI state. For example, the first field may comprise the first TCI state index indicating/identifying the first TCI state. The first field may occur/be (or be located) in a first octet of the control command (or any other position within the control command). A second field of the plurality of fields may indicate the second TCI state. For example, the second field may comprise the second TCI state index indicating/identifying the second TCI state. The second field may occur/be (or be located) in a second octet of the control command (or any other second position within the control command). The first octet may be lower/less (e.g., may be located before) than the second octet. For example, the first octet may be octet 5 of the control command, and the second octet may be octet 6 of the control command. The first octet may be octet 1 of the control command, and the second octet may be octet 2 of the control command. The first octet may be octet 9 of the control command, and the second octet may be octet 10 of the control command. The base station may order the first TCI state index and the second TCI state index according to (or based on) an ordinal position in the control command. For example, octet n of the control command may comprise the first TCI state index identifying/indicating the first TCI state, and octet m of the control command may comprise the second TCI state index identifying/indicating the second TCI state, where n < m.

The control command may indicate/map/activate a list/set/vector of the at least two TCI states in/to/for the TCI codepoint. The control command may indicate mapping/association/activation of the list/set/vector of the at least two TCI states to/for the TCI codepoint. The at least two TCI states may comprise the first TCI state and the second TCI state. The first TCI state may occur first in the list/set/vector of the at least two TCI states. The first TCI state may be a first (e.g., starting/earliest/initial) TCI state in the list/set/vector of the at least two TCI states. The second TCI state may occur second in the list/set/vector of the at least two TCI states. The second TCI state may be a last (e.g., latest/ending) TCI state in the list/set/vector of the at least two TCI states. The first TCI state may be TCI state 5 and the second TCI state may be TCI state 8, for example, if the list/set/vector of the at least two TCI states comprises TCI state 5 and TCI state 8. The first TCI state may be TCI state 26 and the second TCI state may be TCI state 61, for example, if the list/set/vector of the at least two TCI states comprises TCI state 26, TCI state 61.

The wireless device may apply the first TCI state to one or more first uplink channels/resources of the cell. The wireless device may send/transmit, via the one or more first uplink channels/resources, uplink signals based on the first TCI state. The wireless device may send/transmit, via each uplink channel/resource of the one or more first uplink channels/resources, a respective uplink signal of the uplink signals based on the first TCI state.

The wireless device may send/transmit, via the one or more first uplink channels/resources, the uplink signals with transmission power(s) determined based on the first TCI state. The wireless device may send/transmit, via each uplink channel/resource of the one or more first uplink channels/resources, an uplink signal with a respective transmission power determined based on the first TCI state. The wireless device may send/transmit, via a first uplink channel/resource of the one or more first uplink channels/resources, a first uplink signal with/using a first transmission power determined based on the first TCI state. The wireless device may determine the first transmission power based on one or more first power control parameters (e.g., target received power, pathloss compensation factor, closed-loop index, pathloss reference signal, and/or the like) associated with (e.g., mapped to, indicated by, or included in) the first TCI state. The wireless device may send/transmit, via a second uplink channel/resource of the one or more first uplink channels/resources, a second uplink signal with/using a second transmission power determined based on the first TCI state. The wireless device may determine the second transmission power based on one or more first power control parameters (e.g., target received power, pathloss compensation factor, closed-loop index, pathloss reference signal, and/or the like) associated with (e.g., mapped to, indicated by, or included in) the first TCI state.

The wireless device may send/transmit, via the one or more first uplink channels/resources, the uplink signals with/using a first spatial domain transmission filter/beam determined based on the first TCI state. The wireless device may send/transmit, via each uplink channel/resource of the one or more first uplink channels/resources, a respective uplink signal with/using the first spatial domain transmission filter/beam determined based on the first TCI state. For example, the wireless device may transmit, via a first uplink channel/resource of the one or more first uplink channels/resources, a first uplink signal with/using the first spatial domain transmission filter/beam determined based on the first TCI state. At least one DMRS antenna port of the first uplink signal may be quasi co-located with the first reference signal indicated by the first TCI state. The wireless device may transmit, via a second uplink channel/resource of the one or more first uplink channels/resources, a second uplink signal with/using the first spatial domain transmission filter/beam determined based on the first TCI state. At least one DMRS antenna port of the second uplink signal may be quasi co-located with the first reference signal indicated by the first TCI state

The one or more first uplink channels/resources may be/comprise a PUSCH resource. The one or more first uplink channels/resources may be/comprise one or more first PUSCH resources. The one or more first uplink channels/resources may be/comprise (e.g., may be used for) one or more first PUSCH transmissions.

The wireless device may receive, via a first CORESET, first DCI scheduling a first PUSCH transmission. The plurality of CORESETs may comprise the first CORESET. The first DCI may comprise a field (e.g., an SRS resource set indicator field, a TRP field, a CORESET pool index field, an additional PCI index, a BFD set index, a unified TCI state indicator field, a joint TCI state indicator field, an uplink TCI state indicator field, panel index, capability set index, and/or the like). The field may comprise/indicate a first value (e.g., 0, 00, 10, 11). The first value may indicate the first TCI state. The wireless device may transmit/perform, based on the first TCI state, the first PUSCH transmission, for example, based on/in response to the first DCI comprising the field with the first value indicating the first TCI state. The one or more first uplink channels/resources may comprise PUSCH transmissions scheduled by DCIs comprising the field with the first value. Each DCI of the DCIs may schedule one or more PUSCH transmissions of the PUSCH transmissions.

The first CORESET may be associated with the first CORESET pool index (e.g., CoresetPoolIndex = 0). For example, the one or more configuration parameters may indicate, for the first CORESET, the first CORESET pool index. For example, the one or more configuration parameters may not indicate, for the first CORESET, a CORESET pool index. The wireless device may transmit/perform, based on the first TCI state, the first PUSCH transmission, for example, in response to receiving the first DCI scheduling the first PUSCH transmission via the first CORESET with the first CORESET pool index. The one or more first uplink channels/resources may be/comprise the first PUSCH transmission. The one or more first uplink channels/resources may be/comprise PUSCH transmissions scheduled by DCIs received via one or more first CORESETs with the first CORESET pool index. The plurality of CORESETs may comprise the one or more first CORESETs.

The one or more configuration parameters may comprise/indicate, for a configured uplink grant, a field (e.g., SRS resource set indicator field, TRP field, CORESET pool index field, additional PCI index, BFD set index, unified TCI state indicator field, joint TCI state indicator field, uplink TCI state indicator field, panel index, capability set index, and/or the like). The field may comprise a first value (e.g., 0, 00, 10, 11) indicating the first TCI state. The wireless device may transmit/perform, based on the first TCI state, PUSCH transmissions of/for the configured uplink grant. The wireless device may transmit/perform, based on the first TCI state, the PUSCH transmissions of/for the configured uplink grant, for example, based on/in response to the one or more configuration parameters indicating, for the configured uplink grant, the field with the first value that indicates the first TCI state. The configured uplink grant may be, for example, a type 1 configured uplink grant. The one or more first uplink channels/resources may comprise the PUSCH transmissions of/for the configured uplink grant.

The one or more first uplink channels/resources may be/comprise PUCCH resource(s). The one or more first uplink channels/resources may be/comprise one or more first PUCCH resources. The one or more first uplink channels/resources may be/comprise one or more first PUCCH resource sets/groups. The one or more first uplink channels/resources may be/comprise one or more first PUCCH transmissions.

The one or more configuration parameters may indicate, for a first PUCCH resource, a field (e.g., SRS resource set indicator field, TRP field, CORESET pool index field, additional PCI index, BFD set index, unified TCI state indicator field, joint TCI state indicator field, uplink TCI state indicator field, panel index, capability set index, and the like). The field may indicate/comprise a first value (e.g., 0, 00, 10, 11) indicating the first TCI state. The wireless device may send/transmit, based on the first TCI state, an uplink signal (e.g., SR, HARQ-ACK, CSI report, uplink control information) via the first PUCCH resource. The wireless device may send/transmit, based on the first TCI state, the uplink signal via the first PUCCH resource, for example, based on/in response to the one or more configuration parameters indicating, for the first PUCCH resource, the field with the first value that indicates the first TCI state. The one or more first uplink channels/resources may comprise PUCCH transmissions via the first PUCCH resource.

The one or more configuration parameters may indicate, for a first PUCCH resource set/group, a field (e.g., SRS resource set indicator field, TRP field, CORESET pool index field, additional PCI index, BFD set index, unified TCI state indicator field, joint TCI state indicator field, uplink TCI state indicator field, panel index, capability set index, and/or the like). The field may comprise/indicate a first value (e.g., 0, 00, 10, 11) indicating the first TCI state. The wireless device may send/transmit, based on the first TCI state, an uplink signal (e.g., SR, HARQ-ACK, CSI report, uplink control information) via a PUCCH resource in the first PUCCH resource set/group. The wireless device may send/transmit, based on the first TCI state, the uplink signal via the PUCCH resource in the first PUCCH resource set/group, for example, based on/in response to the one or more configuration parameters indicating/comprising, for the first PUCCH resource set/group, the field with the first value indicating the first TCI state. The wireless device may send/transmit, based on the first TCI state, a respective uplink signal (e.g., SR, HARQ-ACK, CSI report, uplink control information) via each PUCCH resource in the first PUCCH resource set/group, for example, based on/in response to the one or more configuration parameters indicating, for the first PUCCH resource set/group, the field with the first value indicating the first TCI state. The one or more first uplink channels/resources may comprise PUCCH transmissions via each PUCCH resource in the first PUCCH resource set/group.

The wireless device may receive, via a first CORESET, first DCI. The first DCI may trigger/schedule transmission of a first PUCCH transmission (e.g., HARQ-ACK feedback transmission). The first DCI may schedule a PDSCH reception. The first DCI may indicate SCell dormancy. The first DCI may indicate SPS PDSCH release. The first DCI may indicate activation of a unified TCI state. The plurality of CORESETs may comprise the first CORESET. The first DCI may comprise a field (e.g., SRS resource set indicator field, TRP field, CORESET pool index field, additional PCI index, BFD set index, unified TCI state indicator field, joint TCI state indicator field, uplink TCI state indicator field, panel index, capability set index, and/or the like). The field may comprise a first value (e.g., 0, 00, 10, 11) indicating the first TCI state. The wireless device may transmit/perform, based on the first TCI state, the first PUCCH transmission. The wireless device may transmit/perform, based on the first TCI state, the first PUCCH transmission, for example, based on/in response to the first DCI comprising the field with the first value indicating the first TCI state. The one or more first uplink channels/resources may comprise PUCCH transmissions triggered/scheduled by DCIs comprising the field with the first value.

The first CORESET may be associated with the first CORESET pool index (e.g., CoresetPoolIndex = 0). For example, the one or more configuration parameters may indicate, for the first CORESET, the first CORESET pool index. The one or more configuration parameters may not indicate, for the first CORESET, a CORESET pool index. The wireless device may transmit/perform, based on the first TCI state, the first PUCCH transmission. The wireless device may transmit/perform, based on the first TCI state, the first PUCCH transmission., for example, based on/in response to receiving the first DCI triggering/scheduling the first PUCCH transmission via the first CORESET with the first CORESET pool index. The one or more first uplink channels/resources may comprise PUCCH transmissions triggered/scheduled by DCIs received via one or more first CORESETs with the first CORESET pool index. The plurality of CORESETs may comprise the one or more first CORESETs.

The one or more first uplink channels/resources may be/comprise SRS resources. The one or more first uplink channels/resources may be/comprise one or more first SRS resources. The one or more first uplink channels/resources may be/comprise one or more first SRS resource sets/groups. The one or more first uplink channels/resources may comprise one or more first SRS transmissions.

The one or more configuration parameters may indicate, for a first SRS resource, a field (e.g., SRS resource set indicator field, TRP field, CORESET pool index field, additional PCI index, BFD set index, unified TCI state indicator field, joint TCI state indicator field, uplink TCI state indicator field, panel index, capability set index, and/or the like). The field may comprise/indicate a first value (e.g., 0) indicating the first TCI state. The wireless device may send/transmit, based on the first TCI state, an SRS via the first SRS resource. The wireless device may send/transmit, based on the first TCI state, the SRS via the first SRS resource, for example, based on/in response to the one or more configuration parameters indicating, for the first SRS resource, the field with the first value that indicates the first TCI state. The one or more first uplink channels/resources may comprise SRS transmissions via the first SRS resource.

The one or more configuration parameters may indicate, for a first SRS resource set/group, a field (e.g., SRS resource set indicator field, TRP field, CORESET pool index field, additional PCI index, BFD set index, unified TCI state indicator field, joint TCI state indicator field, uplink TCI state indicator field, panel index, capability set index, and/or the like). The field may comprise/indicate a first value (e.g., 0, 00, 10, 11) indicating the first TCI state. The wireless device may send/transmit, based on the first TCI state, an SRS via an SRS resource in the first SRS resource set/group. The wireless device may send/transmit, based on the first TCI state, the SRS via the SRS resource in the first SRS resource set/group, for example, based on/in response to the one or more configuration parameters indicating, for the first SRS resource set/group, the field with the first value that indicates the first TCI state. The wireless device may send/transmit, based on the first TCI state, a respective SRS via each SRS resource in the first SRS resource set/group. The wireless device may send/transmit, based on the first TCI state, the respective SRS via each SRS resource in the first SRS resource set/group., for example, based on/in response to the one or more configuration parameters indicating, for the first SRS resource set/group, the field with the first value that indicates the first TCI state. The one or more first uplink channels/resources may comprise SRS transmissions via each SRS resource in the first SRS resource set/group.

The wireless device may receive, via a first CORESET, a first DCI triggering/scheduling transmission of an SRS. The SRS may be an aperiodic SRS. The SRS may be a semi-persistent SRS. The plurality of CORESETs may comprise the first CORESET. The first DCI may comprise a field (e.g., SRS resource set indicator field, TRP field, CORESET pool index field, additional PCI index, BFD set index, unified TCI state indicator field, joint TCI state indicator field, uplink TCI state indicator field, panel index, capability set index, and/or the like). The field may comprise/indicate a first value (e.g., 0, 00, 10, 11) indicating the first TCI state. The wireless device may send/transmit, based on the first TCI state, the SRS. The wireless device may send/transmit, based on the first TCI state, the SRS, for example, based on/in response to the first DCI comprising the field with the first value indicating the first TCI state. The one or more first uplink channels/resources may comprise SRS transmissions triggered/scheduled by DCIs comprising the field with the first value.

The first CORESET may be associated with the first CORESET pool index (e.g., CoresetPoolIndex = 0). For example, the one or more configuration parameters may indicate, for the first CORESET, the first CORESET pool index. The one or more configuration parameters may not indicate, for the first CORESET, a CORESET pool index. The wireless device may send/transmit, based on the first TCI state, the SRS. The wireless device may send/transmit, based on the first TCI state, the SRS, for example, based on/in response to receiving the first DCI triggering/scheduling the transmission of the SRS via the first CORESET with the first CORESET pool index. The one or more first uplink channels/resources may comprise SRS transmissions triggered/scheduled by DCIs received via one or more first CORESETs with the first CORESET pool index. The plurality of CORESETs may comprise the one or more first CORESETs.

The wireless device may apply the second TCI state to one or more second uplink channels/resources of the cell. The wireless device may send/transmit, via the one or more second uplink channels/resources, uplink signals based on the second TCI state. The wireless device may send/transmit, via each uplink channel/resource of the one or more second uplink channels/resources and based on the second TCI state, a respective uplink signal of the uplink signals.

The wireless device may send/transmit, via the one or more second uplink channels/resources, the uplink signals using determined transmission power(s). The transmission power(s) may be determined based on the second TCI state. The wireless device may send/transmit, via each uplink channel/resource of the one or more second uplink channels/resources, an uplink signal with a respective transmission power determined based on the second TCI state. For example, the wireless device may transmit, via a first uplink channel/resource of the one or more second uplink channels/resources, a first uplink signal using a first transmission power determined based on the second TCI state. The wireless device may determine the first transmission power based on one or more second power control parameters (e.g., target received power, pathloss compensation factor, closed-loop index, pathloss reference signal) associated with (e.g., mapped to, indicated by, and/or included in) the second TCI state. The wireless device may transmit, via a second uplink channel/resource of the one or more second uplink channels/resources, a second uplink signal using a second transmission power determined based on the second TCI state. The wireless device may determine the second transmission power based on one or more second power control parameters (e.g., target received power, pathloss compensation factor, closed-loop index, pathloss reference signal) associated with (e.g., mapped to, indicated by, and/or included in) the second TCI state.

The wireless device may send/transmit, via the one or more second uplink channels/resources, the uplink signals using a second spatial domain transmission filter/beam. The second spatial domain transmission filter/beam may be determined based on the second TCI state. The wireless device may transmit, via each uplink channel/resource of the one or more second uplink channels/resources, a respective uplink signal using the second spatial domain transmission filter/beam determined based on the second TCI state. For example, the wireless device may transmit, via a first uplink channel/resource of the one or more second uplink channels/resources, a first uplink signal using the second spatial domain transmission filter/beam determined based on the second TCI state. At least one DMRS antenna port of the first uplink signal may be quasi co-located with the second reference signal indicated by the second TCI state. The wireless device may transmit, via a second uplink channel/resource of the one or more second uplink channels/resources, a second uplink signal using the second spatial domain transmission filter/beam determined based on the second TCI state. At least one DMRS antenna port of the second uplink signal may be quasi co-located with the second reference signal indicated by the second TCI state.

The one or more second uplink channels/resources may comprise PUSCH resources. The one or more second uplink channels/resources may be/comprise one or more second PUSCH resources. The one or more second uplink channels/resources may comprise one or more second PUSCH transmissions.

The wireless device may receive, via a second CORESET, second DCI. The second DCI may schedule a second PUSCH transmission. The plurality of CORESETs may comprise the second CORESET. The second DCI may comprise a field (e.g., SRS resource set indicator field, TRP field, CORESET pool index field, additional PCI index, BFD set index, unified TCI state indicator field, joint TCI state indicator field, uplink TCI state indicator field, panel index, capability set index, and/or the like). The field may indicate/comprise a second value (e.g., 1, 01, 10, 11) indicating the second TCI state. The wireless device may send/perform, based on the second TCI state, the second PUSCH transmission. The wireless device may send/perform, based on the second TCI state, the second PUSCH transmission, for example, based on/in response to the second DCI comprising the field with the second value indicating the second TCI state. The one or more second uplink channels/resources may comprise PUSCH transmissions scheduled by DCIs comprising the field with the second value. Each DCI of the DCIs may schedule one or more PUSCH transmissions of the PUSCH transmissions.

The second CORESET may be associated with the second CORESET pool index (e.g., CoresetPoolIndex = 1). For example, the one or more configuration parameters may indicate, for the second CORESET, the second CORESET pool index. The wireless device may send/perform, based on the second TCI state, the second PUSCH transmission, for example, based on/in response to receiving the second DCI scheduling the second PUSCH transmission via the second CORESET with the second CORESET pool index. The one or more second uplink channels/resources may comprise PUSCH transmissions scheduled by DCIs received via one or more second CORESETs with the second CORESET pool index. The plurality of CORESETs may comprise the one or more second CORESETs.

The one or more configuration parameters may indicate, for a configured uplink grant, a field (e.g., SRS resource set indicator field, TRP field, CORESET pool index field, additional PCI index, BFD set index, unified TCI state indicator field, joint TCI state indicator field, uplink TCI state indicator field, panel index, capability set index, and/or the like). with the field may indicate/comprise a second value (e.g., 1, 01, 10, 11) indicating the second TCI state. The wireless device may send/perform, based on the second TCI state, PUSCH transmissions of/for the configured uplink grant. The wireless device may send/perform, based on the second TCI state, PUSCH transmissions of/for the configured uplink grant, for example, based on/in response to the one or more configuration parameters indicating, for the configured uplink grant, the field with the second value that indicates the second TCI state. The configured uplink grant may be, for example, a type 1 configured uplink grant. The one or more second uplink channels/resources may comprise the PUSCH transmissions of/for the configured uplink grant.

The one or more second uplink channels/resources may be/comprise PUCCH resource(s). The one or more second uplink channels/resources may be/comprise one or more second PUCCH resources. The one or more second uplink channels/resources may be/comprise one or more second PUCCH resource sets/groups. The one or more second uplink channels/resources may comprise one or more second PUCCH transmissions.

The one or more configuration parameters may indicate, for a second PUCCH resource, a field (e.g., SRS resource set indicator field, TRP field, CORESET pool index field, additional PCI index, BFD set index, unified TCI state indicator field, joint TCI state indicator field, uplink TCI state indicator field, panel index, capability set index, and/or the like). The field may indicate/comprise a second value (e.g., 1, 01, 10, 11) indicating the second TCI state. The wireless device may send/transmit, based on the second TCI state, an uplink signal (e.g., SR, HARQ-ACK, CSI report, uplink control information) via the second PUCCH resource. The wireless device may send/transmit, based on the second TCI state, the uplink signal via the second PUCCH resource, for example, based on/in response to the one or more configuration parameters indicating, for the second PUCCH resource, the field with the second value that indicates the second TCI state. The one or more second uplink channels/resources may comprise PUCCH transmissions via the second PUCCH resource.

The one or more configuration parameters may indicate, for a second PUCCH resource set/group, a field (e.g., SRS resource set indicator field, TRP field, CORESET pool index field, additional PCI index, BFD set index, unified TCI state indicator field, joint TCI state indicator field, uplink TCI state indicator field, panel index, capability set index, and/or the like). The field may comprise/indicate a second value (e.g., 1, 01, 10, 11) indicating the second TCI state. The wireless device may send/transmit, based on the second TCI state, an uplink signal (e.g., SR, HARQ-ACK, CSI report, uplink control information) via a PUCCH resource in the second PUCCH resource set/group. The wireless device may send/transmit, based on the second TCI state, the uplink signal via the PUCCH resource in the second PUCCH resource set/group, for example, based on/in response to the one or more configuration parameters indicating, for the second PUCCH resource set/group, the field with the second value that indicates the second TCI state. The wireless device may send/transmit, based on the second TCI state, a respective uplink signal (e.g., SR, HARQ-ACK, CSI report, uplink control information) via each PUCCH resource in the second PUCCH resource set/group, for example, based on/in response to the one or more configuration parameters indicating, for the second PUCCH resource set/group, the field with the second value that indicates the second TCI state. The one or more second uplink channels/resources may comprise PUCCH transmissions via each PUCCH resource in the second PUCCH resource set/group.

The wireless device may receive, via a second CORESET, second DCI. The second DCI may trigger/schedule transmission of a second PUCCH transmission (e.g., HARQ-ACK feedback transmission). The second DCI may schedule a PDSCH reception. The second DCI may indicate SCell dormancy. The second DCI may indicate SPS PDSCH release. The second DCI may indicate activation of a unified TCI state. The plurality of CORESETs may comprise the second CORESET. The second DCI may comprise a field (e.g., SRS resource set indicator field, TRP field, CORESET pool index field, additional PCI index, BFD set index, unified TCI state indicator field, joint TCI state indicator field, uplink TCI state indicator field, panel index, capability set index, and/or the like). The field may indicate/comprise a second value (e.g., 1, 01, 10, 11) indicating the second TCI state. The wireless device may send/perform, based on the second TCI state, the second PUCCH transmission. The wireless device may send/perform, based on the second TCI state, the second PUCCH transmission, for example, based on/in response to the second DCI comprising the field with the second value that indicates the second TCI state. The one or more second uplink channels/resources may comprise PUCCH transmissions triggered/scheduled by DCIs comprising the field with the second value.

The second CORESET may be associated with the second CORESET pool index (e.g., CoresetPoolIndex = 1). The one or more configuration parameters may indicate, for the second CORESET, the second CORESET pool index. The wireless device may send/perform, based on the second TCI state, the second PUCCH transmission. The wireless device may send/perform, based on the second TCI state, the second PUCCH transmission, for example, based on/in response to receiving the second DCI triggering/scheduling the second PUCCH transmission via the second CORESET with the second CORESET pool index. The one or more second uplink channels/resources may comprise PUCCH transmissions triggered/scheduled by DCIs received via one or more second CORESETs with the second CORESET pool index. The plurality of CORESETs may comprise the one or more second CORESETs.

The one or more second uplink channels/resources may be/comprise SRS resource(s). The one or more second uplink channels/resources may be/comprise one or more second SRS resources. The one or more second uplink channels/resources may be/comprise one or more second SRS resource sets/groups. The one or more second uplink channels/resources may be/comprise one or more second SRS transmissions.

The one or more configuration parameters may indicate, for a second SRS resource, a field (e.g., SRS resource set indicator field, TRP field, CORESET pool index field, additional PCI index, BFD set index, unified TCI state indicator field, joint TCI state indicator field, uplink TCI state indicator field, panel index, capability set index, and/or the like). The field may comprise/indicate a second value (e.g., 1) indicating the second TCI state. The wireless device may send/transmit, based on the second TCI state, an SRS via the second SRS resource. The wireless device may send/transmit, based on the second TCI state, the SRS via the second SRS resource, for example, based on/in response to the one or more configuration parameters indicating, for the second SRS resource, the field with the second value that indicates the second TCI state. The one or more second uplink channels/resources may comprise SRS transmissions via the second SRS resource.

The one or more configuration parameters may indicate, for a second SRS resource set/group, a field (e.g., SRS resource set indicator field, TRP field, CORESET pool index field, additional PCI index, BFD set index, unified TCI state indicator field, joint TCI state indicator field, uplink TCI state indicator field, panel index, capability set index, and/or the like). with the field may indicate/comprise a second value (e.g., 1) indicating the second TCI state. The wireless device may send/transmit, based on the second TCI state, an SRS via an SRS resource in the second SRS resource set/group. The wireless device may send/transmit, based on the second TCI state, the SRS via the SRS resource in the second SRS resource set/group, for example, based on/in response to the one or more configuration parameters indicating, for the second SRS resource set/group, the field with the second value that indicates the second TCI state. The wireless device may send/transmit, based on the second TCI state, a respective SRS via each SRS resource in the second SRS resource set/group, for example, based on/in response to the one or more configuration parameters indicating, for the second SRS resource set/group, the field with the second value that indicates the second TCI state. The one or more second uplink channels/resources may comprise SRS transmissions via each SRS resource in the second SRS resource set/group.

The wireless device may receive, via a second CORESET, second DCI. The second DCI may trigger/schedule transmission of an SRS. The SRS may be an aperiodic SRS. The SRS may be a semi-persistent SRS. The plurality of CORESETs may comprise the second CORESET. The second DCI may comprise a field (e.g., SRS resource set indicator field, TRP field, CORESET pool index field, additional PCI index, BFD set index, unified TCI state indicator field, joint TCI state indicator field, uplink TCI state indicator field, panel index, capability set index, and/or the like). The field may comprise/indicate a second value (e.g., 1, 01, 10, 11) indicating the second TCI state. The wireless device may send/transmit, based on the second TCI state, the SRS. The wireless device may send/transmit, based on the second TCI state, the SRS, for example, based on/in response to the second DCI comprising the field with the second value indicating the second TCI state. The one or more second uplink channels/resources may comprise SRS transmissions triggered/scheduled by DCIs comprising the field with the second value.

The second CORESET may be associated with the second CORESET pool index (e.g., CoresetPoolIndex = 1). The one or more configuration parameters may indicate, for the second CORESET, the second CORESET pool index. The wireless device may send/transmit, based on the second TCI state, the SRS. The wireless device may send/transmit, based on the second TCI state, the SRS, for example, based on/in response to receiving the second DCI triggering/scheduling the transmission of the SRS via the second CORESET with the second CORESET pool index. The one or more second uplink channels/resources may comprise SRS transmissions triggered/scheduled by DCIs received via one or more second CORESETs with the second CORESET pool index. The plurality of CORESETs may comprise the one or more second CORESETs.

In some wireless communications, in support of multiple transmission-reception points (TRPs), at least some wireless devices may be configured to support two transmission configuration indicator (TCI) states for receiving downlink signals. The wireless device may receive downlink control messages and/or commands that may indicate an activation of a first TCI state and a second TCI state. The downlink control messages and/or commands may associate TCI codepoints with one or more TCI states. The wireless device may receive one or more configuration parameters that may indicate a plurality of control resource sets (coresets). The coresets may be associated with one or more TCI states. The wireless device may enable a two default state, for example, based on receiving configuration parameters.

A wireless device with activated TCI states may receive DCI scheduling a downlink signal (e.g., PDSCH, aperiodic CSI-RS, etc.) for a cell. The wireless device may determine a default TCI state to base receiving the downlink signal on. A time offset may exist between the wireless device receiving the DCI and the wireless device receiving the downlink signal. The wireless device may determine a default TCI state to base receiving the downlink signal on, for example, if the time offset is less than a threshold. A threshold may comprise a minimum number of OFDM symbols between the DCI and the downlink signal. A threshold may indicated in a feature set the wireless device supports. A threshold may be equal to a beam switch timing enabler.

A wireless device configured to support two or more TCI states may have four possible PCI association configurations, for example, if the wireless device supports a first TCI state associated with a first PCI and a second TCI associated with a second PCI. The wireless device may determine a number of TCI states associated with a PCI of a cell that sends (e.g., transmits) DCI scheduling a downlink signal. The wireless device may determine that both the first PCI and the second PCI may be associated with the PCI of the cell. The wireless device may determine either that the first PCI may be equal to the PCI of the cell, and the second PCI may be different than the PCI of the cell, or that the first PCI may be different than the PCI of the cell, and the second PCI may be equal to the PCI of the cell. The wireless device may determine that neither the first PCI nor the second PCI may be equal to the PCI of the cell.

A delay in determining a default TCI state may result in a delay in receiving a downlink signal. Delays in downlink signals may result in a decrease in user satisfaction. Determining a default state from a first TCI state and a second TCI state before the downlink signal may result in reduced latency and an increase in user satisfaction. A time offset may exist between DCI scheduling the downlink signal and the downlink signal. A wireless may receive the downlink signal based on a determined (e.g., default) TCI state, for example, if the time offset is less than a threshold.

As described herein, a wireless device may determine a TCI state (e.g., a default TCI state) of two TCI states, for example, if both a first TCI state and a second TCI state are associated with a PCI of a cell. The wireless device may determine the TCI state (e.g., a default TCI state) of two TCI states, for example, if a cell sends (e.g., transmits) DCI to the cell scheduling a downlink signal and a time offset is less than a threshold. A first TCI may be associated with a first PCI equal to the PCI of the cell. A second TCI may be associated with a second PCI equal to the PCI of the cell. The wireless device may determine the TCI state (e.g., the default state) to receive the downlink signal, for example, based on a TCI state of the two TCI states having a lowest TCI index. The first TCI may be the TCI state, for example, based on the first TCI state having the lowest TCI index. Alternatively, the second TCI state may be the TCI state, for example, based on the second TCI state having the lowest TCI index.

Also, or alternatively, a wireless device may determine a TCI state (e.g., a default TCI state) of two TCI states, for example, if one of a first TCI state and a second TCI state are associated with a PCI of a cell. The first TCI state may be associated with a first PCI equal to the PCI of the cell, and the second TCI state may be associated with a second PCI different than the PCI of the cell. Alternatively, the second TCI state may be associated with a second PCI equal to the PCI of the cell, and the first TCI state may be associated with a first PCI different than the PCI of the cell. The wireless device may determine the TCI state (e.g., the default state) to receive the downlink signal, for example, based on a TCI state of the two TCI states having a PCI associated with the cell. The first TCI state may be the TCI state, for example, based on the first TCI state being associated with a first PCI equal to the PCI of the cell, and the second TCI state being associated with a second PCI different than the PCI of the cell. Alternatively, the second TCI state may be the TCI state, for example, based on the second TCI state being associated with a second PCI equal to the PCI of the cell, and the first TCI state being associated with a first PCI different than the PCI of the cell.

Also, or alternatively, a wireless device may determine a TCI state (e.g., a default TCI state) of two TCI states, for example, if neither a first TCI state nor a second TCI state are associated with a PCI of a cell. The first TCI state may be associated with a first PCI different than the PCI of the cell, and the second TCI state may be associated with a second PCI different than the PCI of the cell. The wireless device may determine the TCI state (e.g., the default state) to receive the downlink signal, for example, based on a TCI state of a coreset having a lowest coreset index.

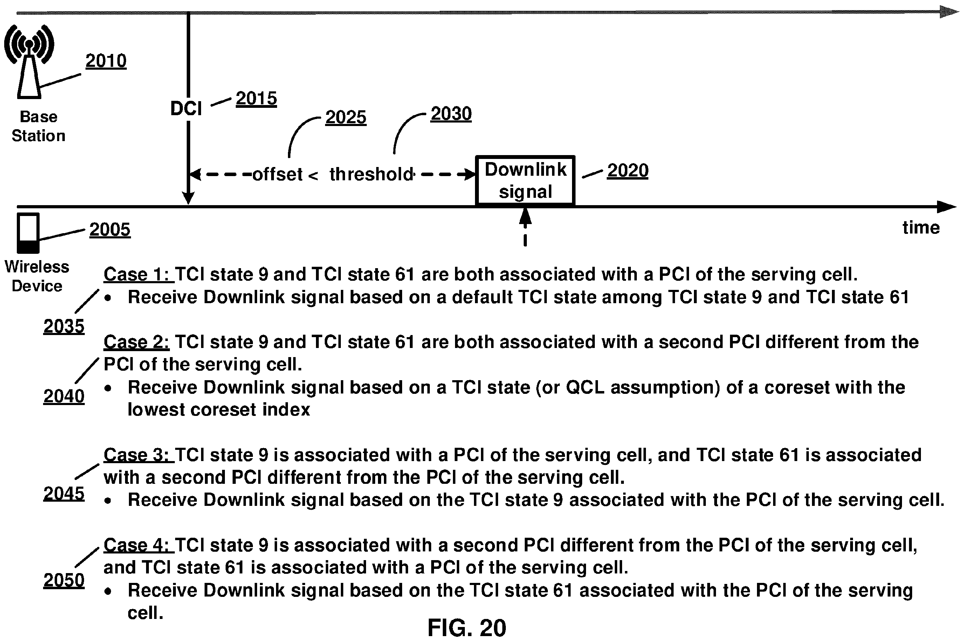

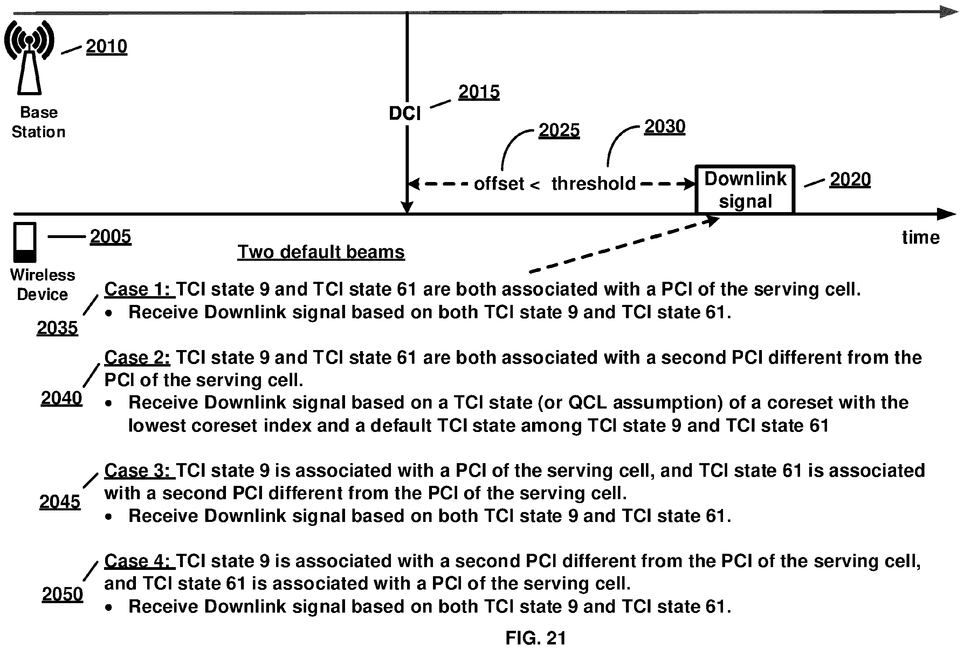

FIG. 20 and FIG. 21 show examples of default beam selection. A wireless device 2005 may receive and/or detect DCI 2015. The wireless device 2005 may receive the DCI 2015 in a first PDCCH monitoring occasion. The wireless device 2005 may receive, via a first coreset, the DCI 2015. A plurality of coresets may comprise the first coreset. DCI 2015 may schedule and/or trigger transmission and/or reception of a downlink signal 2020. The DCI 2015 may schedule transmission and/or reception of the downlink signal 2020 for and/or via a cell. The DCI may schedule reception of the downlink signal for and/or via an active downlink BWP of the cell.

A downlink signal 2020 may, for example, be a PDSCH transmission and/or reception. The PDSCH transmission and/or reception may comprise, indicate, and/or carry a transport block. A PDSCH transmission and/or reception may be a UE-dedicated PDSCH transmission and/or reception. The base station 2010 may send (e.g., transmit) the PDSCH transmission and/or reception to the wireless device. The base station may not send (e.g., transmit) the PDSCH transmission and/or reception to a second wireless device different from the wireless device, for example, based on the PDSCH transmission and/or reception being a LTE-dedicated PDSCH transmission and/or reception.

Also, or alternatively, a PDSCH transmission and/or reception may be a non-LTE-dedicated PDSCH transmission and/or reception. A base station 2010 may send (e.g., transmit) the PDSCH transmission and/or reception to a wireless device 2005. The base station 2010 may send (e.g., transmit) the PDSCH transmission and/or reception to a second wireless device different from the wireless device 2005, for example, based on the PDSCH transmission and/or reception being a non-LTE-dedicated PDSCH transmission and/or reception. The non-LTE-dedicated PDSCH transmission and/or reception may comprise, for example, a broadcast PDSCH transmission and/or reception. The non-LTE-dedicated PDSCH transmission and/or reception may comprise, for example, a multicast PDSCH transmission and/or reception.

A downlink signal 2020 may, for example, be an aperiodic CSI-RS. The downlink signal 2020 may be, for example, a semi-persistent CSI-RS. A time offset 2025 between DCI 2015 and the downlink signal 2020 may be less than a threshold 2030 (e.g., timeDurationForQCL, beamSwitchTiming). The time offset 2025 between the DCI 2015 and the downlink signal 2020 may comprise, for example, a time offset between a last, latest, and/or ending symbol of the DCI 2015 and a first, earliest, and/or starting symbol of the downlink signal 2020. The time offset 2025 between the DCI 2015 and the downlink signal 2020 may comprise, for example, a time offset 2025 between a last, latest, and/or ending symbol of the DCI 2015 and a first, earliest, and/or starting symbol of a resource (e.g., a time/frequency resource, a PDSCH resource, a CSI resource, etc.) of and/or to receive the downlink signal. The time offset 2025 between the DCI 2015 and the downlink signal 2020 may comprise, for example, a time offset 2025 between reception of the DCI 2015 and a first, earliest, and/or starting symbol of the downlink signal 2020.

A time offset 2025 between DCI 2015 and a downlink signal 2020 may comprise, for example, a time offset 2025 between a last, latest, and/or ending symbol of a first PDCCH monitoring occasion that may have received the DCI 2015 and a first, earliest, and/or starting symbol of the downlink signal 2020. The time offset 2025 between the DCI and the downlink signal 2020 may comprise, for example, a time offset 2015 between a last, latest, and/or ending symbol of the first PDCCH monitoring occasion that may have received the DCI 2015 and a first, earliest, and/or starting symbol of a resource (e.g., a time/frequency resource, a PDSCH resource, a CSI resource, etc.) of and/or to receive the downlink signal 2020.

A time offset 2025 between DCI 2015 and a downlink signal 2020 may comprise, for example, a time offset 2015 between a last, latest, and/or ending symbol of a first coreset that the DCI 2015 may be received via and a first, earliest, and/or starting symbol of the downlink signal 2020. The time offset 2025 between the DCI 2015 and the downlink signal 2020 may comprise, for example, a time offset 2025 between a last, latest, and/or ending symbol of the first coreset that the DCI 2015 may be received via and a first, earliest, and/or starting symbol of a resource (e.g., a time/frequency resource, a PDSCH resource, a CSI resource, etc.) of and/or to receive the downlink signal 2020.

DCI 2015 may indicate a resource to receive a downlink signal 2020. One or more configuration parameters may indicate the resource to receive the downlink signal 2020. A time offset 2025 between the DCI 2015 and the downlink signal 2020 may comprise, for example, a time offset 2025 between the DCI 2015 and a first, earliest, and/or starting transmission occasion and/or transmission repetition of the downlink signal 2020. A base station 2010 may send (e.g., transmit) and/or repeat send (e.g., transmit) the downlink signal 2020 using a plurality of transmission occasions (e.g., PDSCH transmission occasions). The plurality of transmission occasions may comprise a first, earliest, and/or starting transmission occasion. The first, earliest, and/or starting transmission occasion may be a first, earliest, and/or starting transmission occasion, among the plurality of transmission occasions, occurring in time. A starting time and/or symbol of the first, earliest, and/or starting transmission occasion may be a first and/or earliest among starting times and/or symbols of the plurality of transmission occasions.

A base station 2010 may need one or more LTE radio access capability information of a wireless device 2005. The base station 2010 may initiate a procedure to request the one or more UE radio access capability information (e.g., by an information element UECapabilityEnquiry) from the wireless device 2005. The wireless device may use an information element (e.g., UECapabilityInformation message) to transfer one or more UE radio access capability information requested by the base station 2010. The wireless device 2005 may provide and/or indicate a threshold 2030 (e.g., timeDurationForQCL, beamSwitchTiming) in FeatureSetDownlink indicating a set of features that the wireless device 2005 supports. The wireless device 2005 may send (e.g., transmit) a UE capability information and/or a message indicating the threshold 2030.

One or more configuration parameters may not comprise a higher layer parameter trs-info for a CSI-RS resource set (e.g., NZP-CSI-RS-ResourceSet) comprising a downlink signal 2020 (e.g., aperiodic CSI-RS, aperiodic CSI-RS resource, etc.).

A value of a threshold 2030 reported by a wireless device 2005 (e.g., in UE capability information) may, for example, be at least one of: f 14, 28, 48}. One or more configuration parameters may not comprise a beam switch timing enabler (e.g., enableBeamSwitchTiming). The threshold 2030 may be equal to the value of the threshold 2030 reported by the wireless device 2005, for example, if the value of the threshold 2030 reported by the wireless device 2005 is at least one of: f 14, 28, 48}. The threshold 2030 may be equal to the value of the threshold 2030 reported by the wireless device 2005, for example, if the one or more configuration parameters do not comprise the beam switch timing enabler. A value of a threshold 2030 reported by a wireless device 2005 may be, for example, at least one of: {224, 336}.

A threshold 2030 may be equal to 48 symbols, for example, if a value of a threshold reported by a wireless device 2005 is at least one of: {224, 336}. The threshold 2030 (e.g., timeDurationForQCL) may comprise and/or indicate a minimum number of OFDM symbols required by the wireless device 2005 to perform a PDCCH reception with first DCI 2015 and to apply spatial QCL information (e.g., TCI-State) received in and/or indicated by the first DCI 2015 for a processing of a first downlink signal scheduled by the first DCI. The wireless device 2005 may require the minimum number of OFDM symbols between the PDCCH reception and the processing of a first downlink signal 2020 to apply the spatial QCL information, indicated by the first DCI 2015, to the first downlink signal 2020. The threshold 2030 (e.g., beamSwitchTiming) may comprise and/or indicate a minimum number of OFDM symbols between the first DCI 2015 triggering of the first downlink signal 2020 (e.g., aperiodic CSI-RS) and transmission of the first downlink signal 2020. The number of OFDM symbols may be measured from a last symbol of and/or containing the first DCI 2015 to the first and/or starting symbol of the first downlink signal 2020.

One or more configuration parameters may not comprise an enable-two-default-TCI-states parameter (e.g., *enableTwoDefaultTCI-States*). The enable-two-default-TCI-states parameter may indicate to apply two default TCI states for PDSCH receptions, for example, if at least one TCI codepoint of one or more TCI codepoints may be mapped to two TCI states (e.g., two downlink TCI states, two joint/downlink TCI states, etc.). The one or more configuration parameters may not comprise the enable-two-default-TCI-states parameter set to "enabled." A wireless device 2005 may not be configured with the enable-two-default-TCI-states parameter, for example, based on the one or more configuration parameters not comprising the enable-two-default-TCI-states parameter. The wireless device 2005 may not be configured with the enable-two-default-TCI-states parameter, for example, based on the one or more configuration parameters not comprising the enable-two-default-TCI-states parameter set to "enabled."

One or more configuration parameters may not comprise an enable-default-TCI-state-per-coresetpoolindex parameter (e.g., *enableDefaultTCI-StatePerCoresetPoolIndex*). The enable-default-TCI-state-per-coresetpoolindex parameter may indicate to apply a default TCI state per coreset pool index, for example, if the one or more configuration parameters indicate and/or comprise two different values (e.g., 0 and 1) for a coreset pool index parameter (e.g., CoresetPoolIndex). The one or more configuration parameters may not comprise the enable-default-TCI-state-per-coresetpoolindex parameter set to "enabled." The wireless device 2005 may not be configured with the enable-default-TCI-state-per-coresetpoolindex parameter, for example, based on the one or more configuration parameters not comprising the enable-default-TCI-state-per-coresetpoolindex parameter. The wireless device 2005 may not be configured with the enable-default-TCI-state-per-coresetpoolindex parameter, for example, based on the one or more configuration parameters not comprising the enable-default-TCI-state-per-coresetpoolindex parameter set to "enabled."

The first TCI state may be associated with the PCI of the cell. The second TCI state may be associated with the PCI of the cell (Case 1 in FIG. 20).

A wireless device 2005 may receive a downlink signal 2020 based on a TCI state among the first TCI state and the second TCI state. The wireless device 2005 may receive the downlink signal 2020 based on the TCI state among the first TCI state and the second TCI state, for example, based on a time offset 2025 being less than a threshold 2030.

The wireless device may receive the downlink signal based on the TCI state among the first TCI state and the second TCI state, for example, in response to the first TCI state being associated with the PCI of the cell and the second TCI state being associated with the PCI of the cell. The wireless device 2005 may receive the downlink signal 2020 using a TCI state among the first TCI state and the second TCI state, for example, based on both the first TCI state and the second TCI state being associated with the PCI of the cell. The wireless device 2005 may receive the downlink signal 2020 based on the TCI state among the first TCI state and the second TCI state, for example, based on one or more configuration parameters not comprising the enable-two-default-TCI-states parameter. The wireless device 2005 may receive the downlink signal 2020 based on the TCI state among the first TCI state and the second TCI state, for example, based on (e.g., in response to) the one or more configuration parameters not comprising the enable-two-default-TCI-states parameter set to "enabled."

A wireless device 2005 may receive a downlink signal 2020 based on a TCI state among a first TCI state and a second TCI state, for example, based on (e.g., in response to) the one or more configuration parameters not comprising the enable-default-TCI-state-per-coresetpoolindex parameter. The wireless device 2005 may receive the downlink signal based on the TCI state among the first TCI state and the second TCI state, for example, based on (e.g., in response to) the one or more configuration parameters not comprising the enable-default-TCI-state-per-coresetpoolindex parameter set to "enabled." The wireless device 2005 may receive the downlink signal based on the TCI state among the first TCI state and the second TCI state, for example, based on (e.g., in response to) the downlink signal being the aperiodic CSI-RS.

A wireless device 2005 may determine and/or select, for reception of the downlink signal, a TCI state among a first TCI state and a second TCI state. The TCI state may be identified with and/or indicated by a TCI state index that may be lowest among a first TCI state index of the first TCI state and a second TCI state index of the second TCI state. The TCI state may be the first TCI state, for example, based on the first TCI state index of the first TCI state being lower (e.g., less) than the second TCI state index of the second TCI state. The wireless device 2005 may receive the downlink signal 2020 based on the first TCI state, for example, based on the first TCI state index of the first TCI state being lower (e.g., less) than the second TCI state index of the second TCI state. The first TCI state index of the first TCI state and the second TCI state index of the second TCI state may comprise the TCI state index of the TCI state.

A TCI state may be a first TCI state, for example, based on a first octet comprising a first TCI state index of the first TCI state being lower (e.g., less) than a second octet comprising a second TCI state index of the second TCI state. A wireless device 2005 may receive a downlink signal 2020 based the first TCI state, for example, based on (e.g., in response to) the first octet comprising the first TCI state index of the first TCI state being lower (e.g., less) than the second octet comprising the second TCI state index of the second TCI state. The wireless device 2005 may receive the downlink signal 2020 based on the first TCI state, for example, based on the first TCI state index of the first TCI state having a higher ordinal position (e.g., lower octet in the control command) than the second TCI state index of the second TCI state. The wireless device 2005 may receive the downlink signal 2020 based on the first TCI state, for example, based on the first TCI state occurring first in a list, set, and/or vector of at least two TCI states in a control command.

A TCI state may be a first TCI state, for example, based on the first TCI state being associated with a first coreset pool index (e.g., CoresetPoolIndex = 0). A wireless device 2005 may receive a downlink signal 2020 based on the first TCI state, for example, based on (e.g., in response to) the first TCI state being associated with the first coreset pool index. The wireless 2005 device may receive the downlink signal 2020 based on the first TCI state, for example, based on the first TCI state being activated for the downlink receptions and/or uplink transmissions associated with the first coreset pool index. The wireless device 2005 may receive the downlink signal 2020 based on the first TCI state, for example, based on (e.g., in response to) the first TCI state being activated for the first coreset pool index. The wireless device 2005 may receive the downlink signal 2020 based on the first TCI state, for example, based on the first coreset pool index associated with the first TCI state being lower (e.g., smaller, less, etc.) than a second coreset pool index associated with a second TCI state.

The first TCI state may be associated with the second PCI different from the PCI of the cell. The second TCI state may be associated with the second PCI different from the PCI of the cell (Case 2 in FIG. 20).

The second PCI associated with the first TCI state and the second PCI associated with the second TCI state may be the same (e.g., equal). The second PCI associated with the first TCI state and the second PCI associated with the second TCI state may both indicate the same cell among at least one cell, for example, based on the second PCI associated with the first TCI state and the second PCI associated with the second TCI state being the same. The second PCI associated with the first TCI state may indicate a first cell of the at least one cell. The second PCI associated with the second TCI state may indicate a second cell of the at least one cell. The first cell and the second cell may be the same.

Also, or alternatively, a second PCI associated with a first TCI state and a second PCI associated with a second TCI state may be different. The second PCI associated with the first TCI state and the second PCI associated with the second TCI state may indicate different cells among at least one cell based on the second PCI associated with the first TCI state and the second PCI associated with the second TCI state being different. The second PCI associated with the first TCI state may indicate a first cell of the at least one cell. The second PCI associated with the second TCI state may indicate a second cell in and/or among the at least one cell. The first cell and the second cell may be different.

The wireless device may receive, in a time slot, the downlink signal. For example, the wireless device may monitor, in the time slot, downlink control channels in one or more coresets of the plurality of coresets in/within the active downlink BWP of the cell. The wireless device 2005 may not monitor, in the time slot, the downlink control channels in at least one coreset of the plurality of coresets of the active downlink BWP of the cell. The wireless device 2005 may monitor downlink control channels in one or more coresets of the plurality of coresets that occurs before the time slot. The wireless device 2005 may monitor the downlink control channels in the one or more coresets of the active downlink BWP of the cell.

A wireless device 2005 may monitor downlink control channels of one or more coresets of an active downlink BWP of a cell in a latest slot before reception of a downlink signal 2020. The wireless device 2005 may receive the downlink signal 2020 based on a TCI state, QCL assumption, and/or QCL parameters of a coreset of the one or more coresets of the plurality of coresets. One or more configuration parameters may indicate one or more coreset indexes, identifiers, and/or indicators (e.g., provided by a higher layer parameter ControlResourceSetId) for the one or more coresets. Each coreset of the one or more coresets may be identified and/or indicated by a respective coreset index of the one or more coreset indexes. A plurality of coreset indexes may comprise the one or more coreset indexes. A coreset index of the coreset may be lowest (e.g., smallest) among the one or more coreset indexes of the one or more coresets. The one or more coreset indexes may comprise the coreset index of the coreset. The one or more configuration parameters may indicate, for the coreset of the one or more coresets, the coreset index that is lowest (e.g., smallest) among the one or more coreset indexes of the one or more coresets

A wireless device 2005 may receive a downlink signal 2020 based on the TCI state, QCL assumption, and/or QCL parameters of a coreset of one or more coresets wherein a latest time slot of an active downlink BWP of a cell may be monitored. The wireless device 2005 may receive the downlink signal 2020 based on the TCI state, QCL assumption, and/or QCL parameters of the coreset, for example, based on the coreset index of the coreset being lowest (e.g., smallest) among one or more coreset indexes of the one or more coresets. The wireless device 2005 may receive the downlink signal 2020 based on the TCI state, QCL assumption, and/or QCL parameters of the coreset, for example, based on the one or more configuration parameters indicating, for the coreset, the coreset index that may be lowest (e.g., smallest) among the one or more coreset indexes of the one or more coresets.

The wireless device may receive the downlink signal based on a TCI state (or QCL assumption or QCL parameters) of a coreset of/among the plurality of coresets. A coreset index of the coreset may be lowest/smallest among the plurality of coreset indexes of the plurality of coresets. The plurality of coreset indexes may comprise the coreset index of the coreset. The one or more configuration parameters may indicate, for the coreset of the plurality of coresets, the coreset index that is lowest/smallest among the plurality of coreset indexes of the plurality of coresets.

A wireless device 2005 may receive a downlink signal 2020 based on a TCI state, QCL assumption, and/or QCL parameters of a coreset, for example, based on a coreset index of the coreset being lowest (e.g., smallest) among a plurality of coreset indexes of a plurality of coresets. The wireless device 2005 may receive the downlink signal 2020 based on the TCI state, QCL assumption, and/or QCL parameters of the coreset, for example, based on the one or more configuration parameters indicating, for the coreset, the coreset index that is lowest (e.g., smallest) among the plurality of coreset indexes of the plurality of coresets.

A wireless device 2005 may receive a downlink signal 2020 based on a TCI state, QCL assumption, and/or QCL parameters of a coreset, for example, based on a time offset being less than a threshold. The wireless device 2005 may receive the downlink signal 2020 based on the TCI state, QCL assumption, and/or QCL parameters of the coreset, for example, based on a first TCI state being associated with a second PCI different from a PCI of a cell and a second TCI state being associated with a second PCI different from a PCI of the cell. The wireless device 2005 may receive the downlink signal 2020 based on the TCI state, QCL assumption, and/or QCL parameters of the coreset, for example, based on both the first TCI state and the second TCI state being associated with PCI different from the PCI of the cell.

A wireless device 2005 may receive a downlink signal 2020 based on a TCI state, QCL assumption, and/or QCL parameters of a coreset, for example, based on one or more configuration parameters not comprising an enable-two-default-TCI-states parameter. The wireless device 2005 may receive the downlink signal 2020 based on the TCI state, QCL assumption, and/or QCL parameters of the coreset, for example, based on the one or more configuration parameters not comprising the enable-two-default-TCI-states parameter set to "enabled."

A wireless device 2005 may receive a downlink signal 2020 based on a TCI state, QCL assumption, and/or QCL parameters of a coreset, for example, based on one or more configuration parameters not comprising the enable-default-TCI-state-per-coresetpoolindex parameter. The wireless device 2005 may receive the downlink signal 2020 based on the TCI state, QCL assumption, and/or QCL parameters of the coreset, for example, based on the one or more configuration parameters not comprising the enable-default-TCI-state-per-coresetpoolindex parameter set to "enabled."

A wireless device 2005 may receive the downlink signal 2020 based on a TCI state, QCL assumption, and/or QCL parameters of the coreset, for example, based on a downlink signal being the aperiodic CSI-RS. The wireless device 2005 may receive the downlink signal 2020 based on the TCI state, for example, based on the downlink signal 2020 being a non-LTE-dedicated PDSCH transmission and/or reception.

The first TCI state may be associated with the PCI of the cell. The second TCI state may be associated with the second PCI different from the PCI of the cell (Case 3 in FIG. 20).

A wireless device 2005 may receive a downlink signal 2020 based on the first TCI state. The wireless device 2005 may receive the downlink signal 2020 based on the first TCI state among the first TCI state and the second TCI state, for example, based on a time offset being less than a threshold.

A wireless device 2005 may receive a downlink signal 2020 based on a first TCI state, for example, based on the first TCI state being associated with a PCI of a cell. The wireless device 2005 may receive the downlink signal 2020 based on the first TCI state, for example, based on (e.g., in response to) a second TCI state being associated with a second PCI different from the PCI of the cell. The wireless device 2005 may receive the downlink signal 2020 based on the first TCI state, for example, based on the first TCI state being associated with the PCI of the cell and the second TCI state being associated with the second PCI different from the PCI of the cell.

A wireless device 2005 may receive a downlink signal based on a first TCI state, for example, based on (e.g., in response to) one or more configuration parameters not comprising an enable-two-default-TCI-states parameter. The wireless device 2005 may receive the downlink signal 2020 based on the first TCI state, for example, based on the one or more configuration parameters not comprising the enable-two-default-TCI-states parameter set to "enabled."

A wireless device 2005 may receive a downlink signal based on a first TCI state, for example, based on one or more configuration parameters not comprising an enable-default-TCI-state-per-coresetpoolindex parameter. The wireless device 2005 may receive the downlink signal 2020 based on the first TCI state, for example, based on the one or more configuration parameters not comprising the enable-default-TCI-state-per-coresetpoolindex parameter set to "enabled." A wireless device 2005 may receive a downlink signal 2020 based on a first TCI state, for example, based on the downlink signal being an aperiodic CSI-RS. A wireless device 2005 may receive a downlink signal 2020 based on the first TCI state, for example, based on the downlink signal 2020 being a non-UE-dedicated PDSCH transmission and/or reception.

The second TCI state may be associated with the PCI of the cell. The first TCI state may be associated with the second PCI different from the PCI of the cell (Case 4 in FIG. 20).

A wireless device 2005 may receive a downlink signal 2020 based on the second TCI state. The wireless device 2005 may receive the downlink signal 2020 based on the second TCI state among the first TCI state and the second TCI state, for example, based on a time offset being less than a threshold.

A wireless device 2005 may receive a downlink signal 2020 based on a second TCI state, for example, based on the second TCI state being associated with a PCI of a cell. The wireless device 2005 may receive the downlink signal 2020 based on the second TCI state, for example, based on a first TCI state being associated with a second PCI different from the PCI of the cell. The wireless device 2005 may receive the downlink signal 2020 based on the second TCI state, for example, based on the second TCI state being associated with the PCI of the cell and the first TCI state being associated with the second PCI different from the PCI of the cell.

A wireless device 2005 may receive a downlink signal 2020 based on a second TCI state, for example, based on one or more configuration parameters not comprising an enable-two-default-TCI-states parameter. The wireless device 2005 may receive the downlink signal 2020 based on the second TCI state, for example, based on the one or more configuration parameters not comprising the enable-two-default-TCI-states parameter set to "enabled."

A wireless device 2005 may receive a downlink signal 2020 based on a second TCI state, for example, based on one or more configuration parameters not comprising an enable-default-TCI-state-per-coresetpoolindex parameter. The wireless device 2005 may receive the downlink signal 2020 based on the second TCI state, for example, based on the one or more configuration parameters not comprising the enable-default-TCI-state-per-coresetpoolindex parameter set to "enabled."

A wireless device 2005 may receive a downlink signal 2020 based on a second TCI state, for example, based on the downlink signal 2020 being an aperiodic CSI-RS. The wireless device 2005 may receive the downlink signal 2020 based on the second TCI state, for example, based on the downlink signal 2020 being a non-UE-dedicated PDSCH transmission and/or reception.

The one or more configuration parameters may comprise an enable-two-default-TCI-states parameter (e.g., *enableTwoDefaultTCI-States*) that indicates to apply two default TCI states for PDSCH receptions when at least one TCI codepoint of the one or more TCI codepoints is mapped to two TCI states (e.g., two downlink TCI states, two joint/downlink TCI states, etc.). The one or more configuration parameters may comprise the enable-two-default-TCI-states parameter set to "enabled." A wireless device 2005 may be configured with the enable-two-default-TCI-states parameter, for example, based on the one or more configuration parameters comprising the enable-two-default-TCI-states parameter. The wireless device 2005 may be configured with the enable-two-default-TCI-states parameter, for example, based on the one or more configuration parameters comprising the enable-two-default-TCI-states parameter set to "enabled."

One or more configuration parameters may comprise an enable-default-TCI-state-per-coresetpoolindex parameter (e.g., *enableDefaultTCI-StatePerCoresetPoolIndex*) that may indicate to apply a default TCI state per coreset pool index, for example, if the one or more configuration parameters indicate and/or comprise two different values (e.g., 0 and 1) for a coreset pool index parameter (e.g., CoresetPoolIndex). The one or more configuration parameters may comprise the coreset pool index parameter. The one or more configuration parameters may comprise the enable-default-TCI-state-per-coresetpoolindex parameter set to "enabled." The wireless device 2005 may be configured with the enable-default-TCI-state-per-coresetpoolindex parameter, for example, based on the one or more configuration parameters comprising the enable-default-TCI-state-per-coresetpoolindex parameter. The wireless device 2005 may be configured with the enable-default-TCI-state-per-coresetpoolindex parameter, for example, based on the one or more configuration parameters comprising the enable-default-TCI-state-per-coresetpoolindex parameter set to "enabled."

At least one TCI state among the first TCI state and the second TCI may be associated with the PCI of the cell. The at least one TCI state among the first TCI state and the second TCI may be associated with the PCI of the cell, for example, based on the first TCI state being associated with the PCI of the cell. The at least one TCI state of/among the first TCI state and the second TCI may be associated with the PCI of the cell, for example, based on the second TCI state being associated with the PCI of the cell. The at least one TCI state of/among the first TCI state and the second TCI may be associated with the PCI of the cell, for example, based on both the first TCI state and the second TCI state being associated with the PCI of the cell.

For FIG. 21, both a first TCI state and a second TCI may be associated with a PCI of a cell 2035 (e.g., Case 1). The first TCI state may be associated with the PCI of the cell, and the second TCI state may be associated with a second PCI different from the PCI of the cell 2045 (e.g., Case 3). The second TCI state may be associated with the PCI of the cell, and the first TCI state may be associated with the second PCI different from the PCI of the cell 2050 (e.g., Case 4).

A wireless device 2005 may receive a downlink signal 2020 based on a first TCI state and a second TCI state. The wireless device 2005 may receive the downlink signal 2020 based on the first TCI state and the second TCI state, for example, based on a time offset being less than a threshold. The wireless device 2005 may receive the downlink signal 2020 based on the first TCI state and the second TCI state, for example, based on at least one TCI state, of the first TCI state and the second TCI, being associated with the PCI of the cell. The wireless device 2005 may receive the downlink signal 2020 based on the first TCI state and the second TCI state, for example, based on both the first TCI state and the second TCI state being associated with the PCI of the cell. The wireless device 2005 may receive the downlink signal 2020 based on the first TCI state and the second TCI state, for example, based on the first TCI state being associated with the PCI of the cell. The wireless device 2005 may receive the downlink signal based on the first TCI state and the second TCI state, for example, based on the second TCI state being associated with the PCI of the cell.

A wireless device 2005 may receive a downlink signal 2020 based on a first TCI state and a second TCI state, for example, based on one or more configuration parameters comprising an enable-two-default-TCI-states parameter. The wireless device 2005 may receive the downlink signal 2020 based on the first TCI state and the second TCI state, for example, based on the one or more configuration parameters comprising the enable-two-default-TCI-states parameter set to "enabled."

A wireless device 2005 may receive a downlink signal 2020 based on a first TCI state and a second TCI state, for example, based on one or more configuration parameters comprising an enable-default-TCI-state-per-coresetpoolindex parameter. The wireless device 2005 may receive the downlink signal 2020 based on the first TCI state and the second TCI state, for example, based on the one or more configuration parameters comprising the enable-default-TCI-state-per-coresetpoolindex parameter set to "enabled." A wireless device 2005 may receive a downlink signal 2020 based on a first TCI state and a second TCI state, for example, based on the downlink 2020 signal being a UE-dedicated PDSCH transmission and/or reception.

The first TCI state may be associated with the second PCI different from the PCI of the cell. The second TCI state may be associated with the second PCI different from the PCI of the cell (Case 2 in FIG. 21). The discussion on different PCIs of the first TCI state and the second TCI state for Case 2 in FIG. 20 is also applicable for Case 2 in FIG. 21.

A wireless device 2005 may receive a downlink signal 2020 based on a TCI state, QCL assumption, and/or QCL parameters of a coreset with a lowest coreset index and a default TCI state among a first TCI state and a second TCI state. The wireless device 2005 may receive the downlink signal 2020 based on the TCI state, QCL assumption, and/or QCL parameters of the coreset and a default TCI state, for example, based on a time offset being less than a threshold.

A wireless device 2005 may receive a downlink signal 2020 based on a TCI state, QCL assumption, and/or QCL parameters of a coreset and a default TCI state, for example, based on a first TCI state being associated with a second PCI different from a PCI of a cell and a second TCI state being associated with a second PCI different from the PCI of the cell. The wireless device 2005 may receive the downlink signal 2020 based on the TCI state, QCL assumption, and/or QCL parameters of the coreset and the default TCI state, for example, based on both the first TCI state and the second TCI state being associated with PCIs different from the PCI of the cell.

A wireless device 2005 may receive a downlink signal 2020 based on a TCI state, QCL assumption, and/or QCL parameters of a coreset and a default TCI state, for example, based on one or more configuration parameters not comprising an enable-two-default-TCI-states parameter. The wireless device 2005 may receive the downlink signal 2020 based on the TCI state, QCL assumption, and/or QCL parameters of the coreset and the default TCI state, for example, based on the one or more configuration parameters not comprising the enable-two-default-TCI-states parameter set to "enabled."

A wireless device 2005 may receive a downlink signal 2020 based on a TCI state, QCL assumption, and/or QCL parameters of a coreset and a default TCI state, for example, based on one or more configuration parameters not comprising an enable-default-TCI-state-per-coresetpoolindex parameter. The wireless device 2005 may receive the downlink signal 2020 based on the TCI state, QCL assumption, and/or QCL parameters of the coreset and the default TCI state, for example, based on the one or more configuration parameters not comprising the enable-default-TCI-state-per-coresetpoolindex parameter set to "enabled." A wireless device 2005 may receive a downlink signal 2020 based on a TCI state, QCL assumption, and/or QCL parameters of a coreset and a default TCI state, for example, based on the downlink signal being a UE-dedicated PDSCH transmission and/or reception.

A default TCI state may be identified and/or indicated by a TCI state index that may be lowest among a first TCI state index of a first TCI state and a second TCI state index of a second TCI state. The default TCI state may be the first TCI state, for example, based on the first TCI state index of the first TCI state being lower (e.g., less) than the second TCI state index of the second TCI state. A wireless device 2005 may receive the downlink signal 2020 based on the TCI state of the coreset and the first TCI state, for example, based on the first TCI state index of the first TCI state being lower (e.g., less) than the second TCI state index of the second TCI state. The first TCI state index of the first TCI state and the second TCI state index of the second TCI state may comprise a TCI state index of the default TCI state.

A default TCI state may be a first TCI state, for example, based on a first octet comprising a first TCI state index of the first TCI state being lower (e.g., less) than a second octet comprising a second TCI state index of a second TCI state. A wireless device 2005 may receive the downlink signal 2020 based on the TCI state of the coreset and the first TCI state, for example, based on the first octet, comprising the first TCI state index of the first TCI state, being lower (e.g., less) than the second octet comprising the second TCI state index of the second TCI state. The wireless device 2005 may receive the downlink signal 2020 based on the TCI state of the coreset and the first TCI state, for example, based on the first TCI state index of the first TCI state having a higher ordinal position (e.g., lower octet in the control command) than the second TCI state index of the second TCI state. The wireless device 2005 may receive the downlink signal 2020 based on the TCI state of the coreset and the first TCI state, for example, based on the first TCI state occurring first in a list, set, and/or vector of at least two TCI states in a control command.

The downlink signal may be repetitions of a PDSCH transmission/reception. The wireless device may receive one or more first repetitions of the repetitions of the PDSCH transmission/reception based on the TCI state of the coreset. The wireless device may receive one or more second repetitions of the repetitions of the PDSCH transmission/reception based on the default TCI state.

One or more first repetitions may comprise a starting, initial, and/or earliest repetition of repetitions of a PDSCH transmission and/or reception. A wireless device 2005 may receive the starting, initial, and/or earliest repetition of the repetitions of the PDSCH transmission and/or reception based on a TCI state of a coreset.

One or more configuration parameters may indicate cyclic mapping. A wireless device 2005 may receive repetitions of a PDSCH transmission and/or reception that may be in an order of {the TCI state of the coreset, the default TCI state, the TCI state of the coreset, the default TCI state, ...}. The one or more configuration parameters may indicate sequential mapping. The wireless device 2005 may receive the repetitions of the PDSCH transmission/reception that may be in an order of {the TCI state of the coreset, the TCI state of the coreset, the default TCI state, the default TCI state, ... }.

One or more second repetitions may comprise a starting, initial, and/or earliest repetition of repetitions of a PDSCH transmission and/or reception. A wireless device 2005 may receive the starting, initial, and/or earliest repetition of the repetitions of the PDSCH transmission and/or reception based on the default TCI state. The one or more configuration parameters may indicate cyclic mapping. The wireless device 2005 may receive the repetitions of the PDSCH transmission and/or reception that may be in an order of {the default TCI state, the TCI state of the coreset, the default TCI state, the TCI state of the coreset, ...}. The one or more configuration parameters may indicate sequential mapping. The wireless device may receive the repetitions of the PDSCH transmission and/or reception in an order of {the default TCI state, the default TCI state, the TCI state of the coreset, the TCI state of the coreset, ...}.

Receiving the downlink signal based on the first TCI state (or a first antenna port quasi co-location property/assumption/parameter) may comprise at least one DM-RS antenna port of the downlink signal being quasi co-located (QCL-ed) with the first reference signal indicated by (or in) the first TCI state. The at least one DM-RS antenna port of the downlink signal may be quasi co-located (QCL-ed) with the first reference signal indicated by (or in) the first TCI state.

At least one DM-RS antenna port of a downlink signal 2020 may be quasi co-located (QCL-ed) with a first reference signal with respect to at least one of: Doppler shift, Doppler spread, average delay, delay spread, and spatial RX parameters. The least one DM-RS antenna port of the downlink signal 2020 may be quasi co-located (QCL-ed) with the first reference signal with respect to at least one of: Doppler shift, Doppler spread, average delay, delay spread, spatial RX parameters if applicable. The at least one DM-RS antenna port of the downlink signal may be quasi co-located (QCL-ed) with the first reference signal with respect to Doppler shift, Doppler spread, average delay, delay spread, and spatial RX parameters if applicable. At least one DM-RS antenna port of a downlink signal 2020 may be QCL-ed with a first reference signal with respect to a first quasi co-location type indicated by and/or in a first TCI state.

Receiving a downlink signal 2020 based on a first TCI state may comprise applying the first TCI state and/or a first antenna port quasi co-location property, assumption, and/or parameter for a reception and/or to receive the downlink signal 2020. A wireless device 2005 may measure the downlink signal 2020 (e.g., aperiodic CSI-RS) based on the first TCI state. The wireless device 2005 may determine a radio link quality (e.g., L1-RSRP, L-RSRP, SINR, SNR, BLER) of the downlink signal 2020 based on the first TCI state. The wireless device 2005 may measure a radio link quality (e.g., L1-RSRP, L-RSRP, SINR, SNR, BLER) of a first reference signal to determine the radio link quality of the downlink signal 2020. The wireless device 2005 may send (e.g., transmit) an uplink report indicating the radio link quality of the downlink signal. The uplink report may be, for example, a CSI report. The uplink report may be, for example, an aperiodic CSI report. The wireless device 2005 may receive the downlink signal with a spatial domain reception/receiving filter and/or beam that is determined based on the first reference signal indicated by the first TCI state. The wireless device may receive the downlink signal 2020 using a spatial domain reception and/or receiving filter and/or beam that may be, or may be similar to, a spatial domain reception and/or receiving filter and/or beam used to receive the first reference signal indicated by the first TCI state.

Receiving the downlink signal based on the second TCI state (or a second antenna port quasi co-location property/assumption/parameter) may comprise at least one DM-RS antenna port of the downlink signal being quasi co-located (QCL-ed) with the second reference signal indicated by (or in) the second TCI state. The at least one DM-RS antenna port of the downlink signal may be quasi co-located (QCL-ed) with the second reference signal indicated by (or in) the second TCI state.

At least one DM-RS antenna port of a downlink 2020 signal may be quasi co-located (QCL-ed) with a second reference signal with respect to at least one of: Doppler shift, Doppler spread, average delay, delay spread, and spatial RX parameters. The at least one DM-RS antenna port of the downlink signal 2020 may be quasi co-located (QCL-ed) with the second reference signal with respect to at least one of: Doppler shift, Doppler spread, average delay, delay spread, spatial RX parameters if applicable. The at least one DM-RS antenna port of the downlink signal may be quasi co-located (QCL-ed) with the second reference signal with respect to Doppler shift, Doppler spread, average delay, delay spread, and/or spatial RX parameters if applicable. At least one DM-RS antenna port of a downlink signal 2020 may be QCL-ed with a second reference signal with respect to a second quasi co-location type indicated by and/or in a second TCI state.

Receiving a downlink signal 2020 based on a second TCI state may comprise applying the second TCI state, a second antenna port quasi co-location property, assumption, and/or parameter for a reception and/or to receive the downlink signal 2020. A wireless device 2005 may measure the downlink signal 2020 (e.g., aperiodic CSI-RS) based on the second TCI state. The wireless device 2005 may determine a radio link quality (e.g., L1-RSRP, L-RSRP, SINR, SNR, BLER) of the downlink signal 2020 based on the second TCI state. The wireless device 2005 may measure a radio link quality (e.g., L1-RSRP, L-RSRP, SINR, SNR, BLER) of the second reference signal to determine the radio link quality of the downlink signal 2020. The wireless device 2005 may send (e.g., transmit) an uplink report indicating the radio link quality of the downlink signal 2020. The uplink report may be, for example, a CSI report. The uplink report may be, for example, an aperiodic CSI report. The wireless device 2005 may receive the downlink signal 2020 with a spatial domain reception and/or receiving filter and/or beam that may be determined based on the second reference signal indicated by the second TCI state. The wireless device 2005 may receive the downlink signal 2020 with the spatial domain reception and/or receiving filter and/or beam that may be, or similar to, a spatial domain reception and/or receiving filter and/or beam used to receive the second reference signal indicated by the second TCI state.

Receiving the downlink signal based on the first TCI state (e.g., a first antenna port quasi co-location property/assumption/parameter) and the second TCI state (or a second antenna port quasi co-location property/assumption/parameter) may comprise at least one first DM-RS antenna port of the downlink signal being quasi co-located (QCL-ed) with the first reference signal indicated by (or in) the first TCI state and at least one second DM-RS antenna port of the downlink signal being QCL-ed with the second reference signal indicated by (or in) the second TCI state. The at least one first DM-RS antenna port of the downlink signal may be QCL-ed with the first reference signal indicated by and/or in the first TCI state, and the at least one second DM-RS antenna port of the downlink signal may be QCL-ed with the second reference signal indicated by and/or in the second TCI state.

At least one first DM-RS antenna port of a downlink signal 2020 may be quasi co-located (QCL-ed) with a first reference signal with respect to at least one of: Doppler shift, Doppler spread, average delay, delay spread, and spatial RX parameters. The at least one first DM-RS antenna port of the downlink signal 2020 may be quasi co-located (QCL-ed) with a first reference signal with respect to at least one of: Doppler shift, Doppler spread, average delay, delay spread, spatial RX parameters, if applicable. The at least one first DM-RS antenna port of the downlink signal 2020 may be quasi co-located (QCL-ed) with the first reference signal with respect to Doppler shift, Doppler spread, average delay, delay spread, and spatial RX parameters, if applicable.

At least one first DM-RS antenna port of a downlink signal 2020 may be QCL-ed with a first reference signal with respect to a first quasi co-location type indicated by and/or in a first TCI state. The at least one second DM-RS antenna port of the downlink signal 2020 may be quasi co-located (QCL-ed) with a second reference signal with respect to at least one of: Doppler shift, Doppler spread, average delay, delay spread, and spatial RX parameters. The at least one second DM-RS antenna port of the downlink signal 2020 may be quasi co-located (QCL-ed) with the second reference signal with respect to at least one of: Doppler shift, Doppler spread, average delay, delay spread, spatial RX parameters if applicable. The at least one second DM-RS antenna port of the downlink signal 2020 may be quasi co-located (QCL-ed) with the second reference signal with respect to Doppler shift, Doppler spread, average delay, delay spread, and spatial RX parameters if applicable.

At least one second DM-RS antenna port of a downlink signal 2020 may be QCL-ed with a second reference signal with respect to a second quasi co-location type indicated by and/or in the second TCI state. At least one first DM-RS antenna port and the at least one second DM-RS antenna port may be the same. The at least one first DM-RS antenna port may be DM-RS antenna ports n, n+1, n+2. The at least one second DM-RS antenna port may be DM-RS antenna ports n, n+1, n+2. The at least one first DM-RS antenna port and the at least one second DM-RS antenna port may be the same, for example, based on one or more configuration parameters indicating a single-frequency-network (SFN) scheme and/or mode for PDSCH receptions (e.g., sfnSchemePDCCH).

At least one first DM-RS antenna port and at least one second DM-RS antenna port may be different. The at least one first DM-RS antenna port may be DM-RS antenna ports n, n+1, n+2. The at least one second DM-RS antenna port may be DM-RS antenna ports n+3, n+4, n+5. The at least one first DM-RS antenna port and the at least one second DM-RS antenna port may be different, for example, based on one or more configuration parameters indicating a spatial domain multiplexing (SDM) scheme. The at least one first DM-RS antenna port and the at least one second DM-RS antenna port may be different, for example, based on DCI 2015 scheduling a downlink signal 2020 indicating a spatial domain multiplexing (SDM) scheme.

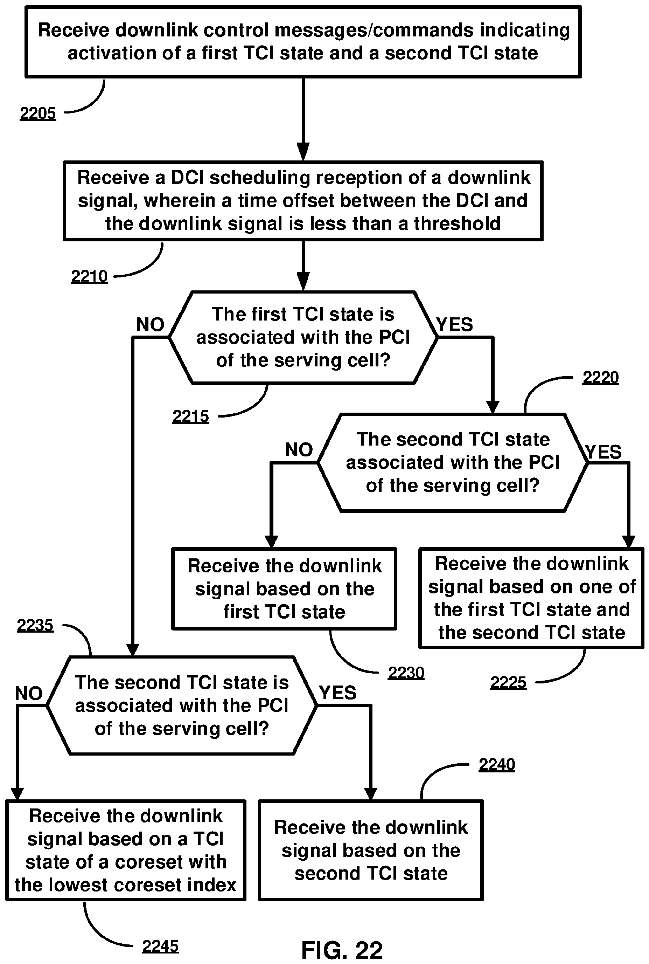

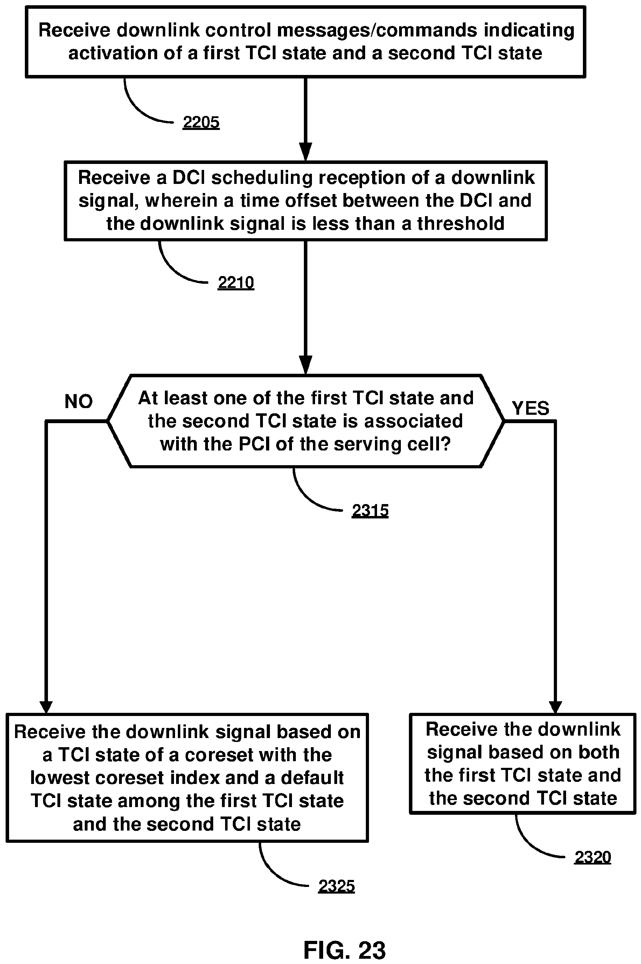

FIG. 22 and FIG. 23 show example flow charts of default beam selection. In step 2205, of FIG. 22, a wireless device may receive, from a base station, one or more downlink control messages and/or commands (e.g., DCIs, MAC-CEs, etc.) that may indicate activation of at least two TCI states for a cell. The base station may send (e.g., transmit) the one or more downlink control messages and/or commands. The at least two TCI states may comprise a first transmission configuration indicator (TCI) state and a second TCI state. The first TCI state may be associated with a first physical cell index (PCI). The second TCI state may be associated with a second PCI. The cell may be, for example, a serving cell. The cell may be indicated and/or identified by a PCI.

In step 2210, a wireless device may receive downlink control information (DCI) scheduling reception of a downlink signal (e.g., PDSCH reception, aperiodic CSI-RS). A time and/or scheduling offset between the DCI and the downlink signal may be less (e.g., smaller, lower, etc.) than a threshold (e.g., timeDurationForQCL, beamSwitchTiming).

A wireless device may determine, for reception of a downlink signal, one or more TCI states, for example, based on a number of a first TCI state and a second TCI state that may be associated with a PCI of a cell. The wireless device may determine, for reception of the downlink signal, one or more TCI states, for example, based on the time and/or scheduling offset between DCI and the downlink signal being less (e.g., smaller) than a threshold. The wireless device may receive the downlink signal based on the one or more TCI states.

A number of the first and the second TCI states that may be associated with a PCI of a cell may be equal to two. The number may be equal to two if both a first TCI state and a second TCI state may be associated with the PCI of the cell (e.g., Case 1 as described herein in FIGS. 20 and 21). In step 2215, a first PCI of a first TCI state may be equal to the PCI of the cell. In step 2220, a second PCI of A second TCI state may be equal to the PCI of the cell.

In an example, the one or more TCI states that the wireless device receives the downlink signal may be the TCI state discussed in Case 1 in FIG. 20, for example, based on the number being equal to two. In step 2225, a wireless device may receive a downlink signal based on a TCI state among a first TCI state and a second TCI state, for example, based on both the first TCI state and the second TCI state being associated with the PCI of the cell. The wireless device may determine the TCI state among the first TCI state and the second TCI state based on one or more criteria (e.g., as described herein as Case 1 in FIG. 20).

One or more TCI states that a wireless device receives a downlink signal may be a first TCI state and a second TCI state (e.g., as described herein as Case 1 in FIG. 21). In FIG. 23, the wireless device may receive the downlink signal based on the first TCI state and the second TCI state, for example, based on (e.g., in response to) both the first TCI state and the second TCI state being associated with the PCI of the cell (or based on (e.g., in response to) at least one TCI state of the first TCI state and the second TCI state being associated with the PCI of the cell).

A number of a first TCI state and a second TCI state that may be associated with a PCI of a cell may be equal to one. The number may be equal to one, for example, if the first TCI state is associated with the PCI of the cell, and the second TCI state is associated with a second PCI different from the PCI of the cell (e.g., Case 3 as described herein in FIGS. 20 and 21). A first PCI of the first TCI state may be equal to the PCI of the cell. The second PCI of the second TCI state may be different from the PCI of the cell. The number may be equal to one, for example, if the second TCI state is associated with the PCI of the cell and the first TCI state is associated with the second PCI different from the PCI of the cell (e.g., Case 4 as described herein in FIGS. 20 and 21). The second PCI of the second TCI state may be equal to the PCI of the cell. The first PCI of the first TCI state may be different from the PCI of the cell.

One or more TCI states that a wireless device receives a downlink signal may be a first TCI state (e.g., as described herein as Case 3 in FIG. 20), for example, based on a number being equal to one. The one or more TCI states that the wireless device receives the downlink signal may be the first TCI state, for example, based on the first TCI state being associated with a PCI of the cell. The wireless device may receive the downlink signal based on the first TCI state, for example, based on (e.g., in response to) the first TCI state being associated with the PCI of the cell. The wireless device may receive the downlink signal based on the first TCI state, for example, based on (e.g., in response to) the second TCI state being associated with a second PCI different from the PCI of the cell.

In step 2215, a first PCI of a first TCI state may be equal to the PCI of the cell. In step 2220, a second PCI of a second TCI state may be equal to a second PCI different than the PCI of the cell. In step 2230, of FIG. 22, a wireless device may receive a downlink signal based on a first TCI state, for example, based on the first TCI state being associated with the PCI of the cell and a second TCI state being associated with a second PCI different from the PCI of the cell.

One or more TCI states that a wireless device receives a downlink signal may be a second TCI state (e.g., as described herein as Case 4 in FIG. 20), for example, based on a number being equal to one. The one or more TCI states that the wireless device receives the downlink signal may be a second TCI state, for example, based on the second TCI state being associated with a PCI of a cell. The wireless device may receive the downlink signal based on the second TCI state, for example, based on (e.g., in response to) the second TCI state being associated with the PCI of the cell. The wireless device may receive the downlink signal based on the second TCI state, for example, based on (e.g., in response to) a first TCI state being associated with a first PCI different from the PCI of the cell.

In step 2215, a first PCI of a first TCI state may be associated with a first PCI different from a PCI of a cell. In step 2235, a second PCI of a second TCI state may be equal to the PCI of the cell. In step 2240, of FIG. 22, a wireless device may receive a downlink signal based on the second TCI state, for example, based on the second TCI state being associated with the PCI of the cell and the first TCI state being associated with the first PCI different from the PCI of the cell.

One or more TCI states that a wireless device receives a downlink signal may be a first TCI state and a second TCI state (e.g., as d herein as Case 3 and 4 in FIG. 21), for example, based on a number being equal to one. In 2315, of FIG. 23, a wireless device may receive a downlink signal based on the first TCI state and the second TCI state, for example, based on the first TCI state and/or the second TCI state being associated with the PCI of the cell, and/or based on at least one TCI state of the first TCI state and the second TCI state being associated with the PCI of the cell.

A number of a first TCI and a second TCI states that may be associated with a PCI of a cell may be equal to zero. In step 2215, a first PCI of the first TCI state may be different from the PCI of the cell, and in step 2235, a second PCI of the second TCI state may be different from the PCI of the cell. The number may be equal to zero, for example, if the first TCI state is associated with a first PCI different from the PCI of the cell, and the second TCI state is associated with a second PCI different from the PCI of the cell.

One or more TCI states that a wireless device receives a downlink signal may be a TCI state and/or QCL parameters of a coreset with a lowest coreset index (e.g., as described herein as Case 2 in FIG. 20), for example, based on the number being equal to zero. The one or more TCI states that the wireless device receives the downlink signal may be the TCI state of the coreset with the lowest coreset index, for example, based on both the first TCI state and the second TCI state being associated with PCIs different from the PCI of the cell. In step 2245, of FIG. 22, the wireless device may receive the downlink signal based on the TCI state of the coreset, for example, based on (e.g., in response to) both the first TCI state and the second TCI being associated with PCIs different from the PCI of the cell. The wireless device may receive the downlink signal based on the TCI state of the coreset, for example, based on at least one TCI state of the first TCI state and the second TCI state not being associated with the PCI of the cell.

One or more TCI states that a wireless device receives a downlink signal may be a TCI state of a coreset with a lowest coreset index and/or a default TCI state among a first TCI state and a second TCI state (e.g., as described herein as Case 2 in FIG. 21), for example, based on a number being equal to zero. In step 2325, of FIG. 23, the wireless device may receive the downlink signal based on the TCI state of the coreset and/or the default TCI state, for example, based on both the first TCI state and the second TCI being associated with PCI different from the PCI of the cell. The wireless device may receive the downlink signal based on the TCI state of the coreset and/or the default TCI state, for example, based on (e.g., in response to) at least one TCI state of the first TCI state and the second TCI state not being associated with the PCI of the cell.

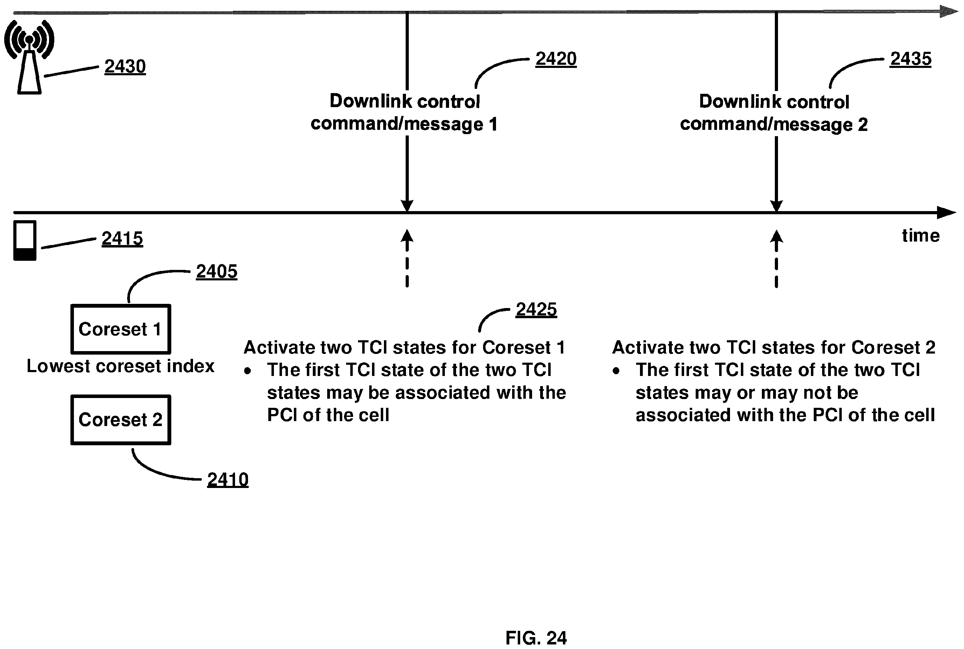

FIG. 24 shows an example of TCI state activation for coresets. A plurality of coresets may comprise a first coreset 2405 (e.g., Coreset 1). One or more configuration parameters may indicate, for the first coreset 2405, a coreset index. The plurality of coreset indexes may comprise the coreset index of the coreset. The coreset index may be a lowest (e.g., smallest) index among the plurality of coreset indexes of the plurality of coresets. The one or more configuration parameters may indicate, for the first coreset 2405 of the plurality of coresets, the coreset index that may be a lowest (e.g., smallest) index among the plurality of coreset indexes of the plurality of coresets.

A coreset index of a first coreset 2405 may be lowest (e.g., smallest) among one or more coreset indexes of one or more coresets monitored in a latest time slot (e.g., a latest time slot as discussed herein for Case 2 in FIG. 20). The one or more coreset indexes may comprise the coreset index of the first coreset 2405. The one or more configuration parameters may indicate, for the first coreset 2405 of the one or more coresets monitored in the latest time slot, the coreset index that may be lowest (e.g., smallest) among the one or more coreset indexes of the one or more coresets. A plurality of coresets may comprise the one or more coresets. A plurality of coreset indexes may comprise, for example, the one or more coreset indexes of the one or more coresets.

A plurality of coresets may comprise a second coreset 2410 (e.g., Coreset 2). One or more configuration parameters may indicate, for the second coreset 24010, a second coreset index. A plurality of coreset indexes may comprise the second coreset index of the second coreset. The second coreset index may not be a lowest (e.g., smallest) index among the plurality of coreset indexes of the plurality of coresets. The one or more configuration parameters may not indicate, for the second coreset 2410 of the plurality of coresets, the second coreset index that may be lowest (e.g.,

smallest) among the plurality of coreset indexes of the plurality of coresets.

A second coreset index of a second coreset 2410 may not be a lowest (e.g., smallest) among one or more coreset indexes of one or more coresets monitored in a latest time slot (e.g., a latest time slot as discussed herein for Case 2 in FIG. 20). The one or more coreset indexes may comprise a second coreset index of the second coreset 2410. The one or more configuration parameters may not indicate, for the second coreset 2410 of the one or more coresets monitored in the latest time slot, for example, the second coreset index that is lowest (e.g., smallest) among the one or more coreset indexes of the one or more coresets. A plurality of coresets may comprise the one or more coresets. The plurality of coreset indexes may comprise the one or more coreset indexes of the one or more coresets.

One or more configuration parameters may not comprise a sfn-scheme-pdsch parameter (e.g., *sfnSchemePdsch* as described herein in FIG. 17). The sfn-scheme-pdsch parameter may not be included, for example, in the one or more configuration parameters. The one or more configuration parameters may not indicate a SFN scheme for PDSCH receptions, for example, based on the one or more configuration parameters not comprising the sfn-scheme-pdsch parameter.

Also, or alternatively, one or more configuration parameters may comprise a sfn-scheme-pdcch parameter (e.g., *sfnSchemePdcch* as described herein in FIG. 17). The sfn-scheme-pdcch parameter may be included, for example, in the one or more configuration parameters. The one or more configuration parameters may indicate a SFN scheme for PDCCH receptions, for example, based on the one or more configuration parameters comprising the sfn-scheme-pdcch parameter. The sfn-scheme-pdcch parameter may, for example, be set to "sfnSchemeA."

One or more configuration parameters may not comprise, for a coreset, a follow-unified-TCI-state parameter (e.g., followUnifiedTCIstate) that may indicate to apply one or more activated and/or indicated unified TCI states (e.g., DL only TCI states or Joint TCI states) to the coreset (or to monitor downlink control channels via/in the coreset). The one or more configuration parameters may not comprise, for the coreset, the follow-unified-TCI-state parameter set to "enabled."

Also, or alternatively, one or more configuration parameters may comprise, for a coreset, a follow-unified-TCI-state parameter (e.g., followUnifiedTCIstate) that may indicate to apply one or more activated and/or indicated unified TCI states (e.g., DL only TCI states or Joint TCI states) to the coreset (or to monitor downlink control channels via/in the coreset). The one or more configuration parameters may comprise, for the coreset, the follow-unified-TCI-state parameter set to "enabled."

A wireless device 2415 may receive a first downlink control command and/or message 2420 (e.g., media access control control element (MAC-CE), DCI, Downlink control command and/or message 1 in FIG. 24) indicating an activation of at least two TCI states for a coreset with a lowest coreset index 2425 (e.g., Coreset 1 2405). A base station 2430 may send (e.g., transmit) the first downlink control command and/or message 2420. The at least two TCI states may comprise a first TCI state and a second TCI state. The base station 2430 may determine to send (e.g., transmit) the first downlink control command and/or message 2420 indicating activation of the at least two TCI states for the coreset with the lowest coreset index (e.g., Coreset 1 2405). The one or more configuration parameters may indicate, for the first TCI state, a first TCI state index. The one or more configuration parameters may indicate, for the second TCI state, a second TCI state index.

A first downlink control command and/or message 2420 (e.g., DCI) may indicate a TCI codepoint that may be mapped to, may indicate, and/or may comprises at least two TCI states. A wireless device 2415 may receive a MAC-CE indicating mapping of the at least two TCI states to the TCI codepoint. The base station 2430 may send (e.g., transmit) the MAC-CE. One or more TCI codepoints (e.g., as described herein in FIG. 18) may comprise the TCI codepoint. A subset of TCI states (e.g., as described herein in FIG. 18) may comprise the at least two TCI states.

A MAC-CE may comprise a plurality of fields. A first field of the plurality of fields may indicate a first TCI state. The first field may comprise, for example, a first TCI state index indicating and/or identifying the first TCI state. The first field may occur and/or be located in a first octet of the MAC-CE. A second field of the plurality of fields may indicate a second TCI state. The second field may comprise, for example, a second TCI state index indicating and/or identifying the second TCI state. The second field may occur and/or be located in a second octet of the MAC-CE. The first octet may be lower (e.g., less) than the second octet. The first octet may be Octet 5, and the second octet may be Octet 6. The first octet may be Octet 1, and the second octet may be Octet 2. The first octet may be Octet 9, and the second octet may be Octet 10. The base station 2430 may order the first TCI state index and the second TCI state index based on an ordinal position in the MAC-CE. Octet n of the MAC-CE may comprise a first TCI state index identifying and/or indicating a first TCI state, and Octet m of the MAC-CE may comprise the second TCI state index identifying and/or indicating the second TCI state, for example, if n < m.

A first downlink control command and/or message 2420 (e.g., MAC-CE) may comprise a plurality of fields. A first field of the plurality of fields may indicate a first TCI state. The first field may comprise, for example, a first TCI state index indicating and/or identifying the first TCI state. The first field may occur and/or be located in a first octet of the first downlink control command and/or message 2420. A second field of the plurality of fields may indicate a second TCI state. The second field may comprise, for example, a second TCI state index indicating and/or identifying the second TCI state. The second field may occur and/or be located in a second octet of the first downlink control command and/or message 2420. The first octet may be lower (e.g., less) than the second octet. The first octet may be Octet 5, and the second octet may be Octet 6. The first octet may be Octet 1, and the second octet may be Octet 2. The first octet may be Octet 9, and the second octet may be Octet 10. The base station 2430 may order the first TCI state index and the second TCI state index based on an ordinal position in the first downlink control command and/or message 2420. Octet n of the first downlink control command and/or message 2420 may comprise the first TCI state index identifying and/or indicating the first TCI state, and Octet m of the first downlink control command and/or message 2420 may comprise the second TCI state index identifying and/or indicating the second TCI state, for example, if n < m. A third field of the plurality of fields may comprise a coreset index of a coreset.

A first TCI state may be associated with a PCI of a cell. The first TCI state may be associated with a PCI of a cell, for example, based on a first downlink control command and/or message 2420 indicating an activation of at least two TCI states for a coreset with a lowest coreset index. The first TCI state that may have a higher ordinal position (e.g., lower octet in the first downlink control command and/or message 2420 or the MAC-CE) may be associated with the PCI of the cell, for example, based on the first downlink control command and/or message 2420 indicating activation of the at least two TCI states for the coreset with the lowest coreset index (e.g., Coreset 1 2405). A second TCI state may be, for example, associated with the PCI of the cell. The second TCI state may be, for example, associated with a second PCI different from the PCI of the cell. The second TCI state may or alternatively, may not be associated with the PCI of the cell.

A base station 2430 may select and/or determine a first TCI state among one or more first TCI states associated with a PCI of the cell. The base station 2430 may select and/or determine the first TCI state among the one or more first TCI states associated with the PCI of the cell, for example, based on the first downlink control command and/or message 2420 indicating an activation of at least two TCI states for a coreset with a lowest coreset index. The base station 2430 may not select and/or determine the first TCI state among one or more second TCI states associated with one or more PCIs different from the PCI of the cell Based on the first downlink control command and/or message indicating activation of the at least two TCI states for the coreset with the lowest coreset index. The base station 2430 may select and/or determine the second TCI state among the one or more first TCI states associated with the PCI of the cell and the one or more second TCI states associated with the one or more PCIs different from the PCI of the cell.

A plurality of TCI states may comprise one or more first TCI states and one or more second TCI states. A subset of TCI states may, for example, comprise the one or more first TCI states and the one or more second TCI states. One or more configuration parameters may indicate, for example, for the coreset, the one or more first TCI states and the one or more second TCI states.

A base station 2430 may include a first TCI state associated with a PCI of the cell in a first octet (e.g., a first field) of a first downlink control command and/or message 2420. The base station may include the first TCI state associated with the PCI of the cell in the first octet (e.g., the first field) of a first downlink control command and/or message 2420, for example, based on the first downlink control command and/or message 2420 indicating an activation of at least two TCI states for a coreset with a lowest coreset index. The base station 2430 may include a first TCI state index, of the first TCI state associated with the PCI of the cell, in the first octet (e.g., the first field) in the first downlink control command and/or message 2420, for example, based on the first downlink control command and/or message 2420 indicating activation of the at least two TCI states for the coreset with the lowest coreset index.

A base station 2430 may include a first TCI state associated with a PCI of a cell in a first octet (e.g., a first field) in a MAC-CE. The base station 2430 may include the first TCI state associated with the PCI of the cell in the first octet (e.g., the first field) in the MAC-CE, for example, based on a first downlink control command and/or message 2420 indicating an activation of at least two TCI states for a coreset having a lowest coreset index. The base station 2430 may include a first TCI state index, of the first TCI state associated with the PCI of the cell, in the first octet (or the first field) in the MAC-CE, for example, based on the first downlink control command and/or message 2420 indicating activation of the at least two TCI states for the coreset with the lowest coreset index. The base station 2430 may determine that the first TCI state of the at least two TCI states of the coreset with the lowest coreset index may be associated with the PCI of the cell. A second TCI state of the at least two TCI states of the coreset with the lowest coreset index may or may not be associated with the PCI of the cell.

A base station 2430 may determine that a first TCI state that may occur first in a set (e.g., a list) of at least two TCI states of and/or activated for the coreset with the lowest coreset index may be associated with a PCI of a cell. A second TCI state that may occur second in the set (e.g., the list) of the at least two TCI states of and/or activated for the coreset with the lowest coreset index may or may not be associated with the PCI of the cell.

A wireless device 2415 may receive a second downlink control command and/or message 2435 (e.g., MAC-CE, DCI, Downlink control command and/or message 2) that may indicate activation of at least two TCI states for a second coreset 2410 (e.g., Coreset 2). The base station 2430 may send (e.g., transmit) the second downlink control command and/or message 2435. The at least two TCI states may comprise a first TCI state and a second TCI state. The base station 2430 may determine to send (e.g., transmit) the second downlink control command and/or message 2435 indicating activation of the at least two TCI states for the second coreset 2410. One or more configuration parameters may indicate, for a first TCI state, a first TCI state index. The one or more configuration parameters may indicate, for a second TCI state, a second TCI state index.

A second downlink control command and/or message 2435 (e.g., DCI) may indicate a TCI codepoint that may be mapped to, indicate, and/or compromise at least two TCI states. A wireless device 2415 may receive a MAC-CE that may indicate a mapping of the at least two TCI states to the TCI codepoint. A base station 2430 may send (e.g., transmit) the MAC-CE. One or more TCI codepoints (e.g., as discussed herein in FIG. 18) may comprise the TCI codepoint. A subset of TCI states (e.g., as discussed herein in FIG. 18) may comprise the at least two TCI states.

A MAC-CE may comprise a plurality of fields. A first field of the plurality of fields may indicate a first TCI state. The first field may comprise a first TCI state index indicating and/or identifying the first TCI state. The first field may occur and/or be located in a first octet of the MAC-CE. A second field of the plurality of fields may indicate a second TCI state. The second field may comprise a second TCI state index indicating and/or identifying the second TCI state. The second field may occur and/or be located in a second octet of the MAC-CE. The first octet may be lower (e.g., less) than the second octet. The first octet may be Octet 5, for example, if the second octet is Octet 6. The first octet may be Octet 1, for example, if the second octet is Octet 2. The first octet may be Octet 9, for example, if the second octet is Octet 10. The base station 2430 may order the first TCI state index and the second TCI state index according based on an ordinal position in the MAC-CE. Octet n of the MAC-CE may comprise the first TCI state index identifying and/or indicating the first TCI state, and Octet m of the MAC-CE may comprise the second TCI state index identifying and/or indicating the second TCI state, for example, if n < m.

A second downlink control command and/or message 2435 (e.g., MAC-CE) may comprise a plurality of fields. A first field of the plurality of fields may indicate a first TCI state. The first field may comprise a first TCI state index indicating and/or identifying the first TCI state. The first field may occur and/or be located in a first octet of the second downlink control command and/or message 2435. A second field of the plurality of fields may indicate a second TCI state. The second field may comprise a second TCI state index indicating and/or identifying the second TCI state. The second field may occur and/or be located in a second octet of the second downlink control command and/or message 2435. The first octet may be lower (e.g., less) than the second octet. The first octet may be Octet 1, Octet 2, Octet 3, Octet 4, and/or Octet 5, for example, if the second octet is Octet 6. The first octet may be Octet 1, for example, if second octet may be Octet 2. The first octet may be Octet 9, for example, if the second octet is Octet 10. A base station 2430 may order the first TCI state index and the second TCI state index according to and/or based on an ordinal position in the second downlink control command and/or message 2435. Octet n of the second downlink control command and/or message 2435 may comprise the first TCI state index identifying and/or indicating the first TCI state, and Octet m of the second downlink control command and/or message 2435 may comprise the second TCI state index identifying and/or indicating the second TCI state, for example, if n < m. A third field of the plurality of fields may comprise a coreset index of a coreset.

Each TCI state of at least two TCI states of and/or activated for a second coreset may be associated with a PCI of a cell or alternatively, a second PCI different from the PCI of the cell, for example, based on a second downlink control command and/or message 2435 indicating activation of the at least two TCI states for the second coreset. Each TCI state of the at least two TCI states of and/or activated for the second coreset may be associated with the PCI of the cell or alternatively, a second PCI different from the PCI of the cell, for example, based on the one or more configuration parameters not indicating, for the second coreset, the lowest coreset index. The first TCI state may be associated with the PCI of the cell or alternatively, a second PCI different from the PCI of the cell. The second TCI state may be associated with the PCI of the cell or alternatively, a second PCI different from the PCI of the cell.

A base station 2430 may determine (e.g., select) a first TCI state among one or more first TCI states associated with a PCI of a cell and/or one or more second TCI states associated with PCIs different from the PCI of the cell, for example, based on a second downlink control command and/or message 2435 indicating activation of at least two TCI states for a second coreset. The base station 2430 may determine (e.g., select) the first TCI state among the one or more first TCI states associated with the PCI of the cell and/or the one or more second TCI states associated with PCIs different from the PCI of the cell, for example, based on the one or more configuration parameters not indicating, for the second coreset, the lowest coreset index. The base station may determine (e.g., select) the second TCI state among the one or more first TCI states associated with the PCI of the cell and/or the one or more second TCI states associated with PCIs different from the PCI of the cell.

A plurality of TCI states may comprise one or more first TCI states and/or one or more second TCI states. A subset of TCI states may comprise the one or more first TCI states and/or the one or more second TCI states. One or more configuration parameters may indicate, for a second coreset, the one or more first TCI states and the one or more second TCI states.

A base station 2430 may not determine that a first TCI state of at least two TCI states of a second coreset may be associated with a PCI of a cell, for example, based on one or more configuration parameters not indicating, for the second coreset, a lowest coreset index. A second TCI state of the at least two TCI states of the second coreset may or alternatively, may not be associated with the PCI of the cell.

Abase station 2430 may not determine that a first TCI state that occurs first in a set (e.g., a list) of at least two TCI states of and/or activated for a second coreset may be associated with a PCI of a cell, for example, based on one or more configuration parameters not indicating, for the second coreset, a lowest coreset index. A second TCI state that occurs second in the set (e.g., list) of the at least two TCI states of and/or activated for the second coreset may or alternatively, may not be associated with the PCI of the cell.

A first downlink control command and/or message 2420 (e.g., Downlink control command and/or message 1) and a second downlink control command and/or message 2435 (e.g., Downlink control command and/or message 2) may be the same downlink control command and/or message. The first downlink control command and/or message 2420 (e.g., Downlink control command and/or message 1) and the second downlink control command and/or message 2435 (e.g., Downlink control command and/or message 2) may be different downlink control command and/or messages.

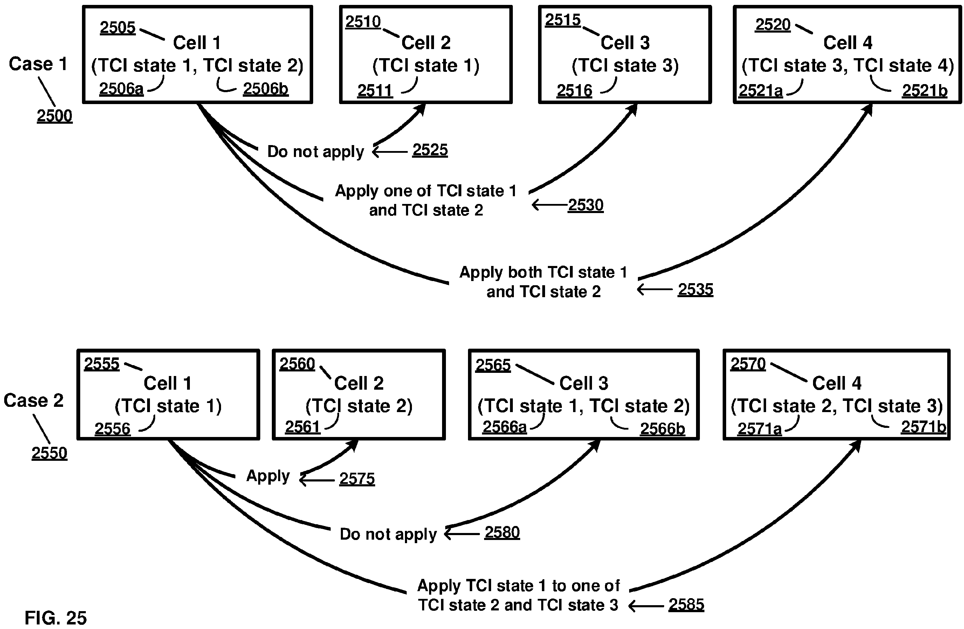

FIG. 25 shows an example of TCI state application to multiple cells. A plurality of cells may, for example, be in the same band (e.g., frequency band). The plurality of cells may operate and/or may be configured to operate in the same band. One or more configuration parameters may indicate, for the plurality of cells, a plurality cell indexes (e.g., servcellindex). The one or more configuration parameters may indicate, each cell of the plurality of cells, a respective cell index of the plurality cell indexes.

One or more configuration parameters may indicate, for a first cell of a plurality of cells, a first cell index that may be lowest (e.g., smallest) among a plurality of cell indexes of the plurality of cells. The first cell may be identified with a first cell index that is lowest (e.g., smallest) among the plurality of cell indexes of the plurality of cells.

A wireless device may determine at least two TCI states for a first cell. The at least two TCI states may be at least two default TCI states. The wireless device may receive, via the first cell and/or via an active downlink BWP of the first cell, a downlink signal (e.g., PDSCH, aperiodic CSI-RS, etc.) based on at least one TCI state of the at least two default TCI states, for example, based on (e.g., in response to) a time offset between DCI scheduling transmission of the downlink signal and the downlink signal being less than a threshold (e.g., timeDurationForQCL, beamSwitchTiming). The wireless device may use and/or apply the at least two TCI states and/or the at least two default TCI states for reception of downlink signals (e.g., PDSCH) via the first cell before the threshold. The wireless device may use the at least two TCI states and/or the at least two default TCI states for reception of downlink signals (e.g., PDSCH) if time offsets between DCIs scheduling the downlink signals and the downlink signals are less than the threshold. The wireless device may use at least one TCI state of the at least two TCI states and/or the at least two default TCI states for reception of downlink signals (e.g., PDSCH, aperiodic CSI-RS, etc.) via the first cell before the threshold. The wireless device may use at least one TCI state of the at least two TCI states and/or the at least two default TCI states for reception of downlink signals (e.g., PDSCH, aperiodic CSI-RS, etc.) if time offsets between DCIs scheduling the downlink signals and the downlink signals are less than the threshold.

At least two TCI states and/or at least two default TCI states may comprise a first TCI state and/or a second TCI state. One or more configuration parameters may indicate, for the first TCI state, a first TCI state index. The one or more configuration parameters may indicate, for the second TCI state, a second TCI state index.

A wireless device may determine at least two TCI states, for example, based on one or more criteria as described herein in FIG. 20 and FIG. 21. One or more configuration parameters may comprise, for a first cell, an enable-two-default-TCI-states parameter (e.g., *enableTwoDefaultTCI-States*). One or more configuration parameters may comprise, for a first cell, an enable-two-default-TCI-states parameter (e.g., *enableTwoDefaultTCI-States*) that is set to "enabled." The wireless device may determine the at least two TCI states (or the at least two default TCI states) for the first cell, for example, based on the one or more configuration parameters comprising, for the first cell, the enable-two-default-TCI-states parameter. The one or more configuration parameters may comprise, for example, for the first cell, an enable-default-TCI-state-per-coresetpoolindex parameter (e.g., *enableDefaultTCI-StatePerCoresetPoolIndex*). The one or more configuration parameters may comprise, for the first cell, an enable-default-TCI-state-per-coresetpoolindex parameter (e.g., *enableDefaultTCI-StatePerCoresetPoolIndex*) that may be set to "enabled." The wireless device may determine the at least two TCI states (or the at least two default TCI states) for the first cell, for example, based on the one or more configuration parameters comprising, for the first cell, the enable-default-TCI-state-per-coresetpoolindex parameter.

A base station may indicate and/or activate at least two unified, common, joint, and/or downlink TCI states for a first cell. A wireless device may receive one or more control commands (e.g., DCI, MAC-CE, Activation command at time T1 as described herein in FIG. 18, and Activation command 1 and 2 as described herein in FIG. 19) indication activation of the at least two unified, common, joint, and/or downlink TCI states for the first cell. The wireless device may determine the at least two TCI states and/or at least two default TCI states for the first cell, for example, based on receiving the one or more control commands (e.g., DCI, MAC-CE, etc.) indication activation of the at least two unified, common, joint, and/or downlink TCI states for the first cell. The at least two unified, common, joint, and/or downlink TCI states activated by the one or more control commands and the at least two TCI states and/or the at least two default TCI states may be, for example, the same. The at least two unified, common, joint, and/or downlink TCI states activated by the one or more control commands and the at least two TCI states and/or the at least two default TCI states may be, for example, different. At least one TCI codepoint of the first cell may be mapped to and/or may comprise and/or may indicate two TCI states (e.g., two downlink TCI states, two joint TCI states, two common and/or unified TCI states, etc.). The wireless device may determine the at least two TCI states and/or the at least two default TCI states for the first cell, for example, based on the at least one TCI codepoint of the first cell being mapped to, comprising, and/or indicating two TCI states.

In FIG. 25, for Case 1, a first cell may be Cell 1, and at least two TCI states and/or at least two default TCI states may be a TCI state 1 and a TCI state 2. The first TCI state may be TCI state 1 and the second TCI state is TCI state 2.

A wireless device may determine a TCI state for a second cell of a plurality of cells. A TCI state may be a default TCI state. The TCI state may be a single TCI state. The wireless device may determine a single (e.g., a default) TCI state for the second cell. The TCI state may be the single (e.g., default) TCI state. The wireless device may receive, via the second cell, a downlink signal (e.g., PDSCH, aperiodic CSI-RS, etc.) based on the TCI state (or the default TCI state), for example, based on (e.g., in response to) a time offset between DCI scheduling transmission of the downlink signal and the downlink signal being less than a threshold (e.g., timeDurationForQCL, beamSwitchTiming). The wireless device may use and/or apply the TCI state and/or the default TCI state for reception of downlink signals (e.g., PDSCH, aperiodic CSI-RS, etc.) via the second cell before a threshold. The wireless device may use the TCI state and/or the default TCI state for reception of downlink signals (e.g., PDSCH, aperiodic CSI-RS, etc.) via the second cell if time offsets between DCIs scheduling the downlink signals and the downlink signals are less than the threshold.

A wireless device may determine a single (e.g. default) TCI state for a second cell, for example, based on one or more configuration parameters not comprising, for the second cell, an enable-two-default-TCI-states parameter (e.g., *enable TwoDefaultTCI-States*). The wireless device may determine a single (e.g., default) TCI state for the second cell, for example, based on the one or more configuration parameters not comprising, for the second cell, an enable-two-default-TCI-states parameter that is set to "enabled." The base station may indicate and/or activate one or two unified, joint, and/or downlink TCI states for the second cell. The wireless device may receive one or more control commands (e.g., DCI, MAC-CE, etc.) that may indicate activation of the one or two unified, joint, downlink TCI states for the second cell.

A wireless device may determine a single (e.g., default) TCI state for a second cell, for example, based on one or more configuration parameters not comprising, for the second cell, an enable-default-TCI-state-per-coresetpoolindex parameter (e.g., *enableDefaultTCI-StatePerCoresetPoolIndex*). The wireless device may determine a single (e.g., default) TCI state for the second cell, for example, based on the one or more configuration parameters not comprising, for the second cell, an enable-default-TCI-state-per-coresetpoolindex parameter that is set to "enabled." The base station may indicate and/or activate one or two unified, joint, and/or downlink TCI states for the second cell. The wireless device may receive one or more control commands (e.g., DCI, MAC-CE, etc.) that may indicate activation of the one or two unified, joint, and/or downlink TCI states for the second cell.

One or more configuration parameters may comprise, for a second cell, an enable-two-default-TCI-states parameter (e.g., *enableTwoDefaultTCI-States*). The one or more configuration parameters may comprise, for the second cell, an enable-two-default-TCI-states parameter (e.g., *enableTwoDefaultTCI-States*) that may be set to "enabled." The one or more configuration parameters may comprise, for the second cell, an enable-default-TCI-state-per-coresetpoolindex parameter (e.g., *enableDefaultTCI-StatePerCoresetPoolIndex*). The one or more configuration parameters may comprise, for the second cell, an enable-default-TCI-state-per-coresetpoolindex parameter (e.g., *enableDefaultTCI-StatePerCoresetPoolIndex*) that may be set to "enabled." The base station may indicate and/or activate a single unified, joint, and/or downlink TCI state for the second cell. The wireless device may receive a control command (e.g., DCI, MAC-CE, etc.) that may indicate activation of the single unified, joint, and/or downlink TCI state for the second cell. The wireless device may determine a single (e.g., default) TCI state for the second cell, for example, based on receiving the control command (e.g., DCI, MAC-CE, etc.) indication activation of the single unified, joint, and/or downlink TCI state for the second cell. The single unified, joint, and/or downlink TCI state activated by the control command and the single (e.g., default) TCI state may be the same. The single unified, joint, and/or downlink TCI state activated by the control command and the single (e.g., default) TCI state may be different. At least one TCI codepoint of the second cell may not be mapped to, may not comprise, and/or may not indicate two TCI states (e.g., two downlink TCI states, two joint TCI states, two common/unified TCI states, etc.). The wireless device may determine a single (e.g., default) TCI state for the second cell, for example, based on the at least one TCI codepoint of the second cell not being mapped to, not comprising, and/or not indicating two TCI states. The wireless device may determine a single (e.g., default) TCI state for the second cell, for example, based on each TCI codepoint of the second cell being mapped to, comprising, and/or indicating a single TCI state (e.g., a single downlink TCI state, a single joint TCI state, a single common and/or unified TCI state).

At least two TCI states and/or at least two default TCI states of the first cell may comprise a TCI state and/or a default TCI state of a second cell. One of the at least two TCI states of the first cell may be the same as the TCI state of the second cell. The TCI state may be a subset of the at least two TCI states. The first TCI state of the at least two TCI states and the TCI state may be the same. The second TCI state of the at least two TCI states and the TCI state may be the same.

In FIG. 25, in Case 1, a first cell may be Cell 1, and a second cell may be Cell 2. TCI state 1 of Cell 1 and TCI state 1 of Cell 2 may be the same. At least two TCI states of Cell 1 (e.g., TCI state 1 and TCI state 2) may comprise the TCI state (e.g., TCI state 1) of Cell 2.

A wireless device may not apply at least two TCI states of a first cell to a second cell, for example, based on the at least two TCI states and/or the least two default TCI states of the first cell comprising the TCI state and/or the default TCI state of the second cell. The wireless device may not apply the at least two TCI states of the first cell to the second cell, for example, based on the TCI state (or the default TCI state) of the second cell being a subset of the at least two TCI states (or the at least two default TCI states) of the first cell.

A wireless device may not prioritize at least two TCI states of a first cell, for example, based on the at least two TCI states and/or at least two default TCI states of the first cell comprising a TCI state and/or a default TCI state of the second cell. The wireless device may not prioritize the at least two TCI states of the first cell, for example, based on the TCI state and/or the default TCI state of the second cell being a subset of the at least two TCI states and/or the at least two default TCI states of the first cell.

A wireless device may not apply at least two TCI states of a first cell to a second cell, for example, based on determining a single and/or a default TCI state for the second cell. The wireless device may not apply the at least two TCI states of the first cell to the second cell, for example, based on applying a single and/or default TCI state for the second cell.

A wireless device may not prioritize at least two TCI states of a first cell, for example, based on determining a single and/or default TCI state for a second cell. The wireless device may not prioritize the at least two TCI states of the first cell, for example, based on applying the single and/or the default TCI state for the second cell.

A wireless device may not apply at least two TCI states of a first cell to a second cell, for example, based on one or more configuration parameters not comprising, for the second cell, an enable-two-default-TCI-states parameter (e.g., *enableTwoDefaultTCI-States*). The wireless device may not prioritize the at least two TCI states of the first cell, for example, based on the one or more configuration parameters not comprising, for the second cell, an enable-two-default-TCI-states parameter (e.g., *enableTwoDefaultTCI-States).*

A wireless device may not apply at least two TCI states of a first cell to a second cell, for example, based on one or more configuration parameters not comprising, for the second cell, an enable-default-TCI-state-per-coresetpoolindex parameter (e.g., *enableDefaultTCI-StatePerCoresetPoolIndex*). The wireless device may not prioritize the at least two TCI states of the first cell, for example, based on the one or more configuration parameters not comprising, for the second cell, an enable-default-TCI-state-per-coresetpoolindex parameter (e.g., *enableDefaultTCI-StatePerCoresetPoolIndex*).

A wireless device may not apply at least two TCI states of a first cell to a second cell, for example, based on receiving a control command (e.g., DCI, MAC-CE, etc.) that indicates activation of a single unified, joint, and/or downlink TCI state for the second cell. The wireless device may not prioritize the at least two TCI states of the first cell, for example, based on receiving the control command (e.g., DCI, MAC-CE, etc.) that indicates activation of the single unified, joint, and/or downlink TCI state for the second cell.

A wireless device may not apply at least two TCI states of a first cell to a second cell, for example, based on the at least one TCI codepoint of the second cell not being mapped to, not comprising, and/or not indicating two TCI states. The wireless device may not prioritize the at least two TCI states of the first cell, for example, based on the at least one TCI codepoint of the second cell not being mapped to, not comprising, and/or not indicating two TCI states.

A wireless device may not receive, via a second cell, downlink signals based on at least two TCI states of a first cell, for example, based on not applying the at least two TCI states of the first cell. The wireless device may receive, via the second cell, a downlink signal based on a TCI state and/or a default TCI state of the second cell, for example, based on (e.g., in response to) not applying the at least two TCI states of the first cell, if a time offset between DCI scheduling a transmission of a downlink signal (e.g., PDSCH, aperiodic CSI-RS, etc.), via the second cell, and the downlink signal is less than a threshold (e.g., timeDurationForQCL, beamSwitchTiming). The wireless device may use the TCI state and/or the default TCI state of the second cell for reception of downlink signals before the threshold, for example, based on (e.g., in response to) not applying the at least two TCI states of the first cell, if time offsets between the DCIs scheduling downlink signals (e.g., PDSCH, aperiodic CSI-RS, etc.), via the second cell, and the downlink signals are less (e.g., lower) than the threshold.

In FIG. 25, in Case 1, a wireless device may not apply at least two TCI states of a first cell (e.g., TCI state 1 and TCI state 2) to a TCI state (e.g., TCI state 1) of a second cell (e.g., Cell 2). The wireless device may use and/or apply the TCI state (e.g., TCI state 1) of the second cell (e.g., Cell 2) for reception of downlink signals (e.g., PDSCH, aperiodic CSI-RS, etc.) via the second cell (e.g., Cell 2) before a threshold. The wireless device may use and/or apply the TCI state (e.g., TCI state 1) of the second cell (e.g., Cell 2) for reception of downlink signals (e.g., PDSCH, aperiodic CSI-RS, etc.) of the second cell (e.g., Cell 2) if time offsets between DCIs scheduling the downlink signals and the downlink signals are less than the threshold.

At least two TCI states and/or at least two default TCI states of a first cell may not comprise a TCI state and/or a default TCI state of a second cell. Each of the at least two TCI states of the first cell may be different from the TCI state of the second cell. A first TCI state and/or a second TCI state of the at least two TCI states and the TCI state of the second cell may be different.

In FIG. 25, in Case 1, a first cell may be Cell 1, and a second cell may be Cell 3. At least two TCI states of Cell 1 (e.g., TCI state 1 and TCI state 2) may not comprise a TCI state (e.g., TCI state 3) of Cell 3.

A wireless device may apply a selected TCI state, of at least two TCI states, of a first cell to a second cell. The wireless device may prioritize the selected TCI state of the first cell. The wireless device may apply the selected TCI state of the at least two TCI states of the first cell to the second cell, for example, based on a first cell index of the first cell being lowest and/or smallest among a plurality of cell indexes of a plurality of cells. The wireless device may prioritize the selected TCI state of the first cell, for example, based on the first cell index of the first cell being lowest and/or smallest among the plurality of cell indexes of the plurality of cells.

A wireless device may apply a selected TCI state of at least two TCI states of a first cell to a second cell, for example, based on the at least two TCI states and/or at least two default TCI states of the first cell not comprising a TCI state and/or a default TCI state of the second cell. The wireless device may apply the selected TCI state of the at least two TCI states of the first cell to the second cell, for example, based on each TCI state of the at least two TCI states and/or the at least two default TCI states of the first cell being different from the TCI state and/or the default TCI state of the second cell.

A wireless device may prioritize a selected TCI state of a first cell, for example, based on at least two TCI states and/or at least two default TCI states of the first cell not comprising a TCI state and/or a default TCI state of a second cell. The wireless device may prioritize the selected TCI state of the first cell, for example, based on each TCI state of the at least two TCI states and/or the at least two default TCI states of the first cell being different from the TCI state and/or the default TCI state of the second cell.

A wireless device may receive DCI scheduling transmission of a downlink signal (e.g., PDSCH, aperiodic CSI-RS, etc.) via a second cell. The wireless device may receive, via the second cell, the downlink signal based on a selected TCI state, for example, based on (e.g., in response to) applying the selected TCI state to the second cell, if a time offset between the DCI and the downlink signal is less than a threshold (e.g., timeDurationForQCL, beamSwitchTiming). The wireless device may receive, via the second cell, the downlink signal based on the selected TCI state, for example, based on (e.g., in response to) prioritizing the selected TCI state of the first cell, if a time offset between the DCI and the downlink signal is less than a threshold (e.g., timeDurationForQCL, beamSwitchTiming).

A selected TCI state may be associated with a PCI of a cell. A wireless device may prioritize the selected TCI state of the first cell, for example, based on the selected TCI state being associated with the PCI of the cell. The wireless device may apply the selected TCI state of at least two TCI states of the first cell to a second cell, for example, based on the selected TCI state being associated with the PCI of the cell.

A selected TCI state may be identified with and/or indicated by a TCI state index that may be lowest among a first TCI state index of a first TCI state and a second TCI state index of a second TCI state. One or more configuration parameters may indicate, for the selected TCI state, the TCI state index that may be lowest among the first TCI state index of the first TCI state and the second TCI state index of the second TCI state. The selected TCI state may be the first TCI state, for example, based on the first TCI state index of the first TCI state being lower than the second TCI state index of the second TCI state. The selected TCI state may be the second TCI state, for example, based on the second TCI state index of the second TCI state being lower than the first TCI state index of the first TCI state. Both the first TCI state and the second TCI state may be associated with the PCI of the cell.

A wireless device may prioritize a selected TCI state of a first cell, for example, based on the selected TCI state being identified with and/or indicated by a TCI state index that may be lowest among a first TCI state index of a first TCI state and a second TCI state index of a second TCI state. The wireless device may apply the selected TCI state of at least two TCI states of the first cell to a second cell, for example, based on the selected TCI state being identified with and/or indicated by the TCI state index that may be lowest among the first TCI state index of the first TCI state and the second TCI state index of the second TCI state.

A wireless device may receive a control command (e.g., MAC-CE, DCI, etc.) that may indicate an activation of at least two TCI states. A selected TCI state may be a first TCI state, for example, based on a first octet comprising a first TCI state index of the first TCI state being lower (e.g., less) than a second octet comprising a second TCI state index of a second TCI state. The control command may comprise the first octet and the second octet. The first TCI state index of the first TCI state may have a higher ordinal position (e.g., lower octet in the control command) than the second TCI state index of the second TCI state. The first TCI state and the second TCI state may both be associated with a PCI of the cell. The wireless device may prioritize the first TCI state of the first cell, for example, based on the first octet comprising the first TCI state index of the first TCI state being lower (e.g., less) than the second octet comprising the second TCI state index of the second TCI state. The wireless device may apply the first TCI state of the at least two TCI states of the first cell to the second cell, for example, based on the first octet comprising the first TCI state index of the first TCI state being lower (e.g., less) than a second octet comprising the second TCI state index of the second TCI state.

A wireless device may prioritize a first TCI state of a first cell, for example, based on the first TCI state occurring first in a set (e.g., list) of at least two TCI states. The wireless device may apply the first TCI state of the at least two TCI states of the first cell to a second cell, for example, based on the first TCI state occurring first in a set (e.g., list) of the at least two TCI states. The first TCI state may be TCI state 5, for example, if the set (e.g., list) of the at least two TCI states = [TCI state 5, TCI state 8]. The first TCI state may be TCI state 8, for example, if the set (e.g., list) of the at least two TCI states = [TCI state 8, TCI state 5].

A wireless device may prioritize a selected TCI state of a first cell, for example, based on one or more configuration parameters not comprising, for a second cell, an enable-two-default-TCI-states parameter (e.g., *enableTwoDefaultTCI-States*). The wireless device may apply the selected TCI state of at least two TCI states of the first cell to the second cell, for example, based on the one or more configuration parameters not comprising, for the second cell, an enable-two-default-TCI-states parameter (e.g., *enableTwoDefaultTCI-States*).

A wireless device may prioritize a selected TCI state of a first cell, for example, based on one or more configuration parameters not comprising, for a second cell, an enable-default-TCI-state-per-coresetpoolindex parameter (e.g., *enableDefaultTCI-StatePerCoresetPoolIndex*). The wireless device may apply the selected TCI state of at least two TCI states of the first cell to the second cell, for example, based on the one or more configuration parameters not comprising, for the second cell, an enable-default-TCI-state-per-coresetpoolindex parameter (e.g., *enableDefaultTCI-StatePerCoresetPoolIndex*).

A wireless device may prioritize a selected TCI state of a first cell, for example, based on receiving a control command (e.g., DCI, MAC-CE, etc.) that indicates activation of a single unified, joint, and/or downlink TCI state for the second cell. The wireless device may apply the selected TCI state of at least two TCI states of the first cell to the second cell, for example, based on receiving the control command (e.g., DCI, MAC-CE, etc.) that indicates activation of the single unified, joint, and/or downlink TCI state for the second cell.

A wireless device may prioritize a selected TCI state of a first cell, for example, based on at least one TCI codepoint of a second cell not being mapped to, not comprising, and/or not indicating two TCI states. The wireless device may apply the selected TCI state of at least two TCI states of the first cell to the second cell, for example, based on the at least one TCI codepoint of the second cell not being mapped to, not comprising, and/or not indicating two TCI states.

A wireless device may prioritize a selected TCI state of a first cell, for example, based on each TCI codepoint of a second cell being mapped to, comprising, and/or indicating a single TCI state (e.g., a single downlink TCI state, a single joint TCI state, a single common/unified TCI state). The wireless device may apply the selected TCI state of at least two TCI states of the first cell to the second cell, for example, based on each TCI codepoint of the second cell being mapped to, comprising, and/or indicating a single TCI state (e.g., a single downlink TCI state, a single joint TCI state, a single common/unified TCI state).

In FIG. 25, in Case 1, a wireless device may apply a first TCI state (e.g., TCI state 1) of a first cell (e.g., Cell 1) to a second cell (e.g., Cell 3), for example, if the selected TCI state is the first TCI state (e.g., TCI state 1) of the first cell (e.g., Cell 1). The wireless device may use and/or apply the first TCI state (e.g., TCI state 1) of the first cell (e.g., Cell 1) for reception of downlink signals (e.g., PDSCH, aperiodic CSI-RS, etc.) via the second cell (e.g., Cell 3) before a threshold. The wireless device may use and/or apply the first TCI state (e.g., TCI state 1) of the first cell (e.g., Cell 1) for reception of downlink signals (e.g., PDSCH, aperiodic CSI-RS, etc.) of the second cell (e.g., Cell 3), for example, if a time offset between DCI scheduling a downlink signal and the downlink signal is less than the threshold.

A wireless device may not apply a second TCI state (e.g., TCI state 2) of a first cell (e.g., Cell 1) to a second cell (e.g., Cell 3). The wireless device may not use and/or apply the second TCI state (e.g., TCI state 2) of the first cell (e.g., Cell 1) for reception of downlink signals (e.g., PDSCH, aperiodic CSI-RS, etc.) via the second cell (e.g., Cell 3) before a threshold. The wireless device may not use and/or apply the second TCI state (e.g., TCI state 2) of the first cell (e.g., Cell 1) for reception of downlink signals (e.g., PDSCH, aperiodic CSI-RS, etc.) of the second cell (e.g., Cell 3), for example, if a time offset between DCI scheduling a downlink signals and the downlink signal is less than the threshold.

The wireless device may determine at least two TCI states for a second cell of the plurality of cells. The at least two TCI states may be at least two default TCI states. The wireless device may receive, via the second cell and/or via an active downlink BWP of the second cell, a downlink signal (e.g., PDSCH, aperiodic CSI-RS, etc.) based on at least one TCI state of the at least two default TCI states, for example, based on (e.g., in response to) a time offset between DCI scheduling transmission of the downlink signal and the downlink signal being less than a threshold (e.g., timeDurationForQCL, beamSwitchTiming). The wireless device may use and/or apply the at least two TCI states and/or at least two default TCI states for reception of downlink signals (e.g., PDSCH) via the second cell before the threshold. The wireless device may use and/or apply the at least two TCI states and/or at least two default TCI states for reception of downlink signals (e.g., PDSCH), for example, if a time offset between DCI scheduling a downlink signal and the downlink signal are less than the threshold. The wireless device may use and/or apply at least one TCI state of the at least two TCI states and/or the at least two default TCI states for reception of downlink signals (e.g., PDSCH, aperiodic CSI-RS, etc.) via the second cell before the threshold. The wireless device may use and/or apply at least one TCI state of the at least two TCI states and/or the at least two default TCI states for reception of downlink signals (e.g., PDSCH, aperiodic CSI-RS, etc.), for example, if a time offset between DCI scheduling a downlink signals and the downlink signal is less than the threshold.

At least two TCI states and/or at least two default TCI states of a second cell may comprise a third TCI state and a fourth TCI state. One or more configuration parameters may indicate, for the third TCI state, a third TCI state index. The one or more configuration parameters may indicate, for the fourth TCI state, a fourth TCI state index. A wireless device may determine the at least two TCI states of the second cell, for example, based on one or more criteria as described herein in FIG. 20 and FIG. 21.

One or more configuration parameters may comprise, for a second cell, an enable-two-default-TCI-states parameter (e.g., *enable TwoDefaultTCI-States*). The one or more configuration parameters may comprise, for the second cell, for example, an enable-two-default-TCI-states parameter (e.g., *enableTwoDefaultTCI-States*) that is set to "enabled." The wireless device may determine at least two TCI states and/or at least two default TCI states) for the second cell, for example, based on the one or more configuration parameters comprising, for the second cell, the enable-two-default-TCI-states parameter. The one or more configuration parameters may comprise, for the second cell, an enable-default-TCI-state-per-coresetpoolindex parameter (e.g., *enableDefaultTCI-StatePerCoresetPoolIndex*). The one or more configuration parameters may comprise, for the second cell, for example, an enable-default-TCI-state-per-coresetpoolindex parameter (e.g., *enableDefaultTCI-StatePerCoresetPoolIndex*) that is set to "enabled." The wireless device may determine the at least two TCI states and/or the at least two default TCI states for the second cell, for example, based on the one or more configuration parameters comprising, for the second cell, the enable-default-TCI-state-per-coresetpoolindex parameter.

A base station may indicate and/or activate at least two unified, common, joint, and/or downlink TCI states for a second cell. A wireless device may receive one or more control commands (e.g., DCI, MAC-CE, Activation command at time T1 in FIG. 18, Activation command 1 and 2 in FIG. 19, etc.) that indicate activation of the at least two unified, common, joint, and/or downlink TCI states for the second cell. The wireless device may determine at least two TCI states and/or the at least two default TCI states for the second cell, for example, based on receiving the one or more control commands (e.g., DCI, MAC-CE, etc.) that indicate activation of the at least two unified, common, joint, and/or downlink TCI states for the second cell. The at least two unified, common, joint, and/or downlink TCI states activated by the one or more control commands and the at least two TCI states and/or the at least two default TCI states may be the same. The at least two unified, common, joint, and/or downlink TCI states activated by the one or more control commands and the at least two TCI states and/or the at least two default TCI states may be different. At least one TCI codepoint of the second cell may be mapped to, comprise and/or indicate two TCI states (e.g., two downlink TCI states, two joint TCI states, two common and/or unified TCI states, etc.). The wireless device may determine at least two TCI states and/or at least two default TCI states for a second cell, for example, based on the at least one TCI codepoint of the second cell being mapped to, comprising, and/or indicating two TCI states.

In FIG. 25, in Case 1, a second cell may be Cell 4, and at least two TCI states and/or at least two default TCI states of the second cell may be a third TCI state (e.g., TCI state 3) and a fourth TCI state (e.g., TCI state 4). The at least two TCI states and/or at least two default TCI states of a first cell and the at least two TCI states and/or the at least two default TCI states of the second cell may be different. At least one TCI state of the at least two TCI states and/or at least two default TCI states of the first cell and at least one TCI state of the at least two TCI states and/or at least two default TCI states of the second cell may be different.

A first TCI state (e.g., TCI state 1 in FIG. 25) of at least two TCI states and/or at least two default TCI states of a first cell may be different from a third TCI state (e.g., TCI state 3) of at least two TCI states and/or at least two default TCI states of a second cell. A first TCI state (e.g., TCI state 1 in FIG. 25) of the at least two TCI states and/or at least two default TCI states of the first cell may be different from a fourth TCI state (e.g., TCI state 4 in FIG. 25) of the at least two TCI states and/or least two default TCI states of the second cell. A second TCI state (e.g., TCI state 2 in FIG. 25) of the at least two TCI states and/or at least two default TCI states of the first cell may be different from the third TCI state (e.g., TCI state 3 in FIG. 25) of the at least two TCI states and/or at least two default TCI states of the second cell. The second TCI state (e.g., TCI state 2 in FIG. 25) of the at least two TCI states and/or at least two default TCI states of the first cell may be different from the fourth TCI state (e.g., TCI state 4 in FIG. 25) of the at least two TCI states and/or at least two default TCI states of the second cell.

A first TCI state (e.g., TCI state 1 in FIG. 25) of at least two TCI states and/or at least two default TCI states of a first cell may be same as a third TCI state (e.g., TCI state 3 in FIG. 25) of at least two TCI states and/or at least two default TCI states of a second cell (e.g., TCI state 1 = TCI state 3). A first TCI state (e.g., TCI state 1 in FIG. 25) of the at least two TCI states and/or at least two default TCI states of the first cell may be different from a fourth TCI state (e.g., TCI state 4 in FIG. 25) of the at least two TCI states and/or at least two default TCI states of the second cell. A second TCI state (e.g., TCI state 2 in FIG. 25) of the at least two TCI states and/or at least two default TCI states of the first cell may be different from the third TCI state (e.g., TCI state 3 in FIG. 25) of the at least two TCI states and/or at least two default TCI states of the second cell. The second TCI state (e.g., TCI state 2 in FIG. 25) of the at least two TCI states and/or at least two default TCI states of the first cell may be different from the fourth TCI state (e.g., TCI state 4 in FIG. 25) of the at least two TCI states and/or at least two default TCI states of the second cell.

A first TCI state (e.g., TCI state 1 in FIG. 25) of at least two TCI states and/or at least two default TCI states of the first cell may be different from a third TCI state (e.g., TCI state 3 in FIG. 25) of at least two TCI states and/or at least two default TCI states of a second cell. A first TCI state (e.g., TCI state 1 in FIG. 25) of the at least two TCI states and/or at least two default TCI states of the first cell may be same as a fourth TCI state (e.g., TCI state 4 in FIG. 25) of the at least two TCI states and/or at least two default TCI states of the second cell (e.g., TCI state 1 = TCI state 4). A second TCI state (e.g., TCI state 2 in FIG. 25) of the at least two TCI states and/or at least two default TCI states of the first cell may be different from a third TCI state (e.g., TCI state 3 in FIG. 25) of the at least two TCI states and/or at least two default TCI states of the second cell. The second TCI state (e.g., TCI state 2 in FIG. 25) of the at least two TCI states and/or at least two default TCI states of the first cell may be different from the fourth TCI state (e.g., TCI state 4 in FIG. 25) of the at least two TCI states and/or at least two default TCI states of the second cell.

A first TCI state (e.g., TCI state 1 in FIG. 25) of at least two TCI states and/or at least two default TCI states of the first cell may be different from the third TCI state (e.g., TCI state 3 in FIG. 25) of the at least two TCI states and/or at least two default TCI states of the second cell. A first TCI state (e.g., TCI state 1 in FIG. 25) of the at least two TCI states and/or at least two default TCI states of the first cell may be different from a fourth TCI state (e.g., TCI state 4 in FIG. 25) of the at least two TCI states and/or at least two default TCI states of a second cell. A second TCI state (e.g., TCI state 2 in FIG. 25) of the at least two TCI states and/or at least two default TCI states of the first cell may be same as the third TCI state (e.g., TCI state 3 in FIG. 25) of the at least two TCI states and/or at least two default TCI states of the second cell (e.g., TCI state 2 = TCI state 3). The second TCI state (e.g., TCI state 2 in FIG. 25) of the at least two TCI states and/or at least two default TCI states of the first cell may be different from a fourth TCI state (e.g., TCI state 4 in FIG. 25) of the at least two TCI states and/or at least two default TCI states of the second cell.

A first TCI state (e.g., TCI state 1 in FIG. 25) of at least two TCI states and/or at least two default TCI states of a first cell may be different from a third TCI state (e.g., TCI state 3 in FIG. 25) of at least two TCI states and/or at least two default TCI states of the second cell. A first TCI state (e.g., TCI state 1 in FIG. 25) of the at least two TCI states and/or at least two default TCI states of the first cell may be different from a fourth TCI state (e.g., TCI state 4 in FIG. 25) of the at least two TCI states and/or at least two default TCI states of the second cell. A second TCI state (e.g., TCI state 2 in FIG. 25) of the at least two TCI states and/or at least two default TCI states of the first cell may be different from a third TCI state (e.g., TCI state 3 in FIG. 25) of the at least two TCI states and/or at least two default TCI states of the second cell. The second TCI state (e.g., TCI state 2 in FIG. 25) of the at least two TCI states and/or at least two default TCI states of the first cell may be same as a fourth TCI state (e.g., TCI state 4 in FIG. 25) of the at least two TCI states and/or at least two default TCI states of the second cell (e.g., TCI state 2 = TCI state 4)

A wireless device may apply at least two TCI states (e.g., TCI state 1 and TCI state 2) of a first cell to a second cell. The wireless device may prioritize the at least two TCI states of the first cell. The wireless device may apply the at least two TCI states of the first cell to the second cell, for example, based on a first cell index of the first cell being lowest (e.g., smallest) among a plurality of cell indexes of a plurality of cells. The wireless device may prioritize the at least two TCI states of the first cell, for example, based on the first cell index of the first cell being lowest (e.g., smallest) among the plurality of cell indexes of the plurality of cells.

A wireless device may apply at least two TCI states of a first cell to a second cell, for example, based on the at least two TCI states and/or at least two default TCI states of the first cell and at least two TCI states and/or at least two default TCI states of the second cell being different. The wireless device may prioritize the at least two TCI states of the first cell, for example, based on the at least two TCI states and/or at least two default TCI states of the first cell and the at least two TCI states and/or at least two default TCI states of the second cell being different.

A wireless device may apply at least two TCI states of a first cell to a second cell, for example, based on at least one TCI state of the at least two TCI states and/or at least two default TCI states of the first cell and at least one TCI state of at least two TCI states and/or at least two default TCI states of a second cell being different. The wireless device may prioritize the at least two TCI states of the first cell, for example, based on the at least one TCI state of the at least two TCI states and/or at least two default TCI states of the first cell and the at least one TCI state of the at least two TCI states and/or at least two default TCI states of the second cell being different.

A wireless device may apply at least two TCI states of a first cell to a second cell, for example, based on at least one TCI state of the at least two TCI states and/or at least two default TCI states of the first cell being different from each TCI state of at least two TCI states and/or at least two default TCI states of the second cell. The wireless device may prioritize the at least two TCI states of the first cell, for example, based on at least one TCI state of the at least two TCI states and/or at least two default TCI states of the first cell being different from each TCI state of the at least two TCI states and/or at least two default TCI states of the second cell.

A wireless device may receive DCI scheduling transmission of a downlink signal (e.g., PDSCH, aperiodic CSI-RS, etc.) via a second cell. The wireless device may receive, via the second cell, the downlink signal based on at least two TCI states of a first cell, for example, based on (e.g., in response to) applying the at least two TCI states of the first cell to the second cell, if a time offset between the DCI and the downlink signal is less than a threshold (e.g., timeDuration-ForQCL, beamSwitchTiming). The wireless device may receive, via the second cell, the downlink signal based on the at least two TCI states of the first cell, for example, based on (e.g., in response to) prioritizing the at least two TCI states of the first cell, if a time offset between the DCI and the downlink signal is less than a threshold (e.g., timeDuration-ForQCL, beamSwitchTiming).

A wireless device may apply at least two TCI states of a first cell to a second cell, for example, based on one or more configuration parameters comprising, for a second cell, an enable-two-default-TCI-states parameter (e.g., *enable TwoDefaultTCI-States*). The wireless device may prioritize the at least two TCI states of the first cell, for example, based on the one or more configuration parameters comprising, for the second cell, an enable-two-default-TCI-states parameter (e.g., *enableTwoDefaultTCI-States*).

The wireless device may apply the at least two TCI states of the first cell to the second cell, for example, based on the one or more configuration parameters comprising, for the second cell, an enable-default-TCI-state-per-coresetpoolindex parameter (e.g., *enableDefaultTCI-StatePerCoresetPoolIndex*). The wireless device may prioritize the at least two TCI states of the first cell, for example, based on the one or more configuration parameters comprising, for the second cell, an enable-default-TCI-state-per-coresetpoolindex parameter (e.g., *enableDefaultTCI-StatePerCoreset-PoolIndex*).

A wireless device may apply at least two TCI states of a first cell to a second cell, for example, based on receiving one or more control commands (e.g., DCI, MAC-CE, etc.) indication activation of the at least two unified, common, joint, and/or downlink TCI states for the second cell. The wireless device may prioritize the at least two TCI states of the first cell, for example, based on receiving the one or more control commands (e.g., DCI, MAC-CE, etc.) indication activation of the at least two unified, common, joint, and/or downlink TCI states for the second cell.

A wireless device may apply at least two TCI states of a first cell to a second cell, for example, based on at least one TCI codepoint of the second cell being mapped to, comprising, and/or indicating two TCI states. The wireless device may prioritize the at least two TCI states of the first cell, for example, based on the at least one TCI codepoint of the second cell being mapped to, comprising, and/or indicating two TCI states.

For example, in FIG. 25, in Case 1, a wireless device may apply a first TCI state (e.g., TCI state 1) and a second TCI state (e.g., TCI state 2) of a first cell (e.g., Cell 1) to a second cell (e.g., Cell 4). The wireless device may use and/or apply at least one TCI state of and/or among the first TCI state (e.g., TCI state 1) and the second TCI state (e.g., TCI state 2) of the first cell (e.g., Cell 1) for reception of downlink signals (e.g., PDSCH, aperiodic CSI-RS, etc.) via the second cell (e.g., Cell 4) before a threshold. The wireless device may use and/or apply at least one TCI state of and/or among the first TCI state (e.g., TCI state 1) and the second TCI state (e.g., TCI state 2) of the first cell (e.g., Cell 1) for reception of downlink signals (e.g., PDSCH, aperiodic CSI-RS, etc.) of the second cell (e.g., Cell 4), for example, if a time offset between DCI scheduling a downlink signal and the downlink signals is less than the threshold.

A wireless device may use and/or apply a first TCI state (e.g., TCI state 1) and a second TCI state (e.g., TCI state 2) of a first cell (e.g., Cell 1) for reception of downlink signals (e.g., PDSCH) via a second cell (e.g., Cell 4) before a threshold. The wireless device may use the first TCI state (e.g., TCI state 1) and the second TCI state (e.g., TCI state 2) of the first cell (e.g., Cell 1) for reception of downlink signals (e.g., PDSCH) of the second cell (e.g., Cell 4), for example, if a time offset between DCI scheduling a downlink signal and the downlink signal is less than the threshold.

A wireless device may determine a first TCI state for a first cell. The first TCI state may be a default TCI state. The first TCI state may be a single TCI state. The wireless device may determine a single and/or default TCI state for the first cell. The first TCI state may be the single and/or default TCI state. The wireless device may receive, via the first cell, a downlink signal (e.g., PDSCH, aperiodic CSI-RS, etc.) based on the first TCI state and/or the default TCI state, for example, based on (e.g., in response to) a time offset between DCI scheduling a transmission of the downlink signal and the downlink signal being less than a threshold (e.g., timeDurationForQCL, beamSwitchTiming). The wireless device may use and/or apply the first TCI state and/or the default TCI state for reception of downlink signals (e.g., PDSCH, aperiodic CSI-RS, etc.) via the first cell before the threshold. The wireless device may use and/or apply the first TCI state and/or the default TCI state for reception of downlink signals (e.g., PDSCH, aperiodic CSI-RS, etc.) via the first cell, for example, if a time offset between DCI scheduling a downlink signal and the downlink signal is less than the threshold.

A wireless device may determine a single (e.g., default) TCI state for a first cell, for example, based on one or more configuration parameters not comprising, for the first cell, an enable-two-default-TCI-states parameter (e.g., *enableTwoDefaultTCI-States*). The wireless device may determine a single (e.g., default) TCI state for the first cell, for example, based on the one or more configuration parameters not comprising, for the first cell, an enable-two-default-TCI-states parameter that is set to "enabled." A base station may indicate and/or activate one or two unified, joint, and/or downlink TCI states for the first cell. The wireless device may receive one or more control commands (e.g., DCI, MAC-CE, etc.) that indicate activation of the one or two unified, joint, and/or downlink TCI states for the first cell.

A wireless device may determine a single (e.g., default) TCI state for a first cell, for example, based on one or more configuration parameters not comprising, for the first cell, an enable-default-TCI-state-per-coresetpoolindex parameter (e.g., *enableDefaultTCI-StatePerCoresetPoolIndex*). The wireless device may determine a single (e.g., default) TCI state for the first cell, for example, based on the one or more configuration parameters not comprising, for the first cell, an enable-default-TCI-state-per-coresetpoolindex parameter that is set to "enabled." The base station may indicate and/or activate one or two unified, joint, and/or downlink TCI states for the first cell. The wireless device may receive one or more control commands (e.g., DCI, MAC-CE, etc.) indication activation of the one or two unified, joint, and/or downlink TCI states for the first cell.

One or more configuration parameters may comprise, for a first cell, an enable-two-default-TCI-states parameter (e.g., *enableTwoDefaultTCI-States*). The one or more configuration parameters may comprise, for the first cell, an enable-two-default-TCI-states parameter (e.g., *enableTwoDefaultTCI-States*) that may be set to "enabled." The one or more configuration parameters may comprise, for the first cell, an enable-default-TCI-state-per-coresetpoolindex parameter (e.g., *enableDefaultTCI-StatePerCoresetPoolIndex*). The one or more configuration parameters may comprise, for the first cell, an enable-default-TCI-state-per-coresetpoolindex parameter (e.g., *enableDefaultTCI-StatePerCoresetPoolIndex*) that may be set to "enabled." A base station may indicate and/or activate a single unified, joint, and/or downlink TCI state for the first cell. The wireless device may receive a control command (e.g., DCI, MAC-CE, etc.) that indicates activation of the single unified, joint, and/or downlink TCI state for the first cell. The wireless device may determine a single (default) TCI state for the first cell, for example, based on receiving the control command (e.g., DCI, MAC-CE, etc.) indication activation of the single unified/joint/downlink TCI state for the first cell. The single unified/joint/downlink TCI state may be activated by the control command and the single (e.g., default) TCI state may be the same. Alternatively, the single unified, joint, and/or downlink TCI state activated by the control command and the single (e.g., default) TCI state may be different. At least one TCI codepoint of the first cell may not be mapped to, comprise, and/or indicate two TCI states (e.g., two downlink TCI states, two joint TCI states, two common/unified TCI states, etc.). The wireless device may determine a single (e.g., default) TCI state for the first cell, for example, based on the at least one TCI codepoint of the first cell not being mapped to, comprising, and/or indicating two TCI states. The wireless device may determine a single (e.g., default) TCI state for the first cell, for example, based on each TCI codepoint of the second cell being mapped to, comprising, and/or indicating a single TCI state (e.g., a single downlink TCI state, a single joint TCI state, a single common/unified TCI state, etc.).

In an example, in FIG. 25, in Case 2, a first cell may be Cell 1, and a first TCI state and/or the default TCI state may be TCI state 1. A first TCI state (e.g., TCI state 1) and/or a default TCI state of a first cell and a TCI state and/or a default TCI state of a second cell may be different. For example, in FIG. 25, in Case 2, the first cell may be Cell 1, and the second cell may be Cell 2. A first TCI state (e.g., TCI state 1) of a first cell (e.g., Cell 1) and the TCI state (e.g., TCI state 2) of a second (e.g., Cell 2) may be different.

A wireless device may apply a first TCI state of a first cell to a second cell, for example, based on the first TCI state and/or a default TCI state of the first cell and a TCI state and/or a default TCI state of the second cell being different. The wireless device may prioritize the first TCI state of the first cell, for example, based on the first TCI state and/or the default TCI state of the first cell and the TCI state and/or the default TCI state of the second cell being different.

A wireless device may apply a first TCI state of a first cell to a second cell, for example, based on a first cell index of the first cell being lowest (e.g., smallest) among a plurality of cell indexes of a plurality of cells. The wireless device may prioritize the first TCI state of the first cell, for example, based on the first cell index of the first cell being lowest and/or smallest among the plurality of cell indexes of the plurality of cells.

A wireless device may receive DCI scheduling transmission of a downlink signal (e.g., PDSCH, aperiodic CSI-RS, etc.) via a second cell. The wireless device may receive, via the second cell, the downlink signal based on a first TCI state of a first cell (e.g., TCI state 1 of Cell 1), for example, based on (e.g., in response to) applying the first TCI state to the second cell, if a time offset between the DCI and the downlink signal is less than a threshold (e.g., timeDurationForQCL, beamSwitchTiming). The wireless device may receive, via the second cell, the downlink signal based on the first TCI state of the first cell, for example, based on (e.g., in response to) prioritizing the first TCI state of the first cell, if a time offset between the DCI and the downlink signal is less than a threshold (e.g., timeDurationForQCL, beamSwitchTiming).

A wireless device may prioritize a first TCI state of a first cell, for example, based on one or more configuration parameters not comprising, for a second cell, an enable-two-default-TCI-states parameter (e.g., *enableTwoDefaultTCI-States*). The wireless device may apply the first TCI state of the first cell to the second cell, for example, based on the one or more configuration parameters not comprising, for the second cell, an enable-two-default-TCI-states parameter (e.g., *enableTwoDefaultTCI-States*).

A wireless device may prioritize a first TCI state of a first cell, for example, based on one or more configuration parameters not comprising, for the second cell, an enable-default-TCI-state-per-coresetpoolindex parameter (e.g., *enableDefaultTCI-StatePerCoresetPoolIndex*). The wireless device may apply the first TCI state of the first cell to the second cell, for example, based on the one or more configuration parameters not comprising, for the second cell, an enable-default-TCI-state-per-coresetpoolindex parameter (e.g., *enableDefaultTCI-StatePerCoresetPoolIndex*).

A wireless device may prioritize a first TCI state of a first cell, for example, based on receiving a control command (e.g., DCI, MAC-CE, etc.) that indicates an activation of a single unified, joint, and/or downlink TCI state for a second cell. The wireless device may apply the first TCI state of the first cell to the second cell, for example, based on receiving the control command (e.g., DCI, MAC-CE, etc.) that indicates an activation of the single unified, joint, and/or downlink TCI state for the second cell.

A wireless device may prioritize a first TCI state of a first cell, for example, based on at least one TCI codepoint of a second cell not being mapped to, not comprising, and/or not indicating two TCI states. The wireless device may apply the first TCI state of the first cell to the second cell, for example, based on the at least one TCI codepoint of the second cell not being mapped to, not comprising, and/or not indicating two TCI states

A wireless device may prioritize a first TCI state of a first cell, for example, based on each TCI codepoint of a second cell being mapped to, comprising, and/or indicating a single TCI state (e.g., a single downlink TCI state, a single joint TCI state, a single common/unified TCI state, etc.). The wireless device may apply the first TCI state of the first cell to the second cell, for example, based on each TCI codepoint of the second cell being mapped to, comprising, and/or indicating a single TCI state (e.g., a single downlink TCI state, a single joint TCI state, a single common/unified TCI state).

For example, in FIG. 25, in Case 2, a wireless device applies a first TCI state (e.g., TCI state 1) of a first cell (e.g., Cell 1) to a second cell (e.g., Cell 2). The wireless device may use and/or apply the first TCI state (e.g., TCI state 1) of the first cell (e.g., Cell 1) for reception of downlink signals (e.g., PDSCH, aperiodic CSI-RS, etc.) via the second cell (e.g., Cell 2) before a threshold. The wireless device may use and/or apply the first TCI state (e.g., TCI state 1) of the first cell (e.g., Cell 1) for reception of downlink signals (e.g., PDSCH, aperiodic CSI-RS, etc.) of the second cell (e.g., Cell 2), for example, if a time offset between DCI scheduling a downlink signal and the downlink signal is less than the threshold.

A wireless device may not use and/or apply a TCI state (e.g., TCI state 2) of a second cell (e.g., Cell 2) for reception of downlink signals (e.g., PDSCH, aperiodic CSI-RS, etc.) via the second cell before a threshold. The wireless device may not use and/or apply the TCI state (e.g., TCI state 2) of the second cell (e.g., Cell 2) for reception of downlink signals (e.g., PDSCH, aperiodic CSI-RS, etc.) of the second cell, for example, if a time offset between DCI scheduling a downlink signal and the downlink signal is less than the threshold. The wireless device may not use and/or apply the TCI state (e.g., TCI state 2) of the second cell (e.g., Cell 2) for reception of downlink signals (e.g., PDSCH, aperiodic CSI-RS, etc.) of the second cell, for example, based on (e.g., in response to) prioritizing the first TCI state of the first cell, if a time offset between DCI scheduling a downlink signal and the downlink signal is less than the threshold. The wireless device may not use and/or apply the TCI state (e.g., TCI state 2) of the second cell (e.g., Cell 2) for reception of downlink signals (e.g., PDSCH, aperiodic CSI-RS, etc.) of the second cell, for example, based on (e.g., in response to) applying the first TCI state of the first cell to the second cell, if a time offsets between DCI scheduling a downlink signal and the downlink signal is less than the threshold.

The first TCI state and/or a default TCI state of a first cell and at least one TCI state of at least two TCI states and/or at least two default TCI states of a second cell may be the same. The first TCI state and/or default TCI state of the first cell may be a subset of the at least two TCI states and/or at least two default TCI state of the second cell.

A first TCI state and/or a default TCI state of the first cell and a third TCI state of at least two TCI states and/or at least two default TCI states of a second cell may be the same. The first TCI state and/or the default TCI state of the first cell and a fourth TCI state of the at least two TCI states and/or at least two default TCI states of the second cell may be different.

A first TCI state and/or a default TCI state of a first cell and a third TCI state of at least two TCI states and/or at least two default TCI states of a second cell may be different. The first TCI state and/or the default TCI state of the first cell and a fourth TCI state of the at least two TCI states and/or at least two default TCI states of the second cell may be the same.

For example, in FIG. 25, in Case 2, the first TCI state (e.g., TCI state 1) of the first cell (e.g., Cell 1) and the third TCI state (e.g., TCI state 1) of the second cell (e.g., Cell 3) are the same.

A wireless device may not apply a first TCI state and/or a default TCI state of a first cell to a second cell, for example, based on the first TCI state and/or the default TCI state of the first cell and at least one TCI state of at least two TCI states and/or at least two default TCI states of the second cell being the same. The wireless device may not apply the first TCI state and/or the default TCI state of the first cell to the second cell, for example, based on the first TCI state and/or the default TCI state of the first cell being a subset of at least two TCI states and/or at least two default TCI states of the second cell.

A wireless device may not prioritize a first TCI state and/or a default TCI state of a first cell, for example, based on the first TCI state and/or the default TCI state of the first cell and at least one TCI state of at least two TCI states and/or at least two default TCI states of the second cell being the same. The wireless device may not prioritize the first TCI state and/or the default TCI state of the first cell, for example, based on the first TCI state and/or the default TCI state of the first cell being a subset of the at least two TCI states and/or at least two default TCI states of the second cell.

A wireless device may receive, via a second cell, a downlink signal based on at least two TCI states and/or at least two default TCI states of the second cell, for example, based on (e.g., in response to) not applying a first TCI state of a first cell to the second cell, if a time offset between DCI scheduling transmission of a downlink signal (e.g., PDSCH, aperiodic CSI-RS, etc.) via the second cell and the downlink signal is less than a threshold (e.g., timeDurationForQCL, beamSwitchTiming). The wireless device may receive, via the second cell, a downlink signal based on the at least two TCI states and/or the at least two default TCI states of the second cell, for example, based on (e.g., in response to) not prioritizing the first TCI state of the first cell, if a time offset between DCI scheduling transmission of a downlink signal (e.g., PDSCH, aperiodic CSI-RS, etc.) via the second cell and the downlink signal is less than a threshold (e.g., time-DurationForQCL, beamSwitchTiming).

A wireless device may use and/or apply at least two TCI states and/or at least two default TCI states of a second cell for reception of downlink signals before a threshold, for example, based on (e.g., in response to) not applying a first TCI state of a first cell to the second cell, if the time offset between DCI scheduling the downlink signal (e.g., PDSCH, aperiodic CSI-RS, etc.) via the second cell and the downlink signal is less than the threshold. The wireless device may use and/or apply the at least two TCI states and/or the at least two default TCI states of the second cell for reception of the downlink signals before the threshold, for example, based on (e.g., in response to) not prioritizing the first TCI state of the first cell, if the time offset between DCI scheduling a downlink signal (e.g., PDSCH, aperiodic CSI-RS, etc.) via the second cell and the downlink signal is less than the threshold.

A wireless device may receive, via a second cell, a downlink signal based on at least one TCI state of at least two TCI states and/or at least two default TCI states of the second cell, for example, based on (e.g., in response to) not applying a first TCI state of a first cell to the second cell, if a time offset between DCI scheduling transmission of a downlink signal (e.g., PDSCH, aperiodic CSI-RS, etc.) via the second cell and the downlink signal is less than a threshold (e.g., timeDurationForQCL, beamSwitchTiming). The wireless device may receive, via the second cell, the downlink signal based on at least one TCI state of the at least two TCI states and/or the at least two default TCI states of the second cell, for example, based on (e.g., in response to) not prioritizing the first TCI state of the first cell, if the time offset between DCI scheduling transmission of a downlink signal (e.g., PDSCH, aperiodic CSI-RS, etc.) via the second cell and the downlink signal is less than a threshold (e.g., timeDurationForQCL, beamSwitchTiming).

A wireless device may use and/or apply at least one TCI state of at least two TCI states and/or at least two default TCI states of a second cell for reception of a downlink signal before a threshold, for example, based on (e.g., in response to) not applying a first TCI state of a first cell to the second cell, if time offsets between DCI scheduling a downlink signal (e.g., PDSCH, aperiodic CSI-RS, etc.) via the second cell and the downlink signal are less than the threshold. The wireless device may use and/or apply at least one TCI state of the at least two TCI states and/or the at least two default TCI states of the second cell for reception of the downlink signal before the threshold, for example, based on (e.g., in response to) not prioritizing the first TCI state of the first cell, if the time offset between DCI scheduling the downlink signal (e.g., PDSCH, aperiodic CSI-RS, etc.) via the second cell and the downlink signal is less than the threshold.

For example, in FIG. 25, in Case 2, a wireless device applies a third TCI state (e.g., TCI state 1) and a fourth TCI state (e.g., TC state 2) of a second cell (e.g., Cell 3) to the second cell (e.g., Cell 3). The wireless device may use the third TCI state (e.g., TCI state 1) and the fourth TCI state (e.g., TC state 2) of the second cell (e.g., Cell 3) for reception of downlink signals (e.g., PDSCH, aperiodic CSI-RS, etc.) via the second cell (e.g., Cell 3) before a threshold. The wireless device may use the third TCI state (e.g., TCI state 1) and the fourth TCI state (e.g., TC state 2) of the second cell (e.g., Cell 3) for reception of downlink signals (e.g., PDSCH, aperiodic CSI-RS, etc.) of the second cell (e.g., Cell 3), if the time offsets between DCI scheduling the downlink signals and the downlink signals are less than the threshold. The wireless device may use the third TCI state (e.g., TCI state 1) and the fourth TCI state (e.g., TC state 2) of the second cell (e.g., Cell 3) for reception of downlink signals (e.g., PDSCH, aperiodic CSI-RS, etc.) of the second cell (e.g., Cell 3), for example, based on not prioritizing a first TCI state of a first cell, if time offsets between DCIs scheduling the downlink signals and the downlink signals are less than the threshold. The wireless device may use the third TCI state (e.g., TCI state 1) and the fourth TCI state (e.g., TC state 2) of the second cell (e.g., Cell 3) for reception of downlink signals (e.g., PDSCH, aperiodic CSI-RS, etc.) of the second cell (e.g., Cell 3), for example, based on not applying the first TCI state of the first cell to the second cell, if the time offsets between DCI scheduling the downlink.

The first TCI state (or the default TCI state) of the first cell may be different from the at least two TCI states (or at least two default TCI states) of the second cell. The first TCI state (or the default TCI state) of the first cell may be different from each TCI state of the at least two TCI states (or at least two default TCI states) of the second cell.

The first TCI state and/or default TCI state of a first cell and a third TCI state of at least two TCI states and/or at least two default TCI states of the second cell may be different. The first TCI state and/or the default TCI state of the first cell and a fourth TCI state of the at least two TCI states and/or at least two default TCI states of the second cell may be different.

For example, in FIG. 25, in Case 2, a first TCI state (e.g., TCI state 1) of a first cell (e.g., Cell 1) and a third TCI state (e.g., TCI state 2) of a second cell (e.g., Cell 4) may be different. The first TCI state (e.g., TCI state 1) of the first cell (e.g., Cell 1) and the fourth TCI state (e.g., TCI state 3) of the second cell (e.g., Cell 4) may be different.

A wireless device may apply a first TCI state of a first cell to a second cell, for example, based on the first TCI state and/or a default TCI state of the first cell being different from each TCI state of at least two TCI states and/or at least two default TCI states of the second cell. The wireless device may apply the first TCI state of the first cell to the second cell, for example, based on the first TCI state and/or the default TCI state of the first cell being different from the at least two TCI states and/or at least two default TCI states of the second cell. The wireless device may prioritize the first TCI state of the first cell, for example, based on the first TCI state and/or the default TCI state of the first cell being different from each TCI state of the at least two TCI states and/or at least two default TCI states of the second cell. The wireless device may prioritize the first TCI state of the first cell, for example, based on the first TCI state and/or the default TCI state of the first cell being different from the at least two TCI states and/or at least two default TCI states of the second cell. The wireless device may apply the first TCI state of the first cell to the second cell, for example, based on a first cell index of the first cell being lowest (e.g., smallest) among a plurality of cell indexes of a plurality of cells. The wireless device may prioritize the first TCI state of the first cell, for example, based on the first cell index of the first cell being lowest (e.g., smallest) among the plurality of cell indexes of the plurality of cells.

A wireless device may receive DCI scheduling a transmission of a downlink signal (e.g., PDSCH, aperiodic CSI-RS, etc.) via the second cell. The wireless device may receive, via the second cell, the downlink signal based on a first TCI state of a first cell (e.g., TCI state 1 of Cell 1), for example, based on (e.g., in response to) applying a first TCI state to the second cell, if a time offset between the DCI and the downlink signal is less than a threshold (e.g., timeDurationForQCL, beamSwitchTiming). The wireless device may receive, via the second cell, the downlink signal based on the first TCI state of the first cell, for example, based on (e.g., in response to) prioritizing the first TCI state of the first cell, if a time offset between the DCI and the downlink signal is less than a threshold (e.g., timeDurationForQCL, beamSwitchTiming).

For example, in FIG. 25, in Case 2, a wireless device applies a first TCI state (e.g., TCI state 1) of a first cell (e.g., Cell 1) to a second cell (e.g., Cell 4). The wireless device may use and/or apply the first TCI state (e.g., TCI state 1) of the first cell (e.g., Cell 1) for reception of downlink signals (e.g., PDSCH, aperiodic CSI-RS, etc.) via the second cell (e.g., Cell 4) before a threshold. The wireless device may use the first TCI state (e.g., TCI state 1) of the first cell (e.g., Cell 1) for reception of downlink signals (e.g., PDSCH, aperiodic CSI-RS, etc.) of the second cell (e.g., Cell 4) if the time offset between DCI scheduling the downlink signal and the downlink signal is less than the threshold.

A wireless device may not use a third TCI state (e.g., TCI state 2) and/or a fourth TCI state (e.g., TCI state 3) of a second cell (e.g., Cell 4) for reception of downlink signals (e.g., PDSCH, aperiodic CSI-RS, etc.) via the second cell before a threshold. The wireless device may not use the third TCI state (e.g., TCI state 2) and/or the fourth TCI state (e.g., TCI state 3) of the second cell (e.g., Cell 4) for reception of downlink signals (e.g., PDSCH, aperiodic CSI-RS, etc.) of the second cell, for example, if a time offset between DCI scheduling a downlink signal and the downlink signals is less than the threshold. The wireless device may not use the third TCI state (e.g., TCI state 2) and/or the fourth TCI state (e.g., TCI state 3) of the second cell (e.g., Cell 4) for reception of downlink signals (e.g., PDSCH, aperiodic CSI-RS, etc.) of the second cell, for example, based on (e.g., in response to) prioritizing the first TCI state of the first cell, if a time offset between DCI scheduling a downlink signals and the downlink signals is less than the threshold. The wireless device may not use the third TCI state (e.g., TCI state 2) and/or the fourth TCI state (e.g., TCI state 3) of the second cell (e.g., Cell 2) for reception of downlink signals (e.g., PDSCH, aperiodic CSI-RS, etc.) of the second cell, for example, based on (e.g., in response to) applying the first TCI state of the first cell to the second cell, if the time offset between DCI scheduling a downlink signals and the downlink signals is less than the threshold.

A wireless device may apply a first TCI state of a first cell to a TCI state of at least two TCI states and/or at least two default TCI states of the second cell, for example, based on the first TCI state and/or a default TCI state of the first cell being different from each TCI state of the at least two TCI states and/or at least two default TCI states of the second cell. The wireless device may apply the first TCI state of the first cell to the TCI state of the at least two TCI states and/or the at least two default TCI states of the second cell, for example, based on the first TCI state and/or the default TCI state of the first cell being different from the at least two TCI states and/or the at least two default TCI states of the second cell. The wireless device may prioritize the first TCI state of the first cell over the TCI state of the at least two TCI and/or the at least two default TCI states of the second cell, for example, based on the first TCI state and/or the default TCI state of the first cell being different from each TCI state of the at least two TCI states and/or the at least two default TCI states of the second cell. The wireless device may prioritize the first TCI state of the first cell over the TCI state of the at least two TCI states and/or the at least two default TCI states of the second cell, for example, based on the first TCI state and/or the default TCI state of the first cell being different from the at least two TCI states and/or the at least two default TCI states of the second cell. The wireless device may not apply the first TCI state of the first cell to a second TCI state of the at least two TCI states and/or the at least two default TCI states of the second cell. The wireless device may not prioritize the first TCI state of the first cell over the second TCI state of the at least two TCI states and/or the at least two default TCI states of the second cell. The TCI state of the at least two TCI states and/or the at least two default TCI states of the second cell and the second TCI state of the at least two TCI states and/or the at least two default TCI states of the second cell may be different.

A wireless device may apply a first TCI state of a first cell to a TCI state of at least two TCI states and/or at least two default TCI states of the second cell, for example, based on a first cell index of the first cell being lowest (e.g., smallest) among a plurality of cell indexes of a plurality of cells. The wireless device may prioritize the first TCI state of the first cell over a TCI state of the at least two TCI states and/or at least two default TCI states of the second cell, for example, based on the first cell index of the first cell being lowest and/or smallest among the plurality of cell indexes of the plurality of cells.

A first TCI state of a first cell and a TCI state of at least two TCI states and/or at least two default TCI states of a second cell may be associated with a same value of an index (e.g., SRS resource set, TRP field, coreset pool index, additional PCI index, BFD set index, unified TCI state indicator, joint TCI state indicator, uplink TCI state indicator, panel index, capability set index, etc.). A wireless device may apply the first TCI state of the first cell to the TCI state of the at least two TCI states and/or the at least two default TCI states of the second cell, for example, based on the first TCI state of the first cell and the TCI state of the at least two TCI states and/or the at least two default TCI states of the second cell being associated with the same value of the index. The wireless device may prioritize the first TCI state of the first cell over the TCI state of the at least two TCI states and/or the at least two default TCI states of the second cell, for example, based on the first TCI state of the first cell and the TCI state of the at least two TCI states and/or the at least two default TCI states of the second cell being associated with the same value of the index.

A first TCI state of a first cell and a TCI state of at least two TCI states and/or at least two default TCI states of the second cell may be associated with a same PCI. The first TCI state and the TCI state may both, for example, be associated with the PCI of the cell. The first TCI state and the TCI state may both, for example, be associated with a second PCI different from the PCI of the cell. A wireless device may apply the first TCI state of the first cell to the TCI state of the at least two TCI states and/or the at least two default TCI states of the second cell, for example, based on the first TCI state of the first cell and the TCI state of the at least two TCI states and/or the at least two default TCI states of the second cell being associated with the same PCI. The wireless device may prioritize the first TCI state of the first cell over the TCI state of the at least two TCI states and/or the at least two default TCI states of the second cell, for example, based on the first TCI state of the first cell and the TCI state of the at least two TCI states and/or the at least two default TCI states of the second cell being associated with the same PCI.

A wireless device may apply a first TCI state of a first cell to a TCI state of at least two TCI states and/or at least two default TCI states of a second cell, for example, based on the TCI state being identified with and/or indicated by a TCI state index that is a lowest among at least two TCI state indexes of the at least two TCI states of the second cell and/or among a third TCI state index of a third TCI state and/or a fourth TCI state index of a fourth TCI state. The wireless device may prioritize the first TCI state of the first cell over the TCI state of the at least two TCI states and/or the at least two default TCI states of the second cell, for example, based on the TCI state being identified and/or indicated by a TCI state index that is lowest among the at least two TCI state indexes of the at least two TCI states of the second cell. One or more configuration parameters may indicate, for the at least two TCI states of the second cell, the at least two TCI state indexes. The at least two TCI state indexes may comprise the third TCI state index and/or the fourth TCI state index. The one or more configuration parameters may indicate, for each TCI state of the at least two TCI states of the second cell, a respective TCI state index of the at least two TCI state indexes. The at least two TCI state indexes may comprise the TCI state index of the TCI state. The wireless device may apply the first TCI state of the first cell to the TCI state of the at least two TCI states and/or the at least two default TCI states of the second cell, for example, based on the TCI state index of the TCI state being lowest among the at least two TCI state indexes of the at least two TCI states of the second cell.

A wireless device may apply a first TCI state of a first cell to a TCI state of at least two TCI states and/or at least two default TCI states of a second cell, for example, based on an octet comprising a TCI state index of the TCI state being lowest among octets comprising at least two TCI state indexes of the at least two TCI states of the second cell. The wireless device may prioritize the first TCI state of the first cell over the TCI state of the at least two TCI states and/or the at least two default TCI states of the second cell, for example, based on the octet comprising the TCI state index of the TCI state being lowest among the octets comprising the at least two TCI state indexes of the at least two TCI states of the second cell. The octets may comprise the octet. The wireless device may receive a control command (e.g., MAC-CE, DCI, etc.) indicating activation of the at least two TCI states for the second cell. The control command may comprise the octets.

A wireless device may prioritize a first TCI state of a first cell over a TCI state of at least two TCI states and/or at least two default TCI states of a second cell, for example, based on one or more configuration parameters comprising, for the second cell, an enable-two-default-TCI-states parameter (e.g., *enableTwoDefaultTCI-States*). The wireless device may apply the first TCI state of the first cell to the TCI state of the at least two TCI states and/or the at least two default TCI states of the second cell, for example, based on the one or more configuration parameters comprising, for the second cell, an enable-two-default-TCI-states parameter (e.g., *enableTwoDefaultTCI-States*).

A wireless device may prioritize a first TCI state of a first cell over a TCI state of at least two TCI states and/or at least two default TCI states of a second cell, for example, based on one or more configuration parameters comprising, for the second cell, an enable-default-TCI-state-per-coresetpoolindex parameter (e.g., *enableDefaultTCI-StatePerCore-*

*setPoolIndex).* The wireless device may apply the first TCI state of the first cell to the TCI state of the at least two TCI states and/or the at least two default TCI states of the second cell, for example, based on the one or more configuration parameters comprising, for the second cell, an enable-default-TCI-state-per-coresetpoolindex parameter (e.g., *enable-DefaultTCI-StatePerCoresetPoolIndex).*

A wireless device may prioritize a first TCI state of a first cell over a TCI state of at least two TCI states and/or at least two default TCI states of a second cell, for example, based on receiving one or more control commands (e.g., DCI, MAC-CE, etc.) indicating an activation of at least two unified, common, joint, and/or downlink TCI states for the second cell. The wireless device may apply the first TCI state of the first cell to the TCI state of the at least two TCI states and/or the at least two default TCI states of the second cell, for example, based on receiving the one or more control commands (e.g., DCI, MAC-CE, etc.) indicating the activation of the at least two unified, common, joint, and/or downlink TCI states for the second cell.

A wireless device may prioritize a first TCI state of a first cell over a TCI state of at least two TCI states and/or at least two default TCI states of a second cell, for example, based on at least one TCI codepoint of the second cell being mapped to, comprising, and/or indicating two TCI states. The wireless device may apply the first TCI state of the first cell to the TCI state of the at least two TCI states and/or the at least two default TCI states of the second cell, for example, based on the at least one TCI codepoint of the second cell being mapped to, comprising, and/or indicating two TCI states.

In FIG. 25 Case 2 2550, a wireless device may apply a first TCI state 2556 (e.g., TCI state 1) of a first cell 2555 (e.g., Cell 1) to a third TCI state 2571a (e.g., TCI state 2) of a second cell 2570 (e.g., Cell 4), for example, if a TCI state of at least two TCI states and/or at least two default TCI states of a second cell 2570 (e.g., Cell 4) is the third TCI state 2571a (e.g., TCI state 2) of the second cell 2570 (e.g., Cell 4), The wireless device may prioritize the first TCI state 2556 (e.g., TCI state 1) of the first cell 2555 (e.g., Cell 1) over the third TCI state 2571a (e.g., TCI state 2) of the second cell 2570 (e.g., Cell 4). The wireless device may use and/or apply the first TCI state 2556 (e.g., TCI state 1) of the first cell 2555 (e.g., Cell 1) and a fourth TCI state 2571b (e.g., TCI state 3) of the second cell 2570 (e.g., Cell 4) for reception of downlink signals (e.g., PDSCH, etc.) via the second cell 2570 (e.g., Cell 4) before a threshold. The wireless device may use the first TCI state 2556 (e.g., TCI state 1) of the first cell 2555 (e.g., Cell 1) and the fourth TCI state 2571b (e.g., TCI state 3) of the second cell 2570 (e.g., Cell 4) for reception of downlink signals (e.g., PDSCH, etc.) of the second cell 2570 (e.g., Cell 4), for example, if a time offset between DCI scheduling a downlink signal and the downlink signal is less than the threshold. For example, the wireless device may use at least one TCI state of and/or among the first TCI state 2556 (e.g., TCI state 1) of the first cell 2555 (e.g., Cell 1) and the fourth TCI state 2571b (e.g., TCI state 3) of the second cell 2570 (e.g., Cell 4) for reception of downlink signals (e.g., PDSCH, aperiodic CSI-RS, etc.) via the second cell 2570 (e.g., Cell 4) before the threshold. The wireless device may use at least one TCI state of and/or among the first TCI state 2556 (e.g., TCI state 1) of the first cell 2555 (e.g., Cell 1) and the fourth TCI state 2571b (e.g., TCI state 3) of the second cell 2570 (e.g., Cell 4) for reception of downlink signals (e.g., PDSCH, aperiodic CSI-RS, etc.) of the second cell (e.g., Cell 4), for example, if a time offset between DCI scheduling a downlink signal and the downlink signal is less than the threshold.

For example, in FIG. 25, in Case 2, a wireless device may apply a first TCI state 2556 (e.g., TCI state 1) of a first cell 2555 (e.g., Cell 1) to a fourth TCI state 2571b (e.g., TCI state 3) of a second cell 2570 (e.g., Cell 4), for example, if a TCI state of at least two TCI states and/or at least two default TCI states of the second cell is the fourth TCI state 2571b (e.g., TCI state 3) of the second cell (e.g., Cell 4). The wireless device may prioritize the first TCI state 2556 (e.g., TCI state 1) of the first cell 2555 (e.g., Cell 1) over the fourth TCI state 2571b (e.g., TCI state 3) of the second cell 2570 (e.g., Cell 4). The wireless device may use the first TCI state 2556 (e.g., TCI state 1) of the first cell 2555 (e.g., Cell 1) and the third TCI state 2571a (e.g., TCI state 2) of the second cell 2570 (e.g., Cell 4) for reception of downlink signals (e.g., PDSCH, etc.) via the second cell 2570 (e.g., Cell 4) before a threshold. The wireless device may use the first TCI state 2556 (e.g., TCI state 1) of the first cell 2555 (e.g., Cell 1) and the third TCI state 2571a (e.g., TCI state 2) of the second cell (e.g., Cell 4) for reception of downlink signals (e.g., PDSCH) of the second cell (e.g., Cell 4), for example, if a time offset between DCI scheduling a downlink signal and the downlink signal are less than the threshold. The wireless device may use at least one TCI state of and/or among the first TCI state 2556 (e.g., TCI state 1) of the first cell 2555 (e.g., Cell 1) and the third TCI state 2571a (e.g., TCI state 2) of the second cell 2570 (e.g., Cell 4) for reception of downlink signals (e.g., PDSCH, aperiodic CSI-RS, etc.) via the second cell 2570 (e.g., Cell 4) before the threshold. The wireless device may use at least one TCI state of and/or among the first TCI state 2556 (e.g., TCI state 1) of the first cell 2555 (e.g., Cell 1) and the third TCI state 2571a (e.g., TCI state 2) of the second cell (e.g., Cell 4) for reception of downlink signals (e.g., PDSCH, aperiodic CSI-RS, etc.) of the second cell 2570 (e.g., Cell 4), for example, if a time offset between DCI scheduling a downlink signal and the downlink signal are less than the threshold.

A wireless device may determine a first TCI state for a first cell. The first TCI state may be a first default TCI state. The wireless device may receive, via the first cell, downlink signals (e.g., PDSCH, aperiodic CSI-RS, etc.) based on the first TCI state, for example, based on (e.g., in response to) a time offset between DCI scheduling a downlink signal and the downlink signal being less than a threshold. The wireless device may apply a second TCI state of a second cell to the first cell. The second TCI state may be a second default TCI state for the second cell. The wireless device may override, overwrite, and/or replace the first TCI state and/or the first default TCI state of the first cell with the second TCI state and/or the second default TCI state of the second cell, for example, based on applying the second TCI state to the first cell. The wireless device may receive, via the first cell, downlink signals (e.g., PDSCH, aperiodic CSI-RS, etc.) based on the second TCI state of the second cell, for example, based on (e.g., in response to) a time offset between DCI scheduling a downlink signal and the downlink signal being less than the threshold. The wireless device may receive, via the first cell, the downlink signal based on the second TCI state, for example, based on (e.g., in response to) applying the second TCI state to the first cell.

A wireless device may prioritize a second TCI state of a second cell. The second TCI state may be a second default TCI state for the second cell. The wireless device may override, overwrite, and/or replace a first TCI state and/or a first default TCI state of a first cell with the second TCI state and/or the second default TCI state of the second cell, for example, based on prioritizing the second TCI state of the second cell. The wireless device may receive, via the first cell, downlink signals (e.g., PDSCH, aperiodic CSI-RS, etc.) based on the second TCI state of the second cell, for example, based on (e.g., in response to) a time offset between DCI scheduling a downlink signal and the downlink signal are less than the threshold. The wireless device may receive, via the first cell, the downlink signal based on the second TCI state, for example, based on (e.g., in response to) prioritizing the second TCI state of the second cell.

A wireless device may prioritize a second TCI state of a second cell over a first TCI state of a first cell. The wireless device may override, overwrite, and/or replace the first TCI state and/or a first default TCI state of a first cell with the second TCI state and/or a second default TCI state of the second cell, for example, based on prioritizing the second TCI state of the second cell. The wireless device may receive, via the first cell, downlink signals (e.g., PDSCH, aperiodic CSI-RS, etc.) based on the second TCI state of the second cell, for example, based on (e.g., in response to) a time offset between DCI scheduling a downlink signals and the downlink signal being less than a threshold. The wireless device may receive, via the first cell, the downlink signal based on the second TCI state, for example, based on (e.g., in response to) prioritizing the second TCI state of the second cell.

A wireless device may determine at least two TCI states and/or at least two default TCI states for one or more first cells of a plurality of cells. The wireless device may determine the at least two TCI states and/or the at least two default TCI states for each cell of the one or more first cells of the plurality of cells.

One or more configuration parameters may comprise, for one or more first cells of a plurality of cells, an enable-two-default-TCI-states parameter (e.g., *enableTwoDefaultTCI-States*). The one or more configuration parameters may comprise, for each cell of the one or more first cells, the enable-two-default-TCI-states parameter. One or more configuration parameters may comprise, for the one or more first cells of the plurality of cells, an enable-default-TCI-state-per-coresetpoolindex parameter (e.g., *enableDefaultTCI-StatePerCoresetPoolIndex*). The one or more configuration parameters may comprise, for each cell of the one or more first cells, the enable-default-TCI-state-per-coresetpoolindex.

At least one TCI codepoint of one or more first cells may be mapped to, may comprise, and/or may indicate two TCI states (e.g., two downlink TCI states, two joint TCI states, two common/unified TCI states, etc.). At least one TCI codepoint of each cell of the one or more first cells may be mapped to, may comprise, and/or may indicate two TCI states (e.g., two downlink TCI states, two joint TCI states, two common/unified TCI states, etc.).

One or more configuration parameters may indicate, for one or more first cells, one or more first cell indexes, identifiers, and/or identities. The one or more configuration parameters may indicate, for each cell of the one or more first cells, a respective cell index of the one or more first cell indexes. The plurality of cell indexes of the plurality of cells may comprise the one or more first cell indexes.

For example, in FIG. 24, in Case 1, one or more first cells are Cell 1 (with TCI state 1 and TCI state 2) and Cell 4 (with TCI state 3 and TCI state 4). In Case 2, the one or more first cells are Cell 3 (with TCI state 1 and TCI state 2) and Cell 4 (with TCI state 2 and TCI state 3).

A wireless device may determine a single TCI state and/or a single default TCI state for one or more second cells of a plurality of cells. The wireless device may determine a single TCI state and/or a single default TCI state for each cell of the one or more second cells of the plurality of cells.

One or more configuration parameters may not comprise, for one or more second cells of a plurality of cells, an enable-two-default-TCI-states parameter (e.g., *enableTwoDefaultTCI-States*). The one or more configuration parameters may not comprise, for each cell of the one or more second cells, the enable-two-default-TCI-states parameter. One or more configuration parameters may not comprise, for one or more second cells of a plurality of cells, an enable-default-TCI-state-per-coresetpoolindex parameter (e.g., *enableDefaultTCI-StatePerCoresetPoolIndex*). The one or more configuration parameters may not comprise, for each cell of the one or more second cells, the enable-default-TCI-state-per-coresetpoolindex.

At least one TCI codepoint of one or more second cells may not be mapped to, comprise, and/or indicate two TCI states (e.g., two downlink TCI states, two joint TCI states, two common/unified TCI states, etc.). At least one TCI codepoint of each cell of the one or more second cells may not be mapped to, comprise, and/or may indicate two TCI states (e.g., two downlink TCI states, two joint TCI states, two common and/or unified TCI states, etc.).

Each TCI codepoint of one or more second cells may be mapped to, comprise, and/or indicate a single TCI state (e.g., a single downlink TCI state, a single joint TCI state, a single common/unified TCI state, etc.). Each TCI codepoint of each cell of the one or more second cells may be mapped to, comprise, and/or indicate a single TCI state (e.g., a single downlink TCI state, a single joint TCI state, a single common and/or unified TCI state, etc.).

One or more configuration parameters may indicate, for one or more second cells, one or more second cell indexes, identifiers, and/or identities. The one or more configuration parameters may indicate, for each cell of the one or more second cells, a respective cell index of the one or more second cell indexes. A plurality of cell indexes of a plurality of cells may comprise the one or more second cell indexes.

For example, in FIG. 24, in Case 1, one or more second cells are Cell 2 (with TCI state 1) and Cell 3 (with TCI state 3). In Case 2, the one or more second cells are Cell 1 (with TCI state 1) and Cell 2 (with TCI state 2).

A wireless device may select and/or determine a first cell, among one or more first cells associated with at least two TCI states and/or associated with at least two default TCI states, with a first cell index that may be lowest among one or more first cell indexes of the one or more first cells. One or more configuration parameters may indicate, for the first cell, the first cell index that may be lowest among the one or more first cell indexes of the one or more first cells.

A wireless device may not select and/or determine a first cell among one or more second cells associated with a single TCI state and/or a single default TCI state. A second cell index of a second cell in and/or of the one or more second cells may be lower than a first cell index. One or more second cell indexes may comprise the second cell index. The first cell index may or may not be lowest among a plurality of cell indexes.

In FIG. 25, in Case 1, a first cell may be Cell 1, for example, if a cell index of Cell 1 is lower than a cell index of Cell 4. In Case 2, the first cell may be Cell 3, for example, if a cell index of Cell 3 is lower than a cell index of Cell 4.

A wireless device may determine at least two TCI states for a first cell. The at least two TCI states may be at least two default TCI states. The wireless device may determine the at least two TCI states, for example, based on one or more criteria as discussed herein in FIGS. 20 and 21. A wireless device may apply at least two TCI states and/or at least two default TCI states of a first cell to a plurality of cells. The wireless device may apply the at least two TCI states and/or the at least two default TCI states of the first cell to each cell of the plurality of cells.

A wireless device may prioritize at least two TCI states and/or at least two default TCI states of a first cell. The wireless device may apply the at least two TCI states of the first cell, for example, based on a first cell index of the first cell being lowest (e.g., smallest) among one or more first cell indexes of one or more first cells. The wireless device may prioritize the at least two TCI states of the first cell, for example, based on the first cell index of the first cell being lowest (e.g., smallest) among the one or more first cell indexes of the one or more first cells.

A wireless device may apply at least two TCI states and/or at least two default TCI states of a first cell to a plurality of cells, for example, based on a plurality of cells operating in a same band. The wireless device may prioritize the at least two TCI states and/or the at least two default TCI states of the first cell, for example, based on the plurality of cells operating in the same band.

A wireless device may apply at least two TCI states of a first cell to a plurality of cells, for example, based on at least two TCI states and/or at least two default TCI states of the first cell and one or more TCI states and/or one or more default TCI states of a second cell of the plurality of cells being different. The wireless device may prioritize the at least two TCI states of the first cell, for example, based on the at least two TCI states and/or at least two default TCI states of the first cell and the one or more TCI states and/or one or more default TCI states of the second cell being different.

A wireless device may apply at least two TCI states of a first cell to a plurality of cells, for example, based on at least two TCI states and/or at least two default TCI states of the first cell and at least one TCI state of at least two TCI states and/or at least two default TCI states of a second cell of the plurality of cells being different. The wireless device may prioritize the at least two TCI states of the first cell, for example, based on the at least two TCI states and/or at least two default TCI states of the first cell and the at least two TCI states and/or at least two default TCI states of the second cell being different.

A wireless device may apply at least two TCI states of a first cell to a plurality of cells, for example, based on the at least two TCI states and/or at least two default TCI states of the first cell and one or more TCI states and/or one or more default TCI states of each cell of the plurality of cells being different. The wireless device may prioritize the at least two TCI states of the first cell, for example, based on the at least two TCI states and/or at least two default TCI states of the first cell and the one or more TCI states and/or one or more default TCI states of each cell of the plurality of cells being different.

A wireless device may receive DCI scheduling transmission of a downlink signal (e.g., PDSCH, aperiodic CSI-RS, etc.) via a second cell of a plurality of cells. The wireless device may receive, via the second cell, the downlink signal based on at least two TCI states of the first cell, for example, based on (e.g., in response to) applying the at least two TCI states of a first cell, if a time offset between the DCI and the downlink signal is less than a threshold (e.g., timeDurationForQCL, beamSwitchTiming). The wireless device may receive, via the second cell, the downlink signal based on the at least two TCI states of the first cell, for example, based on (e.g., in response to) prioritizing the at least two TCI of the first cell, if a time offset between the DCI and the downlink signal is less than a threshold (e.g., timeDurationForQCL, beamSwitchTiming).

A wireless device may receive DCI scheduling transmission of a downlink signal (e.g., PDSCH, aperiodic CSI-RS, etc.) via each cell of a plurality of cells. The wireless device may receive, via each cell of the plurality of cells, a downlink signal based on at least two TCI states of a first cell, for example, based on (e.g., in response to) applying the at least two TCI states of the first cell if a time offset between the DCI and the downlink signal is less than a threshold (e.g., timeDurationForQCL, beamSwitchTiming). The wireless device may receive, via each cell of a plurality of cells, the downlink signal based on the at least two TCI states of the first cell, for example, based on (e.g., in response to) prioritizing the at least two TCI of the first cell, if a time offset between the DCI and the downlink signal is less than a threshold (e.g., timeDurationForQCL, beamSwitchTiming).

A wireless device may receive DCI scheduling transmission of a downlink signal (e.g., PDSCH, aperiodic CSI-RS, etc.) via a second cell of the plurality of cells. The wireless device may receive, via the second cell, a downlink signal based on at least one TCI state of the at least two TCI states of a first cell, for example, based on (e.g., in response to) applying the at least two TCI states of the first cell, if a time offset between the DCI and the downlink signal is less than a threshold (e.g., timeDurationForQCL, beamSwitchTiming). The wireless device may receive, via the second cell, the downlink signal based on at least one TCI state of the at least two TCI states of the first cell, for example, based on (e.g., in response to) prioritizing the at least two TCI of the first cell, if a time offset between the DCI and the downlink signal is less than a threshold (e.g., timeDurationForQCL, beamSwitchTiming).

A wireless device may receive DCI scheduling transmission of a downlink signal (e.g., PDSCH, aperiodic CSI-RS, etc.) via each cell of a plurality of cells. The wireless device may receive, via each cell of the plurality of cells, the downlink signal based on at least one TCI state of at least two TCI states of a first cell, for example, based on (e.g., in response to) applying the at least two TCI states of the first cell, if a time offset between the DCI and the downlink signal is less than a threshold (e.g., timeDurationForQCL, beamSwitchTiming). The wireless device may receive, via each cell of the plurality of cells, the downlink signal based on at least one TCI state of the at least two TCI states of the first cell, for example, based on (e.g., in response to) prioritizing the at least two TCI of the first cell, if a time offset between the DCI and the downlink signal is less than a threshold (e.g., timeDurationForQCL, beamSwitchTiming).

For example, in FIG. 25, in Case 1, if a first cell is Cell 1 2505, a wireless device may apply at least two TCI states (e.g., TCI state 1 2506a and TCI state 2 2506b) of the first cell (e.g., Cell 1 2505) to Cell 2 2510, Cell 3 2515, and Cell 4 2520.

A wireless device may use and/or apply at least one TCI state of and/or among at least two TCI states (e.g., TCI state 1 and TCI state 2) of a first cell (e.g., Cell 1) for reception of downlink signals (e.g., PDSCH, aperiodic CSI-RS, etc.) via a plurality of cells (e.g., Cell 1 2505, Cell 2 2510, Cell 3 2515, and Cell 4 2520) before a threshold. The wireless device may use at least one TCI state of and/or among the at least two TCI states (e.g., TCI state 1 and TCI state 2) of the first cell (e.g., Cell 1) for reception of downlink signals (e.g., PDSCH, aperiodic CSI-RS, etc.) of the plurality of cells (e.g., Cell 1, Cell 2, Cell 3, and Cell 4), if a time offset between DCI scheduling a downlink signal and the downlink signal is less than a threshold.

A wireless device may use at least two TCI states (e.g., TCI state 1 and TCI state 2) of a first cell (e.g., Cell 1) for reception of downlink signals (e.g., PDSCH) via a plurality of cells (e.g., Cell 1, Cell 2, Cell 3, and Cell 4) before a threshold. The wireless device may use the at least two TCI states (e.g., TCI state 1 and TCI state 2) of the first cell (e.g., Cell 1) for reception of downlink signals (e.g., PDSCH) of the plurality of cells (e.g., Cell 1, Cell 2, Cell 3, and Cell 4), if a time offset between DCI scheduling a downlink signal and the downlink signal is less than the threshold.

In FIG. 25, in Case 2, a wireless device may apply at least two TCI states (e.g., TCI state 1 and TCI state 2) of a first cell to Cell 1, Cell 2, and Cell 4, for example, if the first cell is Cell 3.

A wireless device may use at least one TCI state of and/or among at least two TCI states (e.g., TCI state 1 and TCI state 2) of a first cell (e.g., Cell 3) for reception of downlink signals (e.g., PDSCH, aperiodic CSI-RS, etc.) via a plurality of cells (e.g., Cell 1, Cell 2, Cell 3, and Cell 4) before a threshold. The wireless device may use at least one TCI state of and/or among the at least two TCI states (e.g., TCI state 1 and TCI state 2) of the first cell (e.g., Cell 3) for reception of downlink signals (e.g., PDSCH, aperiodic CSI-RS, etc.) of the plurality of cells (e.g., Cell 1, Cell 2, Cell 3, and Cell 4), if a time offset between DCI scheduling a downlink signal and the downlink signal is less than the threshold.

A wireless device may use at least two TCI states (e.g., TCI state 1 and TCI state 2) of a first cell (e.g., Cell 3) for reception of downlink signals (e.g., PDSCH, etc.) via the plurality of cells (e.g., Cell 1, Cell 2, Cell 3, and Cell 4) before a threshold. The wireless device may use the at least two TCI states (e.g., TCI state 1 and TCI state 2) of the first cell (e.g., Cell 3) for reception of downlink signals (e.g., PDSCH) of the plurality of cells (e.g., Cell 1, Cell 2, Cell 3, and Cell 4), if a time offset between DCI scheduling a downlink signal and the downlink signal is less than the threshold.

a wireless device may apply at least two TCI states and/or at least two default TCI states of a first cell to one or more first cells. The wireless device may apply the at least two TCI states and/or the at least two default TCI states of the first cell to each cell of the one or more first cells. The wireless device may prioritize the at least two TCI states and/or the at least two default TCI states of the first cell.

A wireless device may apply at least two TCI states of a first cell, for example, based on a first cell index of the first cell being lowest (e.g., smallest) among one or more first cell indexes of one or more first cells. The wireless device may prioritize the at least two TCI states of the first cell, for example, based on the first cell index of the first cell being lowest (e.g., smallest) among the one or more first cell indexes of the one or more first cells.

A wireless device may apply at least two TCI states and/or at least two default TCI states of a first cell to one or more first cells, for example, based on the one or more first cells operating in a same band. The wireless device may prioritize the at least two TCI states and/or the at least two default TCI states of the first cell, for example, based on the one or more first cells operating in the same band.

A wireless device may apply at least two TCI states of a first cell to one or more first cells, for example, based on the at least two TCI states and/or at least two default TCI states of the first cell and one or more TCI states and/or one or more default TCI states of a second cell of the one or more first cells being different. The wireless device may prioritize the at least two TCI states of the first cell, for example, based on the at least two TCI states and/or at least two default TCI states of the first cell and the one or more TCI states and/or one or more default TCI states of the second cell being different.

A wireless device may apply at least two TCI states of a first cell to one or more first cells, for example, based on the at least two TCI states and/or at least two default TCI states of the first cell and at least one TCI state of at least two TCI states and/or at least two default TCI states of a second cell of the one or more first cells being different. The wireless device may prioritize the at least two TCI states of the first cell, for example, based on the at least two TCI states and/or at least two default TCI states of the first cell and the at least two TCI states and/or at least two default TCI states of the second cell being different.

A wireless device may apply at least two TCI states of first cell to one or more first cells, for example, based on the at least two TCI states and/or at least two default TCI states of the first cell and one or more TCI states and/or one or more default TCI states of each cell of the one or more first cells being different. The wireless device may prioritize the at least two TCI states of the first cell, for example, based on the at least two TCI states and/or at least two default TCI states of the first cell and the one or more TCI states and/or one or more default TCI states of each cell of the one or more first cells being different.

A wireless device may receive DCI scheduling transmission of a downlink signal (e.g., PDSCH, aperiodic CSI-RS, etc.) via a second cell of one or more first cells. The wireless device may receive, via the second cell, the downlink signal based on at least two TCI states of the first cell, for example, based on (e.g., in response to) applying the at least two TCI states of the first cell, if a time offset between the DCI and the downlink signal is less than a threshold (e.g., timeDurationForQCL, beamSwitchTiming). The wireless device may receive, via the second cell, the downlink signal based on the at least two TCI states of the first cell, for example, based on (e.g., in response to) prioritizing the at least two TCI of the first cell, if a time offset between the DCI and the downlink signal is less than a threshold (e.g., timeDurationForQCL, beamSwitchTiming).

A wireless device may receive DCI scheduling transmission of a downlink signal (e.g., PDSCH, aperiodic CSI-RS, etc.) via each cell of one or more first cells. The wireless device may receive, via each cell of the one or more first cells, the downlink signal based on at least two TCI states of a first cell, for example, based on (e.g., in response to) applying the at least two TCI states of the first cell, if a time offset between the DCI and the downlink signal is less than a threshold (e.g., timeDurationForQCL, beamSwitchTiming). The wireless device may receive, via each cell of the one or more first cells, the downlink signal based on the at least two TCI states of the first cell, for example, based on (e.g., in response to) prioritizing the at least two TCI of the first cell, if a time offset between the DCI and the downlink signal is less than a threshold (e.g., timeDurationForQCL, beamSwitchTiming).

A wireless device may receive DCI scheduling transmission of a downlink signal (e.g., PDSCH, aperiodic CSI-RS, etc.) via a second cell of the one or more first cells. The wireless device may receive, via the second cell, the downlink signal based on at least one TCI state of at least two TCI states of a first cell, for example, based on (e.g., in response to) applying the at least two TCI states of the first cell, if a time offset between the DCI and the downlink signal is less than a threshold (e.g., timeDurationForQCL, beamSwitchTiming). The wireless device may receive, via the second cell, the downlink signal based on at least one TCI state of the at least two TCI states of the first cell, for example, based on (e.g., in response to) prioritizing the at least two TCI of the first cell, if a time offset between the DCI and the downlink signal is less than a threshold (e.g., timeDurationForQCL, beamSwitchTiming).

A wireless device may receive DCI scheduling transmission of a downlink signal (e.g., PDSCH, aperiodic CSI-RS, etc.) via each cell of one or more first cells. The wireless device may receive, via each cell of the one or more first cells, the downlink signal based on at least one TCI state of at least two TCI states of a first cell, for example, based on (e.g., in response to) applying the at least two TCI states of the first cell, if a time offset between the DCI and the downlink signal is less than a threshold (e.g., timeDurationForQCL, beamSwitchTiming). The wireless device may receive, via each cell of the one or more first cells, the downlink signal based on at least one TCI state of the at least two TCI states of the first cell, for example, based on (e.g., in response to) prioritizing the at least two TCI of the first cell, if a time offset between the DCI and the downlink signal is less than a threshold (e.g., timeDurationForQCL, beamSwitchTiming).

In FIG. 25, for Case 1, a wireless device may apply at least two TCI states (e.g., TCI state 1 and TCI state 2) of a first cell to Cell 4, for example, if the first cell is Cell 1. The wireless device may use at least one TCI state of and/or among the at least two TCI states (e.g., TCI state 1 and TCI state 2) of the first cell (e.g., Cell 1) for reception of downlink signals (e.g., PDSCH, aperiodic CSI-RS, etc.) via the one or more first cells (e.g., Cell 1 and Cell 4) before a threshold. The wireless device may use at least one TCI state of and/or among the at least two TCI states (e.g., TCI state 1 and TCI state 2) of the first cell (e.g., Cell 1) for reception of downlink signals (e.g., PDSCH, aperiodic CSI-RS, etc.) of the one or more first cells (e.g., Cell 1 and Cell 4), if a time offset between DCI scheduling a downlink signal and the downlink signal is less than the threshold.

A wireless device may use at least two TCI states (e.g., TCI state 1 and TCI state 2) of a first cell (e.g., Cell 1) for reception of downlink signals (e.g., PDSCH) via one or more first cells (e.g., Cell 1 and Cell 4) before a threshold. The wireless device may use the at least two TCI states (e.g., TCI state 1 and TCI state 2) of the first cell (e.g., Cell 1) for reception of downlink signals (e.g., PDSCH) of the one or more first cells (e.g., Cell 1 and Cell 4), for example, if a time offsets between DCI scheduling a downlink signals and the downlink signal is less than the threshold.

In FIG. 25, Case 2, a wireless device may apply at least two TCI states (e.g., TCI state 1 and TCI state 2) of a first cell to Cell 4, for example, the first cell is Cell 3. The wireless device may use at least one TCI state of and/or among the at least two TCI states (e.g., TCI state 1 and TCI state 2) of the first cell (e.g., Cell 3) for reception of downlink signals (e.g., PDSCH, aperiodic CSI-RS, etc.) via one or more first cells (e.g., Cell 3 and/or Cell 4) before a threshold. The wireless device may use at least one TCI state of and/or among the at least two TCI states (e.g., TCI state 1 and TCI state 2) of the first cell (e.g., Cell 3) for reception of downlink signals (e.g., PDSCH, aperiodic CSI-RS, etc.) of the one or more first cells (e.g., Cell 3, and Cell 4), if a time offset between DCI scheduling a downlink signal and the downlink signal is less than the threshold.

A wireless device may use at least two TCI states (e.g., TCI state 1 and TCI state 2) of a first cell (e.g., Cell 3) for reception of downlink signals (e.g., PDSCH) via the one or more first cells (e.g., Cell 3, and Cell 4) before a threshold. The wireless device may use the at least two TCI states (e.g., TCI state 1 and TCI state 2) of the first cell (e.g., Cell 3) for reception of downlink signals (e.g., PDSCH) of the one or more first cells (e.g., Cell 3, and Cell 4), if a time offset between DCI scheduling a downlink signals and the downlink signals is less than the threshold.

A wireless device may apply a selected TCI state of at least two TCI states and/or at least two default TCI states of a first cell to one or more second cells. The wireless device may apply the selected TCI state to each cell of the one or more second cells. The wireless device may prioritize the selected TCI state of the first cell.

A wireless device may apply a selected TCI state of at least two TCI states of a first cell to one or more second cells, for example, based on a first cell index of the first cell being lowest (e.g., smallest) among one or more first cell indexes of one or more first cells. The wireless device may prioritize the selected TCI state of the first cell, for example, based on the first cell index of the first cell being lowest (e.g., smallest) among the one or more first cell indexes of the one or more first cells.

A wireless device may apply a selected TCI state of at least two TCI states of a first cell to one or more second cells, for example, based on the at least two TCI states and/or at least two default TCI states of the first cell not comprising a single (e.g., default) TCI state of the one or more second cells. The wireless device may apply the selected TCI state of the at least two TCI states of the first cell to the one or more second cells, for example, based on the at least two TCI states and/or the at least two default TCI states of the first cell not comprising the single (e.g., default) TCI state of each cell of the one or more second cells.

A wireless device may apply a selected TCI state of at least two TCI states of a first cell to one or more second cells, for example, based on each TCI state of the at least two TCI states and/or at least two default TCI states of the first cell being different from a single (e.g., default) TCI state of the one or more second cells. The wireless device may apply the selected TCI state of the at least two TCI states of the first cell to the one or more second cells, for example, based on each TCI state of the at least two TCI states and/or the at least two default TCI states of the first cell being different from the single (e.g., default) TCI state of each cell of the one or more second cells.

A wireless device may prioritize a selected TCI state of a first cell, for example, based on at least two TCI states and/or at least two default TCI states of a first cell not comprising the single (e.g., default) TCI state of one or more second cells. The wireless device may prioritize the selected TCI state of the first cell, for example, based on each TCI state of the at least two TCI states and/or the at least two default TCI states of the first cell being different from the single (e.g., default) TCI state of the one or more second cells.

A wireless device may prioritize a selected TCI state of a first cell, for example, based on at least two TCI states and/or at least two default TCI states of the first cell not comprising the single (e.g., default) TCI state of each cell of one or more second cells. The wireless device may prioritize the selected TCI state of the first cell, for example, based on each TCI state of the at least two TCI states and/or the at least two default TCI states of the first cell being different from the single (e.g., default) TCI state of each cell of the one or more second cells.

A wireless device may receive DCI scheduling transmission of a downlink signal (e.g., PDSCH, aperiodic CSI-RS, etc.) via a second cell of one or more second cells. The wireless device may receive, via the second cell, the downlink signal based on a selected TCI state, for example, based on (e.g., in response to) applying a selected TCI state to the second cell, if a time offset between the DCI and the downlink signal is less than a threshold (e.g., timeDurationForQCL, beamSwitchTiming). The wireless device may receive, via the second cell, the downlink signal based on the selected TCI state, for example, based on (e.g., in response to) prioritizing the selected TCI state of the first cell, if a time offset between the DCI and the downlink signal is less than a threshold (e.g., timeDurationForQCL, beamSwitchTiming).

A wireless device may receive DCI scheduling transmission of a downlink signal (e.g., PDSCH, aperiodic CSI-RS, etc.) via each cell of one or more second cells. The wireless device may receive, via each cell of one or more second cells, the downlink signal based on a selected TCI state, for example, based on (e.g., in response to) applying the selected TCI state to the one or more second cells, if a time offset between the DCI and the downlink signal is less than a threshold (e.g., timeDurationForQCL, beamSwitchTiming). The wireless device may receive, via each cell of the one or more second cells, the downlink signal based on the selected TCI state, for example, based on (e.g., in response to) prioritizing the selected TCI state of the first cell, if a time offset between the DCI and the downlink signal is less than a threshold (e.g., timeDurationForQCL, beamSwitchTiming).

A selected TCI state may be associated with a PCI of a cell. A wireless device may prioritize the selected TCI state of a first cell, for example, based on the selected TCI state being associated with the PCI of the cell. The wireless device may apply the selected TCI state of at least two TCI states of the first cell to one or more second cells, for example, based on the selected TCI state being associated with the PCI of the cell.

A TCI state may be identified and/or indicated by a TCI state index that may be lowest among a first TCI state index of a first TCI state and a second TCI state index of a second TCI state. One or more configuration parameters may indicate, for the selected TCI state, the TCI state index that may be lowest among the first TCI state index of the first TCI state and the second TCI state index of the second TCI state. The selected TCI state may be the first TCI state, for example, based on the first TCI state index of the first TCI state being lower than the second TCI state index of the second TCI state. The selected TCI state may be the second TCI state, for example, based on the second TCI state index of the second TCI state being lower than the first TCI state index of the first TCI state. The first TCI state and the second TCI state may be both associated with the PCI of the cell.

A wireless device may prioritize a selected TCI state of a first cell, for example, based on the selected TCI state being identified and/or indicated by a TCI state index that may be lowest among a first TCI state index of a first TCI state and a second TCI state index of a second TCI state. The wireless device may apply the selected TCI state of the at least two TCI states of the first cell to the one or more second cells, for example, based on the selected TCI state being identified and/or indicated by the TCI state index that may be lowest among the first TCI state index of the first TCI state and the second TCI state index of the second TCI state.

A wireless device may receive a control command (e.g., MAC-CE, DCI) indicating an activation of at least two TCI states. A selected TCI state may be a first TCI state, for example, based on a first octet comprising a first TCI state index of the first TCI state being lower (e.g., less) than a second octet comprising a second TCI state index of a second TCI state. The control command may comprise the first octet and/or the second octet. The first TCI state index of the first TCI state may have a higher ordinal position (e.g., lower octet in the control command) than the second TCI state index of the second TCI state. The first TCI state and the second TCI state may both be associated with a PCI of a cell. The wireless device may prioritize the first TCI state of a first cell, for example, based on the first octet comprising the first TCI state index of the first TCI state being lower (e.g., less) than the second octet comprising the second TCI state index of the second TCI state. The wireless device may apply the first TCI state of at least two TCI states of the first cell to one or more second cells, for example, based on the first octet comprising the first TCI state index of the first TCI state being lower (e.g., less) than a second octet comprising the second TCI state index of the second TCI state.

A wireless device may prioritize a first TCI state of a first cell, for example, based on the first TCI state occurring first in a set (e.g., list) of at least two TCI states. The wireless device may apply the first TCI state of the at least two TCI states of a first cell to the one or more second cells, for example, based on the first TCI state occurring first in a set (e.g., list) of the at least two TCI states. A first TCI state may be the TCI state 5, for example, if the set (e.g., list) of the at least two TCI states = [TCI state 5, TCI state 8]. The first TCI state may be the TCI state 8, for example, if the set (e.g., list) of the at least two TCI states = [TCI state 8, TCI state 5].

A wireless device may prioritize a selected TCI state of a first cell, for example, based on one or more configuration parameters not comprising, for one or more second cells, an enable-two-default-TCI-states parameter (e.g., *enableTwoDefaultTCI-States*). The wireless device may apply the selected TCI state of at least two TCI states of the first cell to one or more second cells, for example, based on the one or more configuration parameters not comprising, for the one or more second cells, an enable-two-default-TCI-states parameter (e.g., *enableTwoDefaultTCI-States*).

A wireless device may prioritize a selected TCI state of a first cell, for example, based on one or more configuration parameters not comprising, for one or more second cells, an enable-default-TCI-state-per-coresetpoolindex parameter (e.g., *enableDefaultTCI-StatePerCoresetPoolIndex*). The wireless device may apply the selected TCI state of at least two TCI states of the first cell to the one or more second cells, for example, based on the one or more configuration parameters not comprising, for the one or more second cells, an enable-default-TCI-state-per-coresetpoolindex parameter (e.g., *enableDefaultTCI-StatePerCoresetPoolIndex*).

A wireless device may prioritize a selected TCI state of a first cell, for example, based on one or more second cells being associated with a single (e.g., default) TCI state. The wireless device may apply the selected TCI state of at least two TCI states of the first cell to the one or more second cells, for example, based on the one or more second cells being associated with a single (e.g., default) TCI state.

A wireless device may prioritize a selected TCI state of a first cell, for example, based on receiving a control command (e.g., DCI, MAC-CE, etc.) indicating activation of a single unified, joint, and/or downlink TCI state for one or more second cells. The wireless device may apply the selected TCI state of at least two TCI states of the first cell to the one or more second cells, for example, based on receiving the control command (e.g., DCI, MAC-CE, etc.) indicating activation of the single unified, joint, and/or downlink TCI state for the one or more second cells.

A wireless device may prioritize a selected TCI state of a first cell, for example, based on at least one TCI codepoint of one or more second cells not being mapped to, comprising, and/or indicating two TCI states. The wireless device may apply the selected TCI state of the at least two TCI states of the first cell to the one or more second cells, for example, based on the at least one TCI codepoint of the one or more second cells not being mapped to, comprising, and/or indicating two TCI states

A wireless device may prioritize a selected TCI state of a first cell, for example, based on each TCI codepoint of one or more second cells being mapped to, comprising, and/or indicating a single TCI state (e.g., a single downlink TCI state, a single joint TCI state, a single common/unified TCI state). The wireless device may apply the selected TCI state of at least two TCI states of the first cell to the one or more second cells, for example, based on each TCI codepoint of the one or more second cells being mapped to, comprising, and/or indicating a single TCI state (e.g., a single downlink TCI state, a single joint TCI state, a single common/unified TCI state).

In FIG. 25, Case 1, a wireless device may apply a first TCI state (e.g., TCI state 1) of a first cell (e.g., Cell 1) to one or more second cells (e.g., Cell 2 and Cell 3), for example, if the first cell is Cell 1, and if the selected TCI state is the first TCI state (e.g., TCI state 1) of the first cell (e.g., Cell 1). The wireless device may use and/or apply the first TCI state (e.g., TCI state 1) of the first cell (e.g., Cell 1) for reception of downlink signals (e.g., PDSCH, aperiodic CSI-RS, etc.) via the one or more second cells (e.g., Cell 2 and Cell 3) before the threshold. The wireless device may use the first TCI state (e.g., TCI state 1) of the first cell (e.g., Cell 1) for reception of downlink signals (e.g., PDSCH, aperiodic CSI-RS, etc.) of the one or more second cells (e.g., Cell 2 and Cell 3) if a time offset between DCI scheduling a downlink signal and the downlink signal is less than the threshold.

In FIG. 25, in Case 2, a wireless device may apply a first TCI state (e.g., TCI state 1) of a first cell (e.g., Cell 3) to one or more second cells (e.g., Cell 1 and Cell 2), for example, if the first cell is Cell 3, and if the selected TCI state is the third TCI state (e.g., TCI state 1) of the first cell (e.g., Cell 3). The wireless device may use the first TCI state (e.g., TCI state 1) of the first cell (e.g., Cell 3) for reception of downlink signals (e.g., PDSCH, aperiodic CSI-RS, etc.) via the one or more second cells (e.g., Cell 1 and Cell 2) before the threshold. The wireless device may use the first TCI state (e.g., TCI state 1) of the first cell (e.g., Cell 3) for reception of downlink signals (e.g., PDSCH, aperiodic CSI-RS, etc.) of the one or more second cells (e.g., Cell 1 and Cell 2), if a time offset between DCI scheduling a downlink signals and the downlink signal is less than the threshold.

One or more configuration parameters may comprise, for a plurality of cells, an enable-two-default-TCI-states parameter (e.g., *enableTwoDefaultTCI-States*). The one or more configuration parameters may comprise, for each cell of the plurality of cells, the enable-two-default-TCI-states parameter. The one or more configuration parameters may comprise, for each cell of the plurality of cells, the enable-two-default-TCI-states parameter, for example, based on the plurality of cells operating in a same band.

One or more configuration parameters may comprise, for a plurality of cells, an enable-default-TCI-state-per-coresetpoolindex parameter (e.g., *enableDefaultTCI-StatePerCoresetPoolIndex*). The one or more configuration parameters may comprise, for each cell of the plurality of cells, the enable-default-TCI-state-per-coresetpoolindex. The one or more configuration parameters may comprise, for each cell of the plurality of cells, the enable-default-TCI-state-per-coresetpoolindex parameter, for example, based on the plurality of cells operating in a same band.

At least one TCI codepoint of a plurality of cells may be mapped to, comprise, and/or indicate two TCI states (e.g., two downlink TCI states, two joint TCI states, two common and/or unified TCI states, etc.). At least one TCI codepoint of each cell of the plurality of cells may be mapped to, comprise, and/or indicate two TCI states (e.g., two downlink TCI states, two joint TCI states, two common and/or unified TCI states, etc.).

A base station may send (e.g., transmit), to a wireless device, control commands (e.g., DCI, MAC-CE, etc.) for a plurality of cells. The wireless device may send (e.g., transmit) a respective control command of the control commands for a respective cell of the plurality of cells. Each control command of the control commands may indicate mapping of at least two TCI states to a TCI codepoint of and/or for a respective cell of the plurality of cells. At least one TCI codepoint of the plurality of cells may be mapped to, comprise, and/or indicate two TCI states, for example, based on receiving, by the wireless device, the control commands. At least one TCI codepoint of each cell of the plurality of cells may be mapped to, comprise, and/or indicate two TCI states, for example, based on receiving, by the wireless device, the control commands. The base station may send (e.g., transmit) control commands that indicate mapping of at least two TCI states to a TCI codepoint of each cell of the plurality of cells, for example, based on the plurality of cells operating in the same band.

A base station may send (e.g., transmit), to a wireless device, control commands (e.g., DCI, MAC-CE, etc.) for a plurality of cells. The wireless device may send (e.g., transmit) a respective control command of the control commands for a respective cell of the plurality of cells. Each control command of the control commands may indicate activation of at least two TCI states (e.g., two downlink TCI states, two joint TCI states, two common and/or unified TCI states, etc.) for a respective cell of the plurality of cells. The plurality of cells may be activated with at least two TCI states, for example, based on receiving, by the wireless device, the control commands. Each cell of the plurality of cells may be activated with at least two respective TCI states, for example, based on receiving, by the wireless device, the control commands. The base station may send (e.g., transmit) control commands that indicates activation of at least two TCI states for the plurality of cells (or for each cell of the plurality of cells), for example, based on the plurality of cells operating in the same band.

A wireless device may perform a method comprising multiple operations. The wireless device may receive one or more messages indicating activation of two or more transmission configuration indicator (TCI) states, wherein each TCI state of the two more TCI states may be associated with a respective physical cell identifier (PCI). The wireless device may receive downlink control information (DCI) scheduling reception of a downlink signal via a cell. The wireless device may determine a TCI state based on a quantity of TCI states, among the at least two TCI states, that are associated with a PCI of the cell. The wireless device may receive the downlink signal based on the TCI state. A time offset between the DCI and the downlink signal may be less than a threshold. The wireless device may determine that the two or more TCI states may be associated with the PCI of the cell. The wireless device may select one of the at least two TCI states that may have a lowest TCI state index. Alternatively, the wireless device may determine that the at least two TCI states may be associated with a second PCI different from the PCI of the cell. The wireless may select one of the at least two TCI states of a control resource set (coreset) having a lowest coreset index. Alternatively, the wireless device may determine that a first TCI state of the at least two TCI states may be associated with the PCI of the cell. The wireless device may determine that a second TCI state of the at least two TCI states may be associated with a second PCI different from the PCI of the cell. The wireless device may select the first TCI state. The downlink signal may comprise at least one of an aperiodic channel-state information reference signal (CSI-RS), or a physical downlink shared channel (PDSCH) reception. The wireless device may receive a media access control control element (MAC-CE) indicating activation of a subset of the two or more TCI states. The wireless device may map the subset of the two or more TCI states to one or more TCI codepoints, wherein each TCI codepoint of the one or more TCI codepoints indicates one or more TCI states. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements, and a base station configured to communicate with the wireless device. A computer-readable medium may store instructions that, when executed, cause performance of the described method, additional operations, and/or include the additional elements.

A wireless device may receive, one or more messages activating a first transmission configuration indicator (TCI) state associated with a serving cell, and a second TCI state associated with the serving cell. The wireless device may receive downlink control information (DCI) scheduling reception of a downlink signal. The wireless device may select a TCI state, among the first TCI state and the second TCI state, based on a TCI state index of the first TCI state and the second TCI state. The wireless device may receive the downlink signal based on the TCI state. The wireless device may select a TCI state, among the first TCI state and the second TCI state, having a lowest TCI state index. The wireless device may receive one or more messages comprising one or more configuration parameters. The one or more configuration parameters may comprise a first TCI state index for the first TCI state, and a second TCI state index for the second TCI state. The second TCI state index and the first TCI state index may be different. The wireless device may selecting a TCI state, among the first TCI state and the second TCI state, and may be based on ordinal position in a medium access control control element (MAC-CE). The wireless device may select a TCI state, among the first TCI state and the second TCI state, having a highest TCI state index. A first TCI state index identifying the first TCI state may occur in a first octet that may be smaller than a second octet that may comprise a second TCI state index identifying the second TCI state. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements, and a base station configured to communicate with the wireless device. A computer-readable medium may store instructions that, when executed, cause performance of the described method, additional operations, and/or include the additional elements.

A wireless device may receive, one or more messages that may indicate activation of a first transmission configuration indicator (TCI) state associated with a first physical cell index (PCI) of a serving cell, and a second TCI state associated with a second PCI different from the first PCI of the serving cell. The wireless device may receive downlink control information (DCI) scheduling reception of a downlink signal. The wireless device may select, based on receiving the DCI, the first TCI state for reception of the downlink signal. The wireless device may receive the downlink signal based on the TCI state. The wireless device may map one or more of the first TCI state and the second TCI state to one or more TCI codepoints. Each TCI codepoint, of the one or more TCI codepoints, may indicate one or more TCI states. The one or more messages may comprise a message indicating a TCI codepoint that may comprise the first TCI state and the second TCI state. The one or more messages may comprise a first message that may indicate a first TCI codepoint comprising a first TCI state, and a second message may indicate a second TCI codepoint comprising the second TCI state. The wireless device may receive a plurality of media access control control elements (MAC-CE) comprising a first MAC-CE that may indicate activation of a first subset of a plurality of TCI states, and second MAC-CE that may indicate activation of a second subset of the plurality of TCI states. The first MAC-CE may indicate a first coreset pool index. The second MAC-CE may indicate a second coreset pool index. The wireless device may map the first subset of the plurality of TCI states to one or more first TCI codepoints. The wireless device may map the second subset of the plurality of TCI states to one or more second TCI codepoints. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements, and a base station configured to communicate with the wireless device. A computer-readable medium may store instructions that, when executed, cause performance of the described method, additional operations, and/or include the additional elements.

A wireless device may receive one or more downlink control messages/commands that may indicate activation of a first transmission configuration indicator (TCI) state that may be associated with a first physical cell index (PCI) of a serving cell, and a second TCI state that may be associated with a second PCI different from the first PCI of the serving cell. The wireless device may receive downlink control information (DCI) scheduling reception of a downlink signal, wherein a time/scheduling offset between the DCI and the downlink signal may be less/smaller than a threshold. The wireless device may receiving the downlink signal based on the first TCI state based on the time/scheduling offset being less than the threshold, and the first TCI state being associated with the PCI of the serving cell. The wireless device may receive one or more messages that may comprise one or more configuration parameters indicating a plurality of transmission configuration indicator (TCI) states that may comprise the at least two TCI states. The wireless device may receive a MAC-CE that may indicate activation of a subset of the plurality of TCI states. The wireless device may map the subset of the plurality of TCI states to one or more TCI codepoints comprising the TCI codepoint. Each TCI codepoint of the one or more TCI codepoints may indicate one or more TCI states. The one or more downlink control messages/commands may be a first downlink control message/command that may indicate a first TCI codepoint that may comprise/indicate the first TCI state for a first coreset pool index (e.g., CoresetPoolIndex = 0), and a second downlink control message/command may indicate a second TCI codepoint that may comprise/indicate the second TCI state for a second coreset pool index (e.g., CoresetPoolIndex = 1). The wireless device may receive a first MAC-CE that may indicate activation of a first subset of the plurality of TCI states, and a second MAC-CE may indicate activation of a second subset of the plurality of TCI states. The first MAC-CE may indicate a first coreset pool index. The second MAC-CE may indicate the second coreset pool index. The wireless device may map the first subset of the plurality of TCI states to one or more first TCI codepoints that may comprise the first TCI codepoint, and the second subset of the plurality of TCI states to one or more second TCI codepoints that may comprise the second TCI codepoint. The one or more configuration parameters may not indicate/comprise enableTwoDefaultTCI-States that may indicate to apply two default TCI states for PDSCH receptions if at least one TCI codepoint of the one or more TCI codepoints may be mapped to two TCI states. The one or more configuration parameters may not indicate/comprise enableDefaultTCI-StatePer-CoresetPoolIndex that may indicate to apply a default TCI state per coreset pool index when the one or more configuration parameters may indicate/comprise two different values for a coreset pool index parameter. The time offset may start from reception of the DCI (e.g., last/ending symbol of a PDCCH carrying the DCI) to/until a starting/initial symbol of the downlink signal. The wireless device may send (e.g., transmit) a user-equipment (UE) capability message indicating the threshold (e.g., timeDurationForQCL, beamSwitchTiming). The one or more configuration parameters may indicate a list of additional PCIs (e.g., additionalPCI-ToAddModList, SSB-MTC-AdditionalPCI). The list of additional PCIs may be associated with SSBs with different PCI than PCI of the serving cell. The one or more configuration parameters may indicate, for the list of additional PCIs, one or more additional PCI indexes. The one or more configuration parameters may indicate, for each additional PCI (e.g., SSB-MTC-AdditionalPCI) in/of the list of additional PCIs, a respective additional PCI index (e.g., additionalPCIIndex) of the one or more additional PCI indexes. The one or more configuration parameters may indicate, for the list of additional PCIs, one or more PCIs. The one or more configuration parameters may indicate, for each additional PCI (e.g., SSB-MTC-AdditionalPCI) in/of the list of additional PCIs, a respective PCI (e.g., additionalPCI, PhysCellId) of the one or more PCIs. The list of additional PCIs may be associated with one or more PCIs different from the PCI of the serving cell, wherein each additional PCI in/of the list of additional PCIs may be associated with (or indicates) a respective PCI of the one or more PCIs. The one or more configuration parameters may indicate, for the second TCI state, a second additional PCI index (e.g., AdditionalPCIIndex) of the one or more additional PCI indexes, wherein the second additional PCI index may indicate a second additional PCI, in/of the list of additional PCIs, that may comprise/indicate the second PCI of the one or more PCIs. The one or more configuration parameters may not indicate, for the first TCI state, an additional PCI index (e.g., AdditionalPCIIndex) of the one or more additional PCI indexes. The first TCI state may be associated with the first PCI of the serving cell based on the one or more configuration parameters not indicating, for the first TCI state, an additional PCI index. The one or more configuration parameters may indicate, for the first TCI state, a first additional PCI index (e.g., AdditionalPCIIndex) of the one or more additional PCI indexes. The first additional PCI index may indicate a first additional PCI, in/of the list of additional PCIs, that may comprise/indicate the first PCI of the one or more PCIs. The PDSCH reception may be a non-LTE dedicated PDSCH reception (e.g., broadcast message or multicast message) or a UE dedicated PDSCH reception. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements, and a base station configured to communicate with the wireless device. A computer-readable medium may store instructions that, when executed, cause performance of the described method, additional operations, and/or include the additional elements.

A wireless device may receive one or more downlink control messages/commands indicating activation of a first transmission configuration indicator (TCI) state associated with a first physical cell index (PCI) of a serving cell, and a second TCI state associated with the first PCI of the serving cell. The wireless device may receive downlink control information (DCI) scheduling reception of a downlink signal. A time/scheduling offset between the DCI and the downlink signal may be less/smaller than a threshold. The wireless device may receive the downlink signal based on a TCI state among the first TCI state and the second TCI state based on the time/scheduling offset that may be less than the threshold. The wireless device may receive the downlink signal based on the TCI state that may be further based on both the first TCI state and the second TCI state being associated with the first PCI of the serving cell. The wireless device may determine/select, for reception of the downlink signal, the TCI state among the first TCI state and the second TCI state. The wireless device may receive one or more messages that may comprise one or more configuration parameters. The one or more configuration parameters may indicate, a first TCI state index for the first TCI state, and a second TCI state index for the second TCI state. The TCI state may be a TCI state, among the first TCI state and the second TCI state, that may have a lowest/highest TCI state index among the first TCI state index and the second TCI state index. The wireless device may order the first TCI state and the second TCI state according to an ordinal position in the MAC-CE (refer to Claim 4 of the previous Case). The first TCI state index identifying the first TCI state may occur in a first octet that may be smaller than a second octet that may comprise the second TCI state index identifying the second TCI state. The TCI state may be the first TCI state based on the first octet being smaller than the second octet. The TCI state may be the first TCI state based on the first TCI state being activated for the first coreset pool index (e.g., CoresetPoolIndex = 0). The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements, and a base station configured to communicate with the wireless device. A computer-readable medium may store instructions that, when executed, cause performance of the described method, additional operations, and/or include the additional elements.

A wireless device may receive one or more downlink control messages/commands that may indicate activation of a first transmission configuration indicator (TCI) state that may be associated with a first physical cell index (PCI) different from a PCI of a serving cell, and a second TCI state associated with a second PCI different from the PCI of the serving cell. The wireless device may receive downlink control information (DCI) that may schedule reception of a downlink signal. A time/scheduling offset between the DCI and the downlink signal may be less/smaller than a threshold. The wireless device may receive the downlink signal based on a TCI state of a control resource set (coreset) that may have a lowest coreset index based on the time/scheduling offset being less than the threshold, the first TCI state that may be associated with the first PCI different from the PCI of the serving cell, and the second TCI state that may be associated with the second PCI different from the PCI of the serving cell. The first PCI and the second PCI may be the same or different. The wireless device may monitor one or more coresets that may be in an active downlink bandwidth part (BWP) of the serving cell that may be in the latest slot that the wireless device receives the DCI or the downlink signal. The one or more coresets may comprise the coreset. The wireless device may receive one or more messages comprising one or more configuration parameters. The one or more configuration parameters may indicate one or more coreset indexes for the one or more coresets. A coreset index, of the coreset, of the one or more coreset indexes may be the lowest among the one or more coreset indexes of the one or more coresets. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements, and a base station configured to communicate with the wireless device. A computer-readable medium may store instructions that, when executed, cause performance of the described method, additional operations, and/or include the additional elements.

A wireless device may receive one or more downlink control messages/commands that may indicate activation of at least two transmission configuration indicator (TCI) states. The wireless device may receive downlink control information (DCI) that may schedule reception of a downlink signal. A time/scheduling offset between the DCI and the downlink signal may be less/smaller than a threshold. The wireless device may receive the downlink signal based on the at least two TCI states based on the time/scheduling offset that may be less than the threshold, and at least one TCI state among/of the at least two TCI states may be associated with a first physical cell index (PCI) of a serving cell. The wireless device may receive one or more messages that may comprise one or more configuration parameters. The one or more configuration parameters may indicate/comprise enableTwoDefaultTCI-States that may indicate application of two default TCI states for PDSCH receptions, if at least one TCI codepoint of one or more TCI codepoints may be mapped to two TCI states. The one or more configuration parameters may indicate/comprise enableDefaultTCI-State-PerCoresetPoolIndex that may indicate application of a default TCI state per coreset pool index, if the one or more configuration parameters may indicate/comprise two different values for a coreset pool index parameter. The at least two TCI states may comprise a first TCI state and a second TCI state. The first TCI state may be associated with the first PCI of the serving cell. Alternatively, the first TCI state may be associated with a second PCI different from the first PCI of the serving cell. The second TCI state may be associated with the first PCI of the serving cell. Alternatively, the second TCI state may be associated with a second PCI different from the first PCI of the serving cell. The downlink signal may be a PDSCH reception. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements, and a base station configured to communicate with the wireless device. A computer-readable medium may store instructions that, when executed, cause performance of the described method, additional operations, and/or include the additional elements.

A wireless device may receive, one or more downlink control messages/commands that may indicate activation of a first transmission configuration indicator (TCI) state associated with a first physical cell index (PCI) different from a PCI of a serving cell, and a second TCI state associated with a second PCI different from the PCI of the serving cell. The wireless device may receive downlink control information (DCI) scheduling reception of a downlink signal, wherein a time/scheduling offset between the DCI and the downlink signal may be less/smaller than a threshold, based on the time/scheduling offset being less than the threshold. The wireless device may receive the downlink signal based on a TCI state of a control resource set (coreset) with a lowest coreset index, and a default TCI state among the first TCI state and the second TCI state. The wireless device may receive the downlink signal based on the first TCI state that may be associated with the first PCI different from the PCI of the serving cell, and the second TCI state that may be associated with the second PCI different from the PCI of the serving cell. The downlink signal may be a repetition of a PDSCH transmission/reception. The wireless may receive one or more first repetitions of the repetitions of the PDSCH transmission/reception that may be based on the TCI state of the coreset, and one or more second repetitions of the repetitions of the PDSCH transmission/reception that may be based on the default TCI state. The one or more first/second repetitions may comprise a starting/initial/earliest repetition of the repetitions of the PDSCH transmission/reception. The downlink signal may be a UE-dedicated PDSCH reception. The wireless device may receive second DCI scheduling reception of a second downlink signal. A second time/scheduling offset between the second DCI and the second downlink signal may be less/smaller than the threshold. The wireless device may receive the second DCI based on the second time/scheduling offset that may be less than the threshold. The wireless device may receive the second downlink signal based on the TCI state of the coreset that may have a lowest coreset index. The wireless device may not receive the second downlink signal based on the default TCI state among the first TCI state and the second TCI state. The second downlink signal may be a non-UE dedicated PDSCH reception. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements, and a base station configured to communicate with the wireless device. A computer-readable medium may store instructions that, when executed, cause performance of the described method, additional operations, and/or include the additional elements.

A base station may send (e.g., transmit) to a wireless device, one or more messages that may comprise one or more configuration parameters for a serving cell. The one or more configuration parameters may indicate a plurality of transmission configuration indicator (TCI) states associated with a plurality of physical cell indexes (PCIs). The base station may determine to send (e.g., transmit) a downlink control message/command that may indicate activation of a list/set of at least two TCI states for a control resource set (coreset) that may have a lowest coreset index. The base station may select a first TCI state, among the plurality of TCI states, that may be associated with a PCI of the serving cell. The base station may send (e.g., transmit) the downlink control message/command that may indicate activation of the at least two TCI states. The first TCI state may occur first in the set/list of the at least two TCI states. The first TCI state may be associated with the PCI of the serving cell based on the plurality of TCI states (or the subset of the plurality of TCI states) being associated with the plurality of PCIs. The one or more configuration parameters do not indicate SFN scheme for PDSCH receptions (e.g., do not comprise sfnSchemePdsch). The one or more configuration parameters may indicate SFN scheme for PDCCH receptions (e.g., comprise sfnSchemePdcch set to 'sfnSchemeA'). The one or more configuration parameters may not indicate, for the coreset, followUnifiedTCIstate that may indicate to apply one or more activated/indicated unified TCI states (e.g., DL only TCI states or Joint TCI states). The downlink control message/command is a MAC-CE. The base station may comprise one or more processors; and memory storing instructions that, when executed by the one or more processors, cause the wireless device to perform the described method, additional operations and/or include the additional elements. A system may comprise a base station configured to perform the described method, additional operations and/or include the additional elements, and a wireless device configured to communicate with the base station. A computer-readable medium may store instructions that, when executed, cause performance of the described method, additional operations, and/or include the additional elements.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a wireless device, one or more messages indicating activation of two or more transmission configuration indicator (TCI) states, wherein each TCI state of the two more TCI states is associated with a respective physical cell identifier (PCI).

Clause 2. The method of clause 1, further comprising: receiving downlink control information (DCI) scheduling reception of a downlink signal via a cell.

Clause 3. The method of any one of clauses 1-2, further comprising: determining a TCI state based on a quantity of TCI states, among the two or more TCI states, that are associated with a PCI of the cell.

Clause 4. The method of any one of clauses 1-3, further comprising: receiving the downlink signal based on the TCI state.

Clause 5. The method of any one of clauses 1-4, wherein a time offset between the DCI and the downlink signal is less than a threshold.

Clause 6. The method of any one of clauses 1-5, wherein the determining comprises: determining that the two or more TCI states are associated with the PCI of the cell; and selecting one of the two or more TCI states having a lowest TCI state index.

Clause 7. The method of any one of clauses 1-6, wherein the determining comprises: determining that the two or more TCI states are associated with a second PCI different from the PCI of the cell; and selecting one of the two or more TCI states of a control resource set (coreset) having a lowest coreset index.

Clause 8. The method of any one of clauses 1-7, wherein the determining comprises: determining that a first TCI state of the two or more TCI states is associated with the PCI of the cell; determining that a second TCI state of the two or more TCI states is associated with a second PCI different from the PCI of the cell; and selecting the first TCI state.

Clause 9. The method of any one of clauses 1-8, wherein the downlink signal comprises at least one of: an aperiodic channel-state information reference signal (CSI-RS); or a physical downlink shared channel (PDSCH) reception.

Clause 10. The method of any one of clauses 1 - 9, wherein the downlink signal is a repetition of a PDSCH.

Clause 11. The method of any one of clauses 1 - 10, further comprising: receiving a media access control control element (MAC-CE) indicating activation of a subset of the two or more TCI states.

Clause 12. The method of any one of clauses 1 - 11, further comprising: mapping the subset of the two or more TCI states to one or more TCI codepoints, wherein each TCI codepoint of the one or more TCI codepoints indicates one or more TCI states.

Clause 13. The method of any one of clauses 1 - 12, wherein one or more of the one or more messages is a MAC-CE.

Clause 14. The method of any one of clauses 1 - 13, further comprising: mapping one or more of the two or more TCI states to one or more TCI codepoints; wherein each TCI codepoint of the one or more TCI codepoints indicates one or more TCI states.

Clause 15. The method of any one of clauses 1 - 14, wherein the one or more messages comprise a message indicating a TCI codepoint that comprises the first TCI state and the second TCI state.

Clause 16. The method of any one of clauses 1 - 15, wherein the one or more messages comprise: a first message indicating a first TCI codepoint that comprises a first TCI state; and a second message indicating a second TCI codepoint that comprises a second TCI state.

Clause 17. A wireless device comprising: one or more processors; and memory storing instructions that, when executed, cause the wireless device to perform the method of any one of clauses 1 - 16.

Clause 18. A system comprising: a wireless device configured to perform the method of any one of clauses 1 - 16; and a base station configured to send the one or more messages indicating activation of two or more TCI states.

Clause 19. A computer-readable medium storing instructions that, when executed, cause performance of the method of any one of clauses 1 - 16.

Clause 20. A method comprising: receiving, by a wireless device, one or more messages activating: a first transmission configuration indicator (TCI) state associated with a serving cell; and a second TCI state associated with the serving cell.

Clause 21. The method of clause 20, further comprising: receiving downlink control information (DCI) scheduling reception of a downlink signal.

Clause 22. The method of any one of clauses 20 - 21, further comprising: selecting a TCI state, among the first TCI state and the second TCI state, based on a TCI state index of the first TCI state and the second TCI state.

Clause 23. The method of any one of clauses 20 - 22, further comprising: receiving the downlink signal based on the TCI state.

Clause 24. The method of any one of clauses 20 - 23, wherein the selecting comprises selecting a TCI state, among the first TCI state and the second TCI state, having a lowest TCI state index.

Clause 25. The method of any one of clauses 20 - 24, further comprising: receiving one or more messages comprising one or more configuration parameters, wherein the one or more configuration parameters comprise: a first TCI state index for the first TCI state; and a second TCI state index for the second TCI state, wherein the second TCI state index and the first TCI state index are different.

Clause 26. The method of any one of clauses 20 - 25, wherein the selecting comprises: selecting a TCI state, among the first TCI state and the second TCI state, based on ordinal position in a medium access control control element (MAC-CE).

Clause 27. The method of any one of clauses 20 - 26, wherein the selecting comprises: selecting a TCI state, among the first TCI state and the second TCI state, having a highest TCI state index.

Clause 28. The method of any one of clauses 20 - 27, wherein a first TCI state index identifying the first TCI state occurs in a first octet that is smaller than a second octet that comprises a second TCI state index identifying the second TCI state.

Clause 29. A wireless device comprising: one or more processors; and memory storing instructions that, when executed, cause the wireless device to perform the method of any one of clauses 20 - 28.

Clause 30. A system comprising: a wireless device configured to perform the method of any one of clauses 20 - 28; and a base station configured to send the one or more messages activating the first TCI state and the second TCI state.

Clause 31. A computer-readable medium storing instructions that, when executed, cause performance of the method of any one of clauses 20 - 28.

Clause 32. A method comprising: receiving, by a wireless device, one or more messages indicating activation of: a first transmission configuration indicator (TCI) state associated with a first physical cell index (PCI) of a serving cell; and a second TCI state associated with a second PCI different from the first PCI of the serving cell.

Clause 33. The method of clause 32, further comprising: receiving downlink control information (DCI) scheduling reception of a downlink signal.

Clause 34. The method of any one of clauses 32 - 33, further comprising: selecting, based on receiving the DCI, the first TCI state for reception of the downlink signal.

Clause 35. The method of any one of clauses 32 - 34, further comprising: receiving the downlink signal based on the TCI state.

Clause 36. The method of any one of clauses 32 - 35, further comprising: receiving a plurality of media access control control elements (MAC-CE) comprising: a first MAC-CE indicating activation of a first subset of a plurality of TCI states, wherein the first MAC-CE indicates a first coreset pool index; and a second MAC-CE indicating activation of a second subset of the plurality of TCI states, wherein the second MAC-CE indicates a second coreset pool index.

Clause 37. The method of any one of clauses 32 - 36, further comprising: mapping the first subset of the plurality of TCI states to one or more first TCI codepoints, and mapping the second subset of the plurality of TCI states to one or more second TCI codepoints.

Clause 38. A wireless device comprising: one or more processors; and memory storing instructions that, when executed, cause the wireless device to perform the method of any one of clauses 32 - 37.

Clause 39. A system comprising: a wireless device configured to perform the method of any one of clauses 32 - 37; and a base station configured to send the one or more messages indicating activation of the first TCI state and the second TCI state.

Clause 40. A computer-readable medium storing instructions that, when executed, cause performance of the method of any one of clauses 32 - 37.

Clause 41. A method comprising: receiving, by a wireless device, one or more downlink control messages indicating activation of: a first transmission configuration indicator (TCI) state associated with a first physical cell index (PCI) of a serving cell; and a second TCI state associated with a second PCI different from the first PCI of the serving cell.

Clause 42. The method of clause 41, further comprising: receiving downlink control information (DCI) scheduling reception of a downlink signal, wherein a time/scheduling offset between the DCI and the downlink signal is less/smaller than a threshold.

Clause 43. The method of any one of clauses 41 - 42, further comprising: receiving the downlink signal based on the first TCI state based on: the time/scheduling offset being less than the threshold; and the first TCI state being associated with the PCI of the serving cell.

Clause 44. The method of any one of clauses 41 - 43, further comprising: receiving one or more messages comprising one or more configuration parameters indicating a plurality of transmission configuration indicator (TCI) states that comprise the at least two TCI states.

Clause 45. The method of any one of clauses 41 - 44, wherein the one or more downlink control messages is a single downlink control message/command indicating a TCI codepoint that comprises/indicates the at least two TCI states.

Clause 46. The method of any one of clauses 41 - 45, wherein the one or more downlink control messages are: a first downlink control message/command indicating a first TCI codepoint that comprises/indicates the first TCI state for a first coreset pool index and a second downlink control message/command indicating a second TCI codepoint that comprises/indicates the second TCI state for a second coreset pool index.

Clause 47. The method of any one of clauses 41 - 46, further comprising: mapping the first subset of the plurality of TCI states to one or more first TCI codepoints comprising the first TCI codepoint; and the second subset of the plurality of TCI states to one or more second TCI codepoints comprising the second TCI codepoint.

Clause 48. The method of any one of clauses 41 - 47, wherein the one or more configuration parameters do not indicate to apply two default TCI states for PDSCH receptions when at least one TCI codepoint of the one or more TCI codepoints is mapped to two TCI states.

Clause 49. The method of any one of clauses 41 - 48, wherein the one or more configuration parameters do not indicate to apply a default TCI state per coreset pool index when the one or more configuration parameters indicate/comprise two different values for a coreset pool index parameter.

Clause 50. The method of any one of clauses 41 - 49, wherein the time offset starts from reception of the DCI to/until a starting/initial symbol of the downlink signal.

Clause 51. The method of any one of clauses 41 - 50, further comprising: sending a user-equipment (LTE) capability message indicating the threshold.

Clause 52. The method of any one of clauses 41 - 51, wherein the one or more configuration parameters indicate a list of additional PCIs, wherein the list of additional PCIs are associated with SSBs with different PCI than PCI of the serving cell.

Clause 53. The method of any one of clauses 41 - 52, wherein the one or more configuration parameters indicate, for the list of additional PCIs, one or more additional PCI indexes, wherein the one or more configuration parameters indicate, for each additional PCI in/of the list of additional PCIs, a respective additional PCI index of the one or more additional PCI indexes.

Clause 54. The method of any one of clauses 41 - 53, wherein the one or more configuration parameters indicate, for the list of additional PCIs, one or more PCIs, wherein the one or more configuration parameters indicate, for each additional PCI in/of the list of additional PCIs, a respective PCI of the one or more PCIs.

Clause 55. The method of any one of clauses 41 - 54, wherein the list of additional PCIs are associated with one or more PCIs different from the PCI of the serving cell, wherein each additional PCI in/of the list of additional PCIs is associated with a respective PCI of the one or more PCIs.

Clause 56. The method of any one of clauses 41 - 55, wherein the one or more configuration parameters indicate, for the second TCI state, a second additional PCI index of the one or more additional PCI indexes, wherein the second additional PCI index indicates a second additional PCI, in/of the list of additional PCIs, with/comprising/indicating the second PCI of the one or more PCIs.

Clause 57. The method of any one of clauses 41 - 56, wherein the one or more configuration parameters do not indicate, for the first TCI state, an additional PCI index of the one or more additional PCI indexes, wherein the first TCI state is associated with the first PCI of the serving cell based on the one or more configuration parameters not indicating, for the first TCI state, an additional PCI index.

Clause 58. The method of any one of clauses 41 - 57, wherein the one or more configuration parameters indicate, for the first TCI state, a first additional PCI index of the one or more additional PCI indexes, wherein the first additional PCI index indicates a first additional PCI, in/of the list of additional PCIs, with/comprising/indicating the first PCI of the one or more PCIs.

Clause 59. The method of any one of clauses 41 - 58, wherein the PDSCH reception is a non-UE dedicated PDSCH reception or a LTE dedicated PDSCH reception.

Clause 60. A wireless device comprising: one or more processors, and memory storing instructions that, when executed, cause the wireless device to perform the method of any one of clauses 41 - 59.

Clause 61. A system comprising: a wireless device configured to perform the method of any one of clauses 41 - 59, and a base station configured to send one or more downlink control messages indicating activation of the first TCI state and the second TCI state.

Clause 62. A computer-readable medium storing instructions that, when executed, cause performance of the method of any one of clauses 41 - 59.

Clause 63. A method comprising: receiving, by a wireless device, one or more downlink control messages indicating activation of: a first transmission configuration indicator (TCI) state associated with a first physical cell index (PCI) of a serving cell; and a second TCI state associated with the first PCI of the serving cell.

Clause 64. The method of clause 63, further comprising: receiving downlink control information (DCI) scheduling reception of a downlink signal, wherein a time/scheduling offset between the DCI and the downlink signal is less/smaller than a threshold.

Clause 65. The method of any one of clauses 63 - 64, further comprising: receiving the downlink signal based on a TCI state among the first TCI state and the second TCI state based on the time/scheduling offset being less than the threshold.

Clause 66. The method of any one of clauses 63 - 65, wherein the receiving the downlink signal based on the TCI state is further based on both the first TCI state and the second TCI state being associated with the first PCI of the serving cell.

Clause 67. The method of any one of clauses 63 - 66, wherein the TCI state is the first TCI state based on the first octet being smaller than the second octet.

Clause 68. The method of any one of clauses 63 - 67, wherein the TCI state is the first TCI state based on the first TCI state being activated for the first coreset pool index.

Clause 69. A wireless device comprising: one or more processors, and memory storing instructions that, when executed, cause the wireless device to perform the method of any one of clauses 63 - 68.

Clause 70. A system comprising: a wireless device configured to perform the method of any one of clauses 63 - 68; and a base station configured to send the one or more downlink control messages indicating activation of the first TCI state and the second TCI state.

Clause 71. A computer-readable medium storing instructions that, when executed, cause performance of the method of any one of clauses 63 - 68.

Clause 72. A method comprising: receiving, by a wireless device, one or more downlink control messages indicating activation of: a first transmission configuration indicator (TCI) state associated with a first physical cell index (PCI) different from a PCI of a serving cell; and a second TCI state associated with a second PCI different from the PCI of the serving cell.

Clause 73. The method of clause 72, further comprising: receiving downlink control information (DCI) scheduling reception of a downlink signal, wherein a time/scheduling offset between the DCI and the downlink signal is less/smaller than a threshold.

Clause 74. The method of any one of clauses 72 - 73, further comprising: receiving the downlink signal based on a TCI state of a control resource set (coreset) with a lowest coreset index based on: the time/scheduling offset being less than the threshold; and the first TCI state being associated with the first PCI different from the PCI of the serving cell; and the second TCI state being associated with the second PCI different from the PCI of the serving cell.

Clause 75. The method of any one of clauses 72 - 74, wherein the first PCI and the second PCI are different.

Clause 76. The method of any one of clauses 72 - 75, further comprising: monitoring one or more coresets in an active downlink bandwidth part (BWP) of the serving cell in the latest slot that the wireless device receives the DCI or the downlink signal.

Clause 77. The method of any one of clauses 72 - 76, wherein the one or more coresets comprise the coreset.

Clause 78. The method of any one of clauses 72 - 77, further comprising: receiving one or more messages comprising one or more configuration parameters, wherein the one or more configuration parameters indicate one or more coreset indexes for the one or more coresets.

Clause 79. The method of any one of clauses 72 - 78, wherein a coreset index, of the coreset, of the one or more coreset indexes is the lowest among the one or more coreset indexes of the one or more coresets.

Clause 80. A wireless device comprising: one or more processors, and memory storing instructions that, when executed, cause the wireless device to perform the method of any one of clauses 72 - 79.

Clause 81. A system comprising: a wireless device configured to perform the method of any one of clauses 72 - 79; and a base station configured to send the one or more downlink control messages indicating activation of the first TCI state and the second TCI state.

Clause 82. A computer-readable medium storing instructions that, when executed, cause performance of the method of any one of clauses 72 - 79.

Clause 83. A method comprising: receiving, by a wireless device, one or more downlink control messages indicating activation of at least two transmission configuration indicator (TCI) states.

Clause 84. The method of clause 83, further comprising receiving downlink control information (DCI) scheduling reception of a downlink signal, wherein a time/scheduling offset between the DCI and the downlink signal is less/smaller than a threshold.

Clause 85. The method of clause 83 - 84, further comprising: receiving the downlink signal based on the at least two TCI states based on: the time/scheduling offset being less than the threshold; and at least one TCI state among/of the at least two TCI states being associated with a first physical cell index (PCI) of a serving cell.

Clause 86. The method of any one of clauses 83 - 85, further comprising: receiving one or more messages comprising one or more configuration parameters.

Clause 87. The method of any one of clauses 83 - 86, wherein the one or more configuration parameters indicate to apply two default TCI states for PDSCH receptions when at least one TCI codepoint of one or more TCI codepoints is mapped to two TCI states.

Clause 88. The method of any one of clauses 83 - 87, wherein the one or more configuration parameters indicate to apply a default TCI state per coreset pool index when the one or more configuration parameters indicate/comprise two different values for a coreset pool index parameter.

Clause 89. The method of any one of clauses 83 - 88, wherein the at least two TCI states comprise a first TCI state and a second TCI state.

Clause 90. The method of any one of clauses 83 - 89, wherein: the first TCI state is associated with the first PCI of the serving cell; and the second TCI state is associated with the first PCI of the serving cell.

Clause 91. The method of any one of clauses 83 - 90, wherein: the first TCI state is associated with the first PCI of the serving cell; and the second TCI state is associated with a second PCI different from the first PCI of the serving cell.

Clause 92. The method of any one of clauses 83 - 91, wherein: the second TCI state is associated with the first PCI of the serving cell; and the first TCI state is associated with a second PCI different from the first PCI of the serving cell.

Clause 93. A wireless device comprising: one or more processors, and memory storing instructions that, when executed, cause the wireless device to perform the method of any one of clauses 83 - 92.

Clause 94. A system comprising: a wireless device configured to perform the method of any one of clauses 83 - 92; and a base station configured to send the one or more downlink control messages indicating activation of the at least two TCI states.

Clause 95. A computer-readable medium storing instructions that, when executed, cause performance of the method of any one of claims 83 - 92.

Clause 96. A method comprising: receiving, by a wireless device, one or more downlink control messages indicating activation of: a first transmission configuration indicator (TCI) state associated with a first physical cell index (PCI) different from a PCI of a serving cell; and a second TCI state associated with a second PCI different from the PCI of the serving cell.

Clause 97. The method of clause 96, further comprising: receiving downlink control information (DCI) scheduling reception of a downlink signal, wherein a time/scheduling offset between the DCI and the downlink signal is less/smaller than a threshold.

Clause 98. The method of any one of clauses 96 - 97, further comprising: receiving the downlink signal based on the time/scheduling offset being less than the threshold, based on: a TCI state of a control resource set (coreset) with a lowest coreset index; and a default TCI state among the first TCI state and the second TCI state.

Clause 99. The method of any one of clauses 96 - 98, wherein the receiving the downlink signal is further based on: the first TCI state being associated with the first PCI different from the PCI of the serving cell; and the second TCI state being associated with the second PCI different from the PCI of the serving cell.

Clause 100. The method of any one of clauses 96 - 99, wherein the downlink signal is a repetitions of a PDSCH transmission/reception.

Clause 101. The method of any one of clauses 96 - 100, wherein the receiving comprises: receiving: one or more first repetitions of the repetitions of the PDSCH transmission/reception based on the TCI state of the coreset; and one or more second repetitions of the repetitions of the PDSCH transmission/reception based on the default TCI state.

Clause 102. The method of any one of clauses 96 - 101, wherein the one or more first/second repetitions comprise a starting/initial/earliest repetition of the repetitions of the PDSCH transmission/reception.

Clause 103. The method of any one of clauses 96 - 102, wherein the downlink signal is a LTE-dedicated PDSCH reception.

Clause 104. The method of any one of clauses 96 - 103, further comprising: receiving a second DCI scheduling reception of a second downlink signal, wherein a second time/scheduling offset between the second DCI and the second downlink signal is less/smaller than the threshold.

Clause 105. The method of any one of clauses 96 - 104, further comprising: receiving, based on the second time/scheduling offset being less than the threshold, the second downlink signal based on the TCI state of the coreset with a lowest coreset index.

Clause 106. The method of any one of clauses 96 - 105, further comprising not receiving the second downlink signal based on the default TCI state among the first TCI state and the second TCI state.

Clause 107. The method of any one of clauses 96 - 106, wherein the second downlink signal is a non-LTE dedicated PDSCH reception.

Clause 108. A wireless device comprising: one or more processors, and memory storing instructions that, when executed, cause the wireless device to perform the method of any one of clauses 96 - 107.

Clause 109. A system comprising: a wireless device configured to perform the method of any one of clauses 96 - 107; and a base station configured to send the one or more downlink control messages indicating activation of the first TCI state and the second TCI state.

Clause 110. A computer-readable medium storing instructions that, when executed, cause performance of the method of any one of clauses 96 - 107.

Clause 111. A method comprising: sending, by a base station to a wireless device, one or more messages comprising one or more configuration parameters for a serving cell, wherein the one or more configuration parameters indicate a plurality of transmission configuration indicator (TCI) states associated with a plurality of physical cell indexes (PCIs).

Clause 112. The method of clause 111, further comprising: determining to transmit a downlink control message/command that indicates activation of a list/set of at least two TCI states for a control resource set (coreset) with a lowest coreset index.

Clause 113. The method of any one of clauses 111 - 112, further comprising: selecting a first TCI state, based on the determining, among the plurality of TCI states, associated with a PCI of the serving cell.

Clause 114. The method of any one of clauses 111 - 113, further comprising: sending the downlink control message/command that indicates activation of the at least two TCI states, wherein the first TCI state occurs first in the set/list of the at least two TCI states.

Clause 115. The method of any one of clauses 111 - 114, the first TCI state is associated with the PCI of the serving cell based on the plurality of TCI states being associated with the plurality of PCIs.

Clause 116. The method of any one of clauses 111 - 115, wherein the one or more configuration parameters do not indicate SFN scheme for PDSCH receptions.

Clause 117. The method of any one of clauses 111 - 116, wherein the one or more configuration parameters indicate SFN scheme for PDCCH receptions.

Clause 118. The method of any one of clauses 111 - 117, wherein the one or more configuration parameters do not indicate, for the coreset, followUnifiedTCIstate that indicates to apply one or more activated/indicated unified TCI states.

Clause 119. The method of any one of clauses 111 - 118, wherein the downlink control message/command is a MAC-CE.

Clause 120. A base station comprising: one or more processors, and memory storing instructions that, when executed, cause the base station to perform the method of any one of clauses 111 - 119.

Clause 121. A system comprising: a base station configured to perform the method of any one of clauses 111 - 119, and a wireless device configured to receive the one or more messages comprising one or more configuration parameters for a serving cell.

Clause 122. A computer-readable medium storing instructions that, when executed, cause performance of the method of any one of clauses 111 - 119.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

   receiving, by a wireless device, one or more messages indicating activation of two or more transmission configuration indicator (TCI) states, wherein each TCI state of the two more TCI states is associated with a respective physical cell identifier (PCI);
   receiving downlink control information (DCI) scheduling reception of a downlink signal via a cell;
   determining a TCI state based on a quantity of TCI states, among the two or more TCI states, that are associated with a PCI of the cell; and
   receiving the downlink signal based on the TCI state.

2. The method of claim 1, wherein a time offset between the DCI and the downlink signal is less than a threshold.

3. The method of any one of claims 1-2, wherein the determining comprises:

   determining that the two or more TCI states are associated with the PCI of the cell; and
   selecting one of the two or more TCI states having a lowest TCI state index.

4. The method of any one of claims 1-3, wherein the determining comprises:

   determining that the two or more TCI states are associated with a second PCI different from the PCI of the cell; and
   selecting one of the two or more TCI states of a control resource set (coreset) having a lowest coreset index.

5. The method of any one of claims 1-4, wherein the determining comprises:

   determining that a first TCI state of the two or more TCI states is associated with the PCI of the cell;
   determining that a second TCI state of the two or more TCI states is associated with a second PCI different from the PCI of the cell; and
   selecting the first TCI state.

6. The method of any one of claims 1-5, wherein the downlink signal comprises at least one of:

   an aperiodic channel-state information reference signal (CSI-RS); or
   a physical downlink shared channel (PDSCH) reception.

7. The method of any one of claims 1-6, wherein the downlink signal is a repetition of a PDSCH.

8. The method of any one of claims 1-7, further comprising:

   receiving a media access control control element (MAC-CE) indicating activation of a subset of the two or more TCI states; and
   mapping the subset of the two or more TCI states to one or more TCI codepoints, wherein each TCI codepoint of the one or more TCI codepoints indicates one or more TCI states.

9. The method of any one of claims 1-8, wherein one or more of the one or more messages is a MAC-CE.

10. The method of any one of claims 1-9, further comprising mapping one or more of the two or more TCI states to one or more TCI codepoints; wherein each TCI codepoint of the one or more TCI codepoints indicates one or more TCI states.

11. The method of any one of claims 1 - 10, wherein the one or more messages comprise a message indicating a TCI codepoint that comprises the first TCI state and the second TCI state.

12. The method of any one of claim 1 - 11, wherein the one or more messages comprise:

   a first message indicating a first TCI codepoint that comprises a first TCI state; and
   a second message indicating a second TCI codepoint that comprises a second TCI state.

13. A wireless device comprising:

   one or more processors; and
   memory storing instructions that, when executed, cause the wireless device to perform the method of any one of claims 1 - 12.

14. A system comprising:

   a wireless device configured to perform the method of any one of claims 1 - 12; and
   a base station configured to send the one or more messages indicating activation of two or more TCI states.

15. A computer-readable medium storing instructions that, when executed, cause performance of the method of any one of claims 1 - 12.

**FIG. 1A**

100

- Wireless Device 106
- RAN 104
- CN 102
- DN(s)

**FIG. 1B**

150

- Wireless Device 156A
- gNB 160A
- ng-eNB 162A
- Base Station 162B
- Base Station 160B
- Wireless Devic 156B
- Wireless Devices 156
- NG-RAN 154
- Uu, Xn, NG
- AMF 158A / UPF 158B — AMF/UPF 158
- 5G-CN 152
- DN(s)

97

## Wireless Device 210

| Wireless Device 210 | | Base Station 220 |
|---|---|---|
| SDAP 215 | ↔ | SDAP 225 |
| PDCP 214 | ↔ | PDCP 224 |
| RLC 213 | ↔ | RLC 223 |
| MAC 212 | ↔ | MAC 222 |
| PHY 211 | ↔ | PHY 221 |

## FIG. 2A

| Wireless Device 210 | Base Station 220 | AMF 230 |
|---|---|---|
| NAS 217 | | NAS 237 |
| RRC 216 | RRC 226 | |
| PDCP 214 | PDCP 224 | |
| RLC 213 | RLC 223 | |
| MAC 212 | MAC 222 | |
| PHY 211 | PHY 221 | |

## FIG. 2B

**IP Packets**

**FIG. 3**

EP 4 322 416 A1

| | IP Packet | | IP Packet | | IP Packet | |
|---|---|---|---|---|---|---|
| | *n* | | *n+1* | | *m* | |

| SDAP 225 | radio bearer 402 | H | SDAP SDU | | H | SDAP SDU | | radio bearer 404 | H | SDAP SDU | |
|---|---|---|---|---|---|---|---|---|---|---|---|

SDAP PDU

| PDCP 224 | H | PDCP SDU | | H | PDCP SDU | | H | PDCP SDU | |
|---|---|---|---|---|---|---|---|---|---|

| RLC 223 | H | RLC SDU | | H | RLC SDU | | H | SDU Seg. | | H | SDU Seg. | |
|---|---|---|---|---|---|---|---|---|---|---|---|

| MAC 222 | H | MAC SDU | H | MAC SDU | H | MAC SDU | H | MAC SDU | |
|---|---|---|---|---|---|---|---|---|---|

| PHY 221 | PHY SDU (Transport Block) | PHY SDU | |
|---|---|---|---|

**FIG. 4A**

| R | F | LCID | SDU Length |
|---|---|---|---|

| H | MAC CE | H | MAC CE | H | MAC SDU | H | MAC SDU | |
|---|---|---|---|---|---|---|---|---|

MAC PDU

**FIG. 4B**

**FIG. 5A**

**FIG. 5B**

Downlink

Uplink

Logical Channels

Transport Channels

Physical Channels

Physical Signals

PCCH BCCH CCCH DCCH DTCH

PCH BCH DL-SCH

DCI

PBCH PDSCH PDCCH

PSS/SSS CSI-RS DM-RS PT-RS

CCCH DCCH DTCH

UL-SCH RACH

UCI

PUSCH PUCCH PRACH

DM-RS PT-RS SRS

EP 4 322 416 A1

FIG. 6

FIG. 7

FIG. 8

FIG. 9

**FIG. 10A**

**FIG. 10B**

**FIG. 11A**

**FIG. 11B**

FIG. 12A

FIG. 12B

| Wireless Device | Base Station | Wireless Device | Base Station | Wireless Device | Base Station |
|---|---|---|---|---|---|

Configuration 1310

Msg 1 1311

Msg 2 1312

Msg 3 1313

Msg 4 1314

**FIG. 13A**

Configuration 1320

Msg 1 1321

Msg 2 1322

**FIG. 13B**

Configuration 1330

Msg A 1331

Preamble 1341

1342 Transport block

Msg B 1332

**FIG. 13C**

EP 4 322 416 A1

CORESET
1404

CORESET
1403

CORESET
1402

CORESET
1401

Bandwidth

One slot

**FIG. 14A**

EP 4 322 416 A1

CORESET → CCE-to-REG mapping → Search Space → PDCCH candidate
PDCCH candidate
PDCCH candidate

**FIG. 14B**

FIG. 15A

FIG. 15B

**FIG. 16A**

**FIG. 16B**

**FIG. 16C**

**FIG. 16D**

```
ServingCellConfig ::=          SEQUENCE {

...

MIMOParam ::= SEQUENCE {
    additionalPCI-ToAddModList        SEQUENCE (SIZE(1..maxNrofAdditionalPCI)) OF SSB-MTC-
AdditionalPCI
    additionalPCI-ToReleaseList       SEQUENCE (SIZE(1..maxNrofAdditionalPCI)) OF AdditionalPCIIndex
    unifiedTCI-StateType              ENUMERATED {separate, joint}

    ...
    sfnSchemePDCCH                    ENUMERATED {sfnSchemeA,sfnSchemeB}
    sfnSchemePDSCH                    ENUMERATED {sfnSchemeA,sfnSchemeB}
}


SSB-MTC-AdditionalPCI ::=      SEQUENCE {
    additionalPCIIndex        AdditionalPCIIndex,
    additionalPCI             PhysCellId,
    ...
}
```

FIG. 17

FIG. 18

FIG. 19

**2010** Base Station

DCI **2015**

**2025** **2030**

← - - -offset < threshold - - → | Downlink signal | **2020**

**2005** Wireless Device

time

**2035** Case 1: TCI state 9 and TCI state 61 are both associated with a PCI of the serving cell.
- Receive Downlink signal based on a default TCI state among TCI state 9 and TCI state 61

**2040** Case 2: TCI state 9 and TCI state 61 are both associated with a second PCI different from the PCI of the serving cell.
- Receive Downlink signal based on a TCI state (or QCL assumption) of a coreset with the lowest coreset index

**2045** Case 3: TCI state 9 is associated with a PCI of the serving cell, and TCI state 61 is associated with a second PCI different from the PCI of the serving cell.
- Receive Downlink signal based on the TCI state 9 associated with the PCI of the serving cell.

**2050** Case 4: TCI state 9 is associated with a second PCI different from the PCI of the serving cell, and TCI state 61 is associated with a PCI of the serving cell.
- Receive Downlink signal based on the TCI state 61 associated with the PCI of the serving cell.

FIG. 20

EP 4 322 416 A1

FIG. 21

Base Station _2010_

DCI _2015_

_2025_ _2030_

◄ - - - offset < threshold - - ► Downlink signal _2020_

time

Wireless Device _2005_

Two default beams

**Case 1:** TCI state 9 and TCI state 61 are both associated with a PCI of the serving cell.
• Receive Downlink signal based on both TCI state 9 and TCI state 61.

_2035_

**Case 2:** TCI state 9 and TCI state 61 are both associated with a second PCI different from the PCI of the serving cell.
• Receive Downlink signal based on a TCI state (or QCL assumption) of a coreset with the lowest coreset index and a default TCI state among TCI state 9 and TCI state 61

_2040_

**Case 3:** TCI state 9 is associated with a PCI of the serving cell, and TCI state 61 is associated with a second PCI different from the PCI of the serving cell.
• Receive Downlink signal based on both TCI state 9 and TCI state 61.

_2045_

**Case 4:** TCI state 9 is associated with a second PCI different from the PCI of the serving cell, and TCI state 61 is associated with a PCI of the serving cell.
• Receive Downlink signal based on both TCI state 9 and TCI state 61.

_2050_

EP 4 322 416 A1

Receive downlink control messages/commands indicating activation of a first TCI state and a second TCI state

2205

Receive a DCI scheduling reception of a downlink signal, wherein a time offset between the DCI and the downlink signal is less than a threshold

2210

NO — The first TCI state is associated with the PCI of the serving cell? — YES

2215

2220

NO — The second TCI state associated with the PCI of the serving cell? — YES

Receive the downlink signal based on the first TCI state

2230

Receive the downlink signal based on one of the first TCI state and the second TCI state

2225

2235

NO — The second TCI state is associated with the PCI of the serving cell? — YES

Receive the downlink signal based on a TCI state of a coreset with the lowest coreset index

2245

2240

Receive the downlink signal based on the second TCI state

FIG. 22

119

Receive downlink control messages/commands indicating activation of a first TCI state and a second TCI state

2205

Receive a DCI scheduling reception of a downlink signal, wherein a time offset between the DCI and the downlink signal is less than a threshold

2210

NO / At least one of the first TCI state and the second TCI state is associated with the PCI of the serving cell? \ YES

2315

Receive the downlink signal based on a TCI state of a coreset with the lowest coreset index and a default TCI state among the first TCI state and the second TCI state

2325

Receive the downlink signal based on both the first TCI state and the second TCI state

2320

FIG. 23

**2430**

**Downlink control command/message 1** — **2420**

**Downlink control command/message 2** — **2435**

**2415**

time

**2405**

**Coreset 1**

Lowest coreset index

**2425**

Activate two TCI states for Coreset 1
- The first TCI state of the two TCI states may be associated with the PCI of the cell

**Coreset 2**

**2410**

Activate two TCI states for Coreset 2
- The first TCI state of the two TCI states may or may not be associated with the PCI of the cell

FIG. 24

FIG. 25

EP 4 322 416 A1

Europäisches
Patentamt

European
Patent Office

Office européen
des brevets

# EUROPEAN SEARCH REPORT

Application Number

**EP 23 19 0939**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/105749 A1 (ZHOU YAN [US] ET AL) 8 April 2021 (2021-04-08) | 1-3,6-15 | INV. H04B7/0408 H04B7/06 H04B7/08 |
| Y | * paragraphs [0006], [0007], [0042], [0043], [0057], [0058], [0066] – [0069]; figures 4B, 5 * | 4,5 | |
| Y | QUALCOMM CDMA TECHNOLOGIES: "Discussion on incoming RAN1 LS for L1/L2 inter-cell mobility and draft LS out", 3GPP DRAFT; R4-2107364, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Electronic Meeting; 20210412 – 20210420 2 April 2021 (2021-04-02), XP051992577, Retrieved from the Internet: URL:https://ftp.3gpp.org/tsg_ran/WG4_Radio /TSGR4_98bis_e/Docs/R4-2107364.zip R4-2107364.docx [retrieved on 2021-04-02] * page 1 * | 4,5 | |

TECHNICAL FIELDS
SEARCHED      (IPC)

H04B

The present search report has been drawn up for all claims

| Place of search | Date of completion of the search | Examiner |
|---|---|---|
| Munich | 22 December 2023 | Tanco Sánchez, Mario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 0939

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2023

| Patent document cited in search report | Publication date | Patent family member(s) | Publication date |
|---|---|---|---|
| US 2021105749 A1 | 08-04-2021 | CN 114467265 A | 10-05-2022 |
| | | EP 4038765 A1 | 10-08-2022 |
| | | US 2021105749 A1 | 08-04-2021 |
| | | WO 2021067097 A1 | 08-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63396692